# EUROPEAN PATENT SPECIFICATION

(11) **EP 4 079 788 B1**
(45) Date of publication and mention of the grant of the patent: **01.07.2026**
(21) Application number: 20904141.7
(22) Date of filing: 10.12.2020
(51) Int. Cl.: C08G 65/336, C08K 5/5415, C08L 71/02, C08K 3/013, C08G 65/00

(54) **CURABLE COMPOSITION**
HÄRTBARE ZUSAMMENSETZUNG
COMPOSITION DURCISSABLE

(30) Priority: 19.12.2019 JP 2019229776
(43) Date of publication of application: 26.10.2022
(73) Proprietor: Daikin Industries, Ltd., Osaka-shi, Osaka 530-0001 (JP)
(72) Inventor: IIDA, Isao, Tokyo 107-6119 (JP); ONO, Kazuhisa, Tokyo 107-6119 (JP); FUJIMOTO, Tetsuo, Tokyo 107-6119 (JP); MARUHASHI, Kazuki, Osaka-shi, Osaka 5300001 (JP); MITSUHASHI, Hisashi, Osaka-shi, Osaka 5300001 (JP)
(74) Representative: Müller-Boré & Partner Patentanwälte PartG mbB
(86) International application number: PCT/JP2020/046154
(87) International publication number: WO 2021/125060

(56) References cited:
- WO-A1-03/040247
- WO-A1-2019/088133
- JP-A- 2006 182 937
- JP-A- 2008 007 680
- JP-A- 2019 151 768
- JP-A- H0 753 919
- JP-A- H09 137 027
- US-A1- 2001 008 914

## Description

### TECHNICAL FIELD

The present invention relates to a curable composition.

### BACKGROUND ART

A composition containing a certain kind of a fluoro(poly)ether-based compound has excellent water repellent property, oil repellent property, etc. In Patent Literature 1, there is disclosed a curable composition containing a perfluoro(poly)ether group-containing silane compound having two or more Si atoms bonded to at least one group selected from the group consisting of a hydroxyl group and a hydrolyzable group and having a specific perfluoro(poly)ether group, an organic silicon compound having at least two alkoxy groups, etc., bonded to an Si atom, and a catalyst.

In Patent Literature 2, there is disclosed a room temperature-curable composition containing a fluorine-containing organic compound with a specific structure having a divalent perfluoroalkylene group or a divalent perfluoroalkylether group, which can form a cured product excellent in solvent resistance, chemical resistance, heat resistance and cold resistance. It has been disclosed that a filler such as carbon powder, titanium dioxide, aluminum oxide, etc., is formulated to the composition for reinforcement, increasing amount, etc. JPH09137027A discloses a composition comprising a linear fluoropolymer compound having a perfluoropolyether structure in a main chain and having hydrolyzable silyl groups at both ends of the molecular chain, dibutyltin dilaurate as catalyst and, fumed silica and vinyltrimethoxysilane.

### CITATION LIST

### Patent Literature

Patent Literature 1: WO 2019/088129 A1
Patent Literature 2: JP Hei.9-263640 A

### SUMMARY OF THE INVENTION

### Technical Problem

In the room temperature curable compositions as in Patent Literatures 1 and 2, it is required that the composition does not flow out after being coated, and keeps a certain shape until the composition is cured. However, an object of the filler described in Patent Literature 2 was to reinforce and increase the amount, and a curable composition in which such a filler was formulated involved the problems that the composition flowed out after being coated and a stable cured product could not be formed. An object of the present invention is to provide a curable composition which does not flow out after being coated and whose fluidity is suppressed.

### Solution to Problem

The present inventors have earnestly studied to solve the above-mentioned problems with regard to a curable composition containing a perfluoro(poly)ether group-containing silane compound, and as a result, they have found that by formulating an inorganic filler having a particle diameter within a specific range to the curable composition, the composition which does not flow out after being coated and whose fluidity is suppressed can be obtained, whereby they have accomplished the present invention.

The present invention is disclosed in the appended claims.

### Advantageous Effects of Invention

According to the present invention, it is possible to provide a curable composition that does not flow out after being coated and whose fluidity is suppressed.

### DESCRIPTION OF EMBODIMENTS

Hereinafter, the curable composition of the present invention will be explained.

Incidentally, when used in the present specification, the organic group means a group containing a monovalent or more of carbon. As the monovalent organic group, there may be mentioned, for example, a hydrocarbon group. The "2 to 10 valent organic group" means a group of 2 to 10 valence containing a carbon(s). Such a 2 to 10 valent organic group is not particularly limited, and there may be mentioned a 2 to 10 valent group in which 1 to 9 hydrogen atoms is/are further eliminated from the hydrocarbon group. The divalent organic group is not particularly limited, and there may be mentioned a divalent group in which one hydrogen atom is further eliminated from the hydrocarbon group.

When used in the present specification, the "hydrocarbon group" means a group which contains carbon and hydrogen, and in which one hydrogen atom is eliminated from the molecule. Such a hydrocarbon group is not particularly limited, and there may be mentioned a hydrocarbon group having 1 to 20 carbon atoms which may be substituted with one or more substituents, for example, an aliphatic hydrocarbon group, an aromatic hydrocarbon group, etc. The above-mentioned "aliphatic hydrocarbon group" may be any of linear, branched or cyclic, and may be any of saturated or unsaturated. Also, the hydrocarbon group may contain one or more cyclic structure. Incidentally, such a hydrocarbon group may have one or more N, O, S, Si, amide, sulfonyl, siloxane, carbonyl, carbonyloxy, etc., at the terminal(s) or in the molecular chain.

When used in the present specification, the substituent of the "hydrocarbon group" is not particularly limited, and there may be mentioned, for example, one or more groups selected from a halogen atom; a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5 to 10-membered heterocyclyl group, a 5 to 10-membered unsaturated heterocyclyl group, a C₆₋₁₀ aryl group and a 5 to 10-membered heteroaryl group, each of which may be substituted with one or more halogen atoms.

In the present specification, the alkyl group and the phenyl group may be unsubstituted or may be substituted, otherwise specifically mentioned. The substituent of such a group is not particularly limited, and there may be mentioned, for example, one or more groups selected from a halogen atom, a C₁₋₆ alkyl group, a C₂₋₆ alkenyl group and a C₂₋₆ alkynyl group.

### [Curable composition]

The curable composition (hereinafter, also referred to as "the composition".) contains (A) a perfluoro(poly)ether group-containing silane compound having two or more Si atoms bonded to at least one group selected from the group consisting of a hydroxyl group and a hydrolyzable group, (B) a compound having at least two OR² groups bonded to an Si atom (wherein, R²s are each independently a hydrogen atom or a monovalent organic group at each appearance) (provided that (A) is excluded.) or a partially hydrolyzed condensate thereof, (C) a condensation catalyst, and (D) an inorganic filler having a primary particle diameter of 0.01 to 0.1 µm, wherein Component (D) is carbon black or calcium carbonate.

<(A) Perfluoro(poly)ether group-containing silane compound having two or more Si atoms bonded to at least one group selected from the group consisting of a hydroxyl group and a hydrolyzable group>

The (A) perfluoro(poly)ether group-containing silane compound having two or more Si atoms bonded to at least one group selected from the group consisting of a hydroxyl group and a hydrolyzable group (hereinafter, it is also referred to as "(A) PFPE-containing silane compound".) is a component which becomes a base polymer in the composition.

The term "hydrolyzable group" means, when used in the present specification, a group capable of undergoing a hydrolysis reaction, that is, a group capable of being eliminated from the main skeleton of a compound by a hydrolysis reaction. As examples of the hydrolyzable group, there may be mentioned -OR, -OCOR, -O-N=CR₂, -NR₂, -NHR, a halogen atom (in these formulae, Rs each independently represent a substituted or unsubstituted alkyl group having 1 to 4 carbon atoms), etc., and preferably -OR (that is, an alkoxy group). Examples of R contain an unsubstituted alkyl group such as a methyl group, an ethyl group, a propyl group, an isopropyl group, an n-butyl group, an isobutyl group, a t-butyl group, etc.; and a substituted alkyl group such as a chloromethyl group, etc. Among these, an alkyl group, in particular, an unsubstituted alkyl group is preferable, and a methyl group or an ethyl group is more preferable. A hydroxyl group is not particularly limited, and may be a group generated by hydrolysis of a hydrolyzable group. As the halogen atom, there may be mentioned a fluorine atom, a chlorine atom, a bromine atom and an iodine atom, and among these, a chlorine atom is preferable.

The (A) PFPE-containing silane compound has two or more Si atoms bonded to at least one group selected from the group consisting of a hydroxyl group and a hydrolyzable group in the molecule.

The Si atom bonded to at least one group selected from the group consisting of a hydroxyl group and a hydrolyzable group is preferably present at both ends of the main chain of the molecule of the (A) PFPE-containing silane compound. In the present specification, the main chain of the molecule of the (A) PFPE-containing silane compound represents a relatively longest binding chain in the molecule of the (A) PFPE-containing silane compound.

The (A) PFPE-containing silane compound is preferably a compound represented by the formula (1) 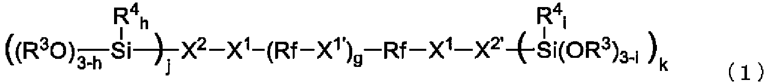 (wherein,
Rfs are each independently a perfluoro(poly)ether group represented by the formula:

   -(C_{f}F_{2f})-(OCF₂)ₐ₁-(OC₂F₄)ₐ₂-(OC₃X¹⁰₆)ₐ₃-(OC₄F₈)ₐ₄-(OC₅F₁₀)ₐ₅-(OC₆F₁₂)ₐ₆-(OC₇F₁₄)ₐ₇- (OC₈F₁₆)ₐ₈-

   (wherein, f is an integer of 1 to 10, a1, a2, a3, a4, a5, a6, a7 and a8 are each independently an integer of 0 or more and 200 or less, a sum of a1, a2, a3, a4, a5, a6, a7 and a8 is an integer of 5 or more and 200 or less, the unit represented by (C_{f}F_{2f}) is located at the left end of the group, the order of existence of each repeating unit enclosed in parentheses with the subscript a1, a2, a3, a4, a5, a6, a7 or a8 is arbitrary in the formula, and X¹⁰s are each independently a hydrogen atom, a fluorine atom or a chlorine atom at each appearance, provided that when all X¹⁰s are hydrogen atoms or chlorine atoms, at least one of a1, a2, a4, a5, a6, a7 and a8 is an integer of 1 or more.) at each appearance,
g is an integer of 0 or more,
j and k are each an integer of 1 to 9,
h and i are each independently an integer of 0 to 3 at each appearance, provided that at least two among h and i existing with a number of j+k are made to be 0 or 1,
X¹s each independently represent a single bond or a divalent organic group at each appearance,
X^{1'}s each independently represent a divalent organic group at each appearance,
X² represents a j+1 valent organic group,
X^{2'} represents a k+1 valent organic group,
R³s each independently represent a hydrogen atom or a monovalent organic group at each appearance, and
R⁴s each independently represent a hydrogen atom or a monovalent organic group at each appearance, provided that R⁴ is not to be OR³.).

The (A) PFPE-containing silane compound may be used in one kind alone or may be used in two or more kinds simultaneously. For example, as the (A) PFPE-containing silane compound, a compound in which g=0, and a compound in which g is 1 or more, for example, a compound wherein g=1 in the formula (1) may be used in combination.

In the perfluoro(poly)ether group, a sum of a1, a2, a3, a4, a5, a6, a7 and a8 is preferably 5 or more, and more preferably 10 or more, for example, 10 or more and 200 or less. Also, X¹⁰s are each independently a hydrogen atom, a fluorine atom or a chlorine atom at each appearance, preferably a hydrogen atom or a fluorine atom, and more preferably a fluorine atom. In the following, the perfluoro(poly)ether group having the above-mentioned structure is sometimes referred to as "PFPE¹". The cured product of the curable composition can have a low glass transition temperature (Tg) by having PFPE¹ in the composition. The -PFPE¹- portion in the present specification is a polymer structure comprising one kind or a plural kind of fluoroalkyl ether structures in combination. a1 to a8 or a sum thereof refers to the number of recurring units of the fluoroalkyl ether structure in the polymer, and these values are an average value in each -PFPE¹- portion in the polymer, and it can be understood for those skilled in the art that it is an approximate value. For example, when PFPE¹ is represented by -(C_{f}F_{2f})-(OCF₂)ₐ₁-(OC₂F₄)ₐ₂-, the value of a1 represents an average of the number of the (OCF₂)ₐ₁ unit per each -PFPE¹- portion, and the value of a2 represents an average of the number of the (OC₂F₄)ₐ₂ unit per each -PFPE¹- portion, respectively, and when it is described as a1+a2=, it represents that the average of the sum of each recurring unit is the value (approximate value).

In one embodiment, a1 and a2 are each independently an integer of 0 or more and 200 or less, preferably 1 or more and 200 or less, and more preferably an integer of 1 or more and 50 or less.

In one embodiment, a sum of a1 and a2 is an integer of preferably 20 or more, more preferably 30 or more, further preferably 40 or more, and particularly preferably 50 or more.

In one embodiment, a3, a4, a5, a6, a7 and a8 are each independently integers of preferably 0 or more and 30 or less, more preferably 20 or less, further preferably 10 or less, and particularly preferably 5 or less, and may be 0.

In one embodiment, a sum of a3, a4, a5, a6, a7 and a8 is preferably 30 or less, more preferably integers of 20 or less, further preferably 10 or less, and particularly preferably integers of 5 or less.

In one embodiment, it is preferable that a1 is an integer of 0 or more and 50 or less, a2 is an integer of 0 or more and 50 or less, a3 is an integer of 0 or more and 30 or less, a4 to a8 are 0, and a sum of a1, a2 and a3 is 5 or more and 50 or less.

These recurring units may be linear or branched. Also, even if the recurring units have the same number of carbon atoms, two or more kinds of different linear or branched structures can be simultaneously contained in PFPE¹. These recurring units are preferably linear. For example, -(OC₈F₁₆)- may be -(OCF₂CF₂CF₂CF₂CF₂CF₂CF₂CF₂)-, -(OCF(CF₃)CF₂CF₂CF₂CF₂CF₂CF₂)-, -(OCF₂CF(CF₃)CF₂CF₂CF₂CF₂CF₂)-, -(OCF₂CF₂CF(CF₃)CF₂CF₂CF₂CF₂)-, -(OCF₂CF₂CF₂CF(CF₃)CF₂CF₂CF₂)-, -(OCF₂CF₂CF₂CF₂CF(CF₃)CF₂CF₂)-, -(OCF₂CF₂CF₂CF₂CF₂CF(CF₃)CF₂)-, -(OCF₂CF₂CF₂CF₂CF₂CF₂CF(CF₃))-, etc., and preferably -(OCF₂CF₂CF₂CF₂CF₂CF₂CF₂CF₂)-. -(OC₇F₁₄)- may be -(OCF₂CF₂CF₂CF₂CF₂CF₂CF₂)-, -(OCF(CF₃)CF₂CF₂CF₂CF₂CF₂)-, -(OCF₂CF(CF₃)CF₂CF₂CF₂CF₂)-, -(OCF₂CF₂CF(CF₃)CF₂CF₂CF₂)-, -(OCF₂CF₂CF₂CF(CF₃)CF₂CF₂)-, -(OCF₂CF₂CF₂CF₂CF(CF₃)CF₂)-, -(OCF₂CF₂CF₂CF₂CF₂CF(CF₃))-, etc., and preferably -(OCF₂CF₂CF₂CF₂CF₂CF₂CF₂)-. -(OC₆F₁₂)- may be -(OCF₂CF₂CF₂CF₂CF₂CF₂)-, -(OCF(CF₃)CF₂CF₂CF₂CF₂)-, -(OCF₂CF(CF₃)CF₂CF₂CF₂)-, -(OCF₂CF₂CF(CF₃)CF₂CF₂)-, -(OCF₂CF₂CF₂CF(CF₃)CF₂)-, -(OCF₂CF₂CF₂CF₂CF(CF₃))-, etc., and preferably -(OCF₂CF₂CF₂CF₂CF₂CF₂)-. -(OC₅F₁₀)- may be -(OCF₂CF₂CF₂CF₂CF₂)-, -(OCF(CF₃)CF₂CF₂CF₂)-, -(OCF₂CF(CF₃)CF₂CF₂)-, -(OCF₂CF₂CF(CF₃)CF₂)-, -(OCF₂CF₂CF₂CF(CF₃))-, etc., and preferably -(OCF₂CF₂CF₂CF₂CF₂)-. -(OC₄F₈)-may be any of -(OCF₂CF₂CF₂CF₂)-, -(OCF(CF₃)CF₂CF₂)-, -(OCF₂CF(CF₃)CF₂)-, - (OCF₂CF₂CF(CF₃))-, -(OC(CF₃)₂CF₂)-, -(OCF₂C(CF₃)₂)-, -(OCF(CF₃)CF(CF₃))-, - (OCF(C₂F₅)CF₂)- and -(OCF₂CF(C₂F₅))-, and preferably -(OCF₂CF₂CF₂CF₂)-. -(OC₃F₆)- (that is, X¹⁰ is a fluorine atom in the above-mentioned formula) may be any of -(OCF₂CF₂CF₂)-, -(OCF(CF₃)CF₂)- and -(OCF₂CF(CF₃))-, and preferably -(OCF₂CF₂CF₂)-. Also, -(OC₂F₄)- may be any of -(OCF₂CF₂)- and -(OCF(CF₃))-, and preferably -(OCF₂CF₂)-.

The unit represented by -(C_{f}F_{2f})- is a structure located at the end of the left side of PFPE¹. "f" is an integer of 1 to 10, preferably an integer of 1 to 6, more preferably an integer of 1 to 4, and further preferably an integer of 1 to 3. It is more preferable that the value of f is the same as the number of carbon atoms contained in any one of the recurring units possessed by PFPE¹. The unit represented by -(C_{f}F_{2f})- may be linear or may be branched. Accordingly, the unit represented by -(C_{f}F_{2f})- can have a structure, for example, in addition to -(CF₂)-, such as -(CF₂CF₂)-, -(CF(CF₃))-, -(CF₂CF₂CF₂)-, -(CF(CF₃)CF₂)-, -(CF₂CF(CF₃))-, -(CF₂CF₂CF₂CF₂)-, -(CF(CF₃)CF₂CF₂)-, -(CF₂CF(CF₃)CF₂)-, -(CF₂CF₂CF(CF₃))-, -(CF(CF₂CF₃)CF₂)-, -(CF₂CF(CF₂CF₃))-, -(CF₂C(CF₃)₂CF₂)-, etc.

The (A) PFPE-containing silane compound may have a recurring units comprising an oxygen atom and a perfluoroalkylene group having 9 or more carbon atoms in addition to these recurring units, as long as it is a material capable of preparing as a perfluoropolyether group.

In one embodiment, PFPE¹ has a linear recurring units. In this embodiment, motility of the molecule of the (A) PFPE-containing silane compound at a low temperature is less likely to lower. By having a linear recurring units, physical property values (for example, elastic modulus at a low temperature) of the (A) PFPE-containing silane compound can be less likely to lower as compared with the values at room temperature. Incidentally, in the present specification, "elastic modulus" indicates dynamic elastic modulus, more specifically storage elastic modulus.

PFPE¹ is preferably -(C_{f}F_{2f})-(OCF₂)ₐ₁-(OC₂F₄)ₐ₂-(OC₃F₆)ₐ₃-(OC₄F₈)ₐ₄-(wherein, f is an integer of 1 to 4, preferably an integer of 1 to 3, a1 and a2 are each independently an integer of 1 or more and 200 or less, preferably 5 or more and 200 or less, more preferably 10 or more and 200 or less, a3 and a4 are each independently an integer of 0 or more and 30 or less, and the order of existence of each repeating unit with the subscripts a1, a2, a3 or a4 and enclosed in parentheses is arbitrary in the formula). PFPE¹ is preferably -(C_{f}F_{2f})-(OCF₂)ₐ₁-(OCF₂CF₂)ₐ₂-(OCF₂CF₂CF₂)ₐ₃-(OCF₂CF₂CF₂CF₂)ₐ₄-. PFPE¹ is more preferably -(C_{f}F_{2f})-(OCF₂)ₐ₁-(OC₂F₄)ₐ₂-(wherein, f is 1 or 2, a1 and a2 are each independently an integer of 1 or more and 200 or less, preferably 5 or more and 200 or less, more preferably 10 or more and 200 or less, and the order of existence of each repeating unit with the subscripts a1 or a2 and enclosed in parentheses is arbitrary in the formula).

In the above-mentioned PFPE¹, the quantitative relationship between the respective values of a1, a2, a3, a4, a5, a6, a7 and a8 is not particularly limited as long as they satisfy the respective ranges. For example, when the structure represented by - (OCF₂)ₐ₁- is used with a much amount, rubber characteristics can be easily maintained even at a low temperature and it can be made a composition suitable for low temperature use. Also, when the structure represented by -(OC₂F₄)ₐ₂- is used with a much amount, it is more advantageous due to formation of a cured product which is difficultly decomposed at a high temperature. Depending on the physical properties required for the final use, the structure and the composition of PFPE¹ can be appropriately adjusted.

In another preferred embodiment, PFPE¹ is a divalent perfluoro(poly)ether group represented by the formula:

-(C_{f}F_{2f})-(OCF₂)ₐ₁-(OCF₂CF₂)ₐ₂₁-(OCF(CF₃))ₐ₂₁-(OCF₂CF₂CF₂)ₐ₃₁-(OCF₂CF(CF₃))_{a3'}- (OCF(CF₃)CF₂)_{a3"}-(OCF₂CF₂CF₂CF₂)ₐ₄-

(wherein, f is an integer of 1 or more and 4 or less, and more preferably 1 or more and 3 or less, a1, a2l, a2', a31, a3', a3" and a4 are each independently an integer of 0 or more and 200 or less, a sum of a21 and a2' equals to a2, a sum of a3l, a3' and a3" equals to a3, a sum of a1, a2l, a2', a31, a3', a3" and a4 is 5 or more, and the order of existence of each repeating unit is arbitrary in the formula). In a more preferable example as an embodiment, PFPE¹ is a divalent perfluoro(poly)ether group wherein, in the above-mentioned formula, a1 is an integer of 0 or more and 50 or less, a2 is an integer of 0 or more and 50 or less, a3 is an integer of 0 or more and 30 or less, a4 is an integer of 0 or more and 30 or less, and a sum of a1, a2, a3 and a4 is 5 or more and 200 or less. In a further preferable example as an embodiment, PFPE¹ is a perfluoro(poly)ether group having recurring units represented by -(OCF₂CF(CF₃))_{a3'}- and/or -(OCF(CF₃)CF₂)_{a3"}-. That is, in another more preferable embodiment, PFPE¹ has a branched perfluoroalkyl group, in particular, has a perfluoropropyl group. As specific examples thereof, there may be mentioned the following structures.

-(C_{f}F_{2f})-(OCF₂CF(CF₃))ₐ₃'-(OCF₂CF₂)-(OCF(CF₃)CF₂)_{a3"}-(OCF(CF₃))-

-(C_{f}F_{2f})-(OCF₂CF(CF₃))_{a3'}-(OCF₂CF₂CF₂CF₂)-(OCF(CF₃)CF₂)_{a3"}-(OCF(CF₃))-

In PFPE¹, a ratio of the sum of a1 and a2 to the sum of a1, a2, a3, a4, a5, a6, a7 and a8 is preferably 0.80 or more, more preferably 0.90 or more, further preferably 0.98 or more, and particularly preferably 0.99 or more.

In PFPE¹, the a2/a1 ratio is preferably 0.1 or more and 10.0 or less, more preferably 0.2 or more and 5.0 or less, and further preferably 0.40 or more and 2.5 or less.

In the curable composition, the cured product thereof is difficultly decomposed at a high temperature. In the present specification, the cured product is "difficultly decomposed at a high temperature" refers to that 1% decomposition temperature of the cured product is in a relatively high temperature. That is, the curable composition can contribute to formation of a cured product that can be used in a wide temperature range. In the present specification, "1% decomposition temperature" means a temperature at which 1% by mass of the cured product decomposes based on the whole cured product. The 1% decomposition temperature means a value measured by thermogravimetric and differential thermal analysis (TG/DTA), and specifically, it is measured under an Air atmosphere with a temperature raising rate of 10°C/min and in the range of 25°C to 600°C. As the above-mentioned TG/DTA, for example, there may be mentioned DTG-60 manufactured by Shimadzu Corporation.

In the cured product of the curable composition, by having the above-mentioned PFPE¹, it can have a suitable elastic modulus even when it is used at a low temperature (for example, a ratio of elastic modulus at -50°C to elastic modulus at 0°C can be small). Accordingly, the curable composition can contribute to formation of a cured product that can maintain rubber characteristics even at a low temperature, and the cured product can be applied for uses at a low temperature.

A number average molecular weight of the -PFPE¹- portion is preferably in the range of 2,000 to 200,000, and more preferably in the range of 3,000 to 100,000. The above-mentioned number average molecular weight is defined to be a value measured by ¹⁹F-NMR.

In one embodiment, the number average molecular weight of the -PFPE¹-portion can be in the range of 2,000 to 10,000, and is preferably in the range of 2,000 to 5,000. By having the number average molecular weight of the -PFPE¹- portion as mentioned above, a viscosity of the curable composition can be low and handling property thereof can be good. The curable composition having the number average molecular weight of the -PFPE¹- portion as mentioned above is also advantageous, for example, in the point of suppressing the viscosity when it is made a solution state using together with a solvent.

In one embodiment, the number average molecular weight of the -PFPE¹-portion can be in the range of 10,000 to 100,000, and is preferably in the range of 10,000 to 50,000. By having the number average molecular weight of the -PFPE¹-portion as mentioned above, physical properties such as elongation characteristics of the curable composition after curing can be good.

In the formula (1), an Si atom in the group represented by 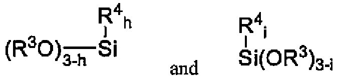 (wherein, h and i are each an integer of 0 to 2.) represents an Si atom bonded to at least one group selected from the group consisting of a hydroxyl group and a hydrolyzable group. In the formula (1), h and i are each independently an integer of 0 to 3 at each appearance. Provided that at least two of h and i existing with a number of j+k are integers of 0 to 2, and more preferably 0 or 1.

In the above-mentioned formula, the OR³ group is a hydroxyl group or a hydrolyzable group. R³ is a hydrogen atom or a monovalent organic group at each appearance independently. R³ is more preferably -R, -COR, or -N=CR₂ (wherein, Rs each independently represent a substituted or unsubstituted alkyl group having 1 to 4 carbon atoms), further preferably an alkyl group having 1 to 4 carbon atoms or an alkoxyalkyl group, and particularly preferably a methyl group or an ethyl group. Different groups may be mixedly present in R³ and R⁴ in one molecule or one molecule terminal structure, respectively. For example, R³s existing with a plural number can be a combination of a methyl group and an ethyl group. h and i are each independently and preferably 0 or 1, and more preferably 0.

In the above-mentioned formula, R⁴s each independently represent a hydrogen atom or a monovalent organic group at each appearance, provided that R⁴ is not to be OR³. R⁴ is preferably a hydrogen atom or an alkyl group having 1 to 22 carbon atoms, and more preferably an alkyl group having 1 to 4 carbon atoms.

In the formula (1), j and k are each preferably an integer of 1 to 9, more preferably an integer of 1 to 6, further preferably an integer of 1 to 3, and particularly preferably 1.

In the formula (1), g is preferably an integer of 0 or more, more preferably an integer of 0 or more and 5 or less, further preferably 0 or 1, and particularly preferably 0.

X¹s each independently represent a single bond or a divalent organic group at each appearance. X² represents a j+1 valent organic group. X^{2'} represents a k+1 valent organic group.

In the compound represented by the formula (1), PFPE¹ is bound to a group represented by -X¹-X²- and -X¹-X^{2'}-, and bound to a group represented by 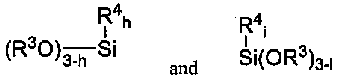 at the respective terminals of the molecule through the group represented by the -X¹-X² and -X¹-X^{2'}-.

The groups represented by -X¹-X²- and -X¹-X^{2'}- are groups that act as a linker that link the silicon atom at the terminal of the molecule and PFPE¹. X¹s each independently represent a single bond or a divalent organic group at each appearance. X¹ may be a single bond, or any of the organic groups as long as the (A) PFPE-containing silane compound can be stably present. As specific examples of X¹, there may be mentioned those described as the portion corresponding to X¹ in the formula described later.

In the exemplification of the divalent groups in the present specification, when two or more groups are linked, such an exemplification is to include the group described from the right side to the left side. For example, -CONR⁴⁰- shown below represents - CONR⁴⁰- and -NR⁴⁰CO-, and -CONR⁴⁰-C₆H₄- represents -CONR⁴⁰-C₆H₄- and -C₆H₄-NR⁴⁰CO-.

X¹ is preferably a divalent organic group. As X¹, it is preferably a divalent organic group having at least one selected from the group consisting of a divalent alkylene group, -C₆H₄- (that is, -phenylene-. Hereinafter, it represents a phenylene group.), -O- (an ether group), -CO- (a carbonyl group), -NR⁴⁰- and -SO₂-. The above-mentioned R⁴⁰s each independently represent a hydrogen atom, a phenyl group or a C₁₋₆ alkyl group (preferably a methyl group), and preferably a hydrogen atom or a methyl group. X¹ can be a combination of these structures and, for example, it can take a structure such as alkylene-CO-, -CO-NR⁴⁰-, alkylene-O-alkylene or -O-CO-NR⁴⁰-. The above-mentioned -C₆H₄-, -CO-, -NR⁴⁰- or -SO₂- is preferably contained in the main chain of the molecule of the (A) PFPE-containing silane compound. As more preferable X¹, there may be mentioned a urethane bond or an amide bond. Two X¹s existing in the (A) PFPE-containing silane compound may be the same with or may be different from each other, and it is preferably to be the same since preparation of the compound becomes easy. When X¹ is a divalent organic group, it may be bonded to PFPE¹ with either of the bonding arms as long as it can be prepared as a stable compound. For example, in the case of -CO-C₆H₄-, the C₆H₄- portion may be bonded to PFPE¹ or the -CO portion may be bonded to PFPE¹.

X² and X^{2'} are portions linked to the silicon atom at the terminal, and are groups that act as a linker together with X¹. X² and X^{2'} represent j+1 valent and k+1 valent organic groups, respectively. Here, the values of j and k are related to the number of groups containing a silicon atom existing at the terminal of the (A) PFPE-containing silane compound, and the value is an integer of 1 or more. X² and X^{2'} may be any group as long as it is a 2 to 10 valent organic group wherein the (A) PFPE-containing silane compound can exist stably. The definition of the "organic group" will be mentioned later. As specific examples of X² and X^{2'}, there may be mentioned those described as the portion corresponding to X² and X^{2'} in the formula described later. X² and X^{2'} have bonding arms with the number of j+1 and k+1, respectively, and they may be bonded to X¹ with any bonding arm.

X² and X^{2'} are preferably divalent organic groups. X² and X^{2'} are preferably divalent alkylene groups, more preferably C₁₋₂₀ alkylene groups, further preferably C₁₋₆ alkylene groups, and particularly specifically a methylene group, an ethylene group, a propylene group, a methylethylene group, a butylene group, a hexamethylene group, etc. X² and X^{2'} existing in the (A) PFPE-containing silane compound may be the same or may be different from each other, and are preferably the same since preparation of the compound becomes easy.

X^{1'} is a divalent organic group that links the structures represented by the above-mentioned PFPE¹. The definition of the "divalent organic group" is as defined above. As the preferable X^{1'}, those mentioned previously as examples of X¹ can be applied. X^{1'} is more preferably a group containing a divalent alkylene group, and further preferably a divalent alkylene group having amide bonds at the both terminals. The alkylene portion is preferably a C₁₋₂₀ alkylene group, further preferably a C₁₋₆ alkylene group, particularly specifically a methylene group, an ethylene group, a propylene group, a methylethylene group, a butylene group, a hexamethylene group, etc. X^{1'} is a group linking two PFPE¹s, and similarly to X¹, two bonding arms possessed by X^{1'} may be bonded to either of PFPE¹ s as long as it can be prepared as a stable compound. For example, when X^{1'} is a methylethylene group (-CH(CH₃)CH₂-), the CH₂- portion may be bonded to PFPE¹ on the right side in the formula (1) or may be bonded to PFPE¹ on the left side.

Depending on the preparation method of the (A) PFPE-containing silane compound, a compound having a structure in which a silyl group and optionally a linker portion are not introduced at one or both terminal portions of PFPE¹ may be produced in some cases. Hereinafter, a compound in which a silyl group is not contained at least one of the both terminals of the molecular chain constituted by such PFPE¹ may be sometimes indicated as a "non-terminalized PFPE modified product". The purity of the compound represented by the formula (1) is preferably high, that is, a contained ratio of such a non-terminalized PFPE modified product is preferably small, and the (A) PFPE-containing silane compound may contain the non-terminalized PFPE modified product within the range which does not impair the function as a curable composition.

With regard to the purity of the (A) PFPE-containing silane compound, a terminalization rate by the silane, which shows how much the silyl group is introduced into the terminals, can be made a measure thereof. The terminalization rate can be determined by the ratio of the substance in which the silyl group is introduced into a PFPE¹ portion based on the total amount of the substance in which a PFPE¹ portion is not sandwiched by X^{1'} among the PFPE¹ portions. The terminalization rate is preferably 90 mol% or more, more preferably 93 mol% or more, and further preferably 95 mol% or more. By making it within this range, a compound in which both terminals of the molecule are silylated can be contained with a sufficient amount, and the function as a curable composition can be sufficiently exhibited.

The (A) PFPE-containing silane compound is preferably at least one kind of the compound represented by the formula (A-1), (A-2), (A-3) or (A-4).

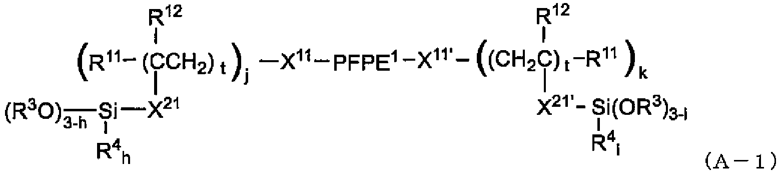

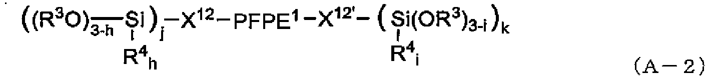

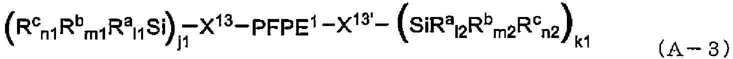

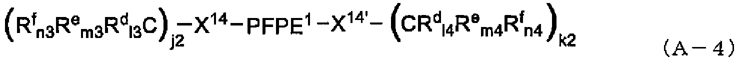

Hereinafter, the (A) PFPE-containing silane compound represented by the formulae (A-1), (A-2), (A-3) and (A-4) will be explained. 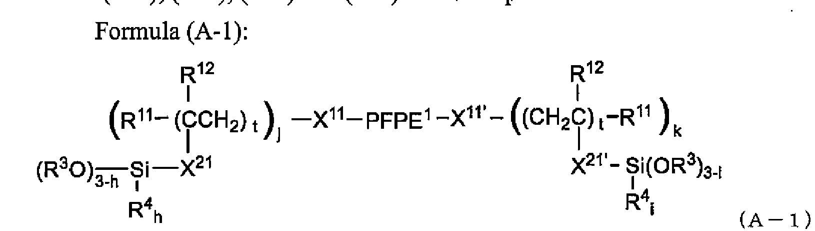 is a compound wherein Rf=PEPE¹ and g=0 in the formula (1).

In the formula (A-1), PFPE¹, R³, R⁴, h, i, j and k have the same meanings as defined above.

In the formula (A-1), the groups represented by 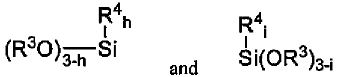 are present with a number of j and k, respectively, and the groups corresponding to X² and X^{2'} in the formula (1) are j+1 valent and k+1 valent organic groups, respectively.

In the above-mentioned formula, R¹¹s each independently represent a hydrogen atom or a halogen atom at each appearance. The halogen atom is preferably an iodine atom, a chlorine atom or a fluorine atom, and more preferably a fluorine atom.

In the above-mentioned formula, R¹² s each independently represent a hydrogen atom or a lower alkyl group at each appearance. The lower alkyl group is preferably an alkyl group having 1 to 20 carbon atoms, more preferably an alkyl group having 1 to 6 carbon atoms, and there may be mentioned, for example, a methyl group, an ethyl group, a propyl group, etc.

In the formula (A-1), the Si atom bonded to at least one group selected from the group consisting of a hydroxyl group and a hydrolyzable group refers to an Si atom in the group of the following: 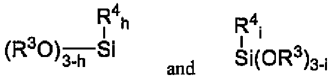 wherein, h and i are integers of 0 to 2. In the formula (A-1), such Si atoms are present at least two.

In the formula (A-1), h and i are each independently an integer of 0 to 3 at each appearance, provided that at least two among h and i existing with a number of j+k are integers of 0 to 2, and preferably 0 or 1. h and i are each independently preferably 0 to 2 at each appearance, more preferably 0 or 1, and particularly preferably 0.

In the formula (A-1), it is preferable that Si atoms bonded to at least one group selected from the group consisting of a hydroxyl group and a hydrolyzable group are present at the both terminals of the main chain of the molecule. That is, in the formula (A-1), at least one of "h"s existing with a number of j and at least one of "i"s existing with a number of k are each preferably an integer of 0 to 2, more preferably 0 or 1, and particularly preferably 0.

In the formula (A-1), X¹¹ and X^{11'} each independently represent a single bond or a 2 to 10 valent organic group. X¹¹ and X^{11'} are understood to be a linker, in the compound represented by the formula (A-1), which links a perfluoro(poly)ether portion (that is, -PFPE¹- portion) which mainly provides water repellent property, surface slipperiness, etc., and a silane portion which provides a bonding ability to a substrate, that is, the group represented by 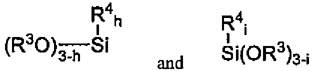 Accordingly, X¹¹ and X^{11'} may be a single bond, or may be any of 2 to 10 valent organic groups, as long as the compound represented by the formula (A-1) can be stably present. Among these, X¹¹ and X^{11'} are each preferably a divalent organic group. Incidentally, in the groups described as X¹¹ and X^{11'}, the left side of the description is bonded to the group represented by PFPE¹ and the right side is bonded to the group enclosed with parentheses to which j or k is applied, respectively.

In another embodiment, X¹¹ and X^{11'} can be X^{e}. X^{e} represents a single bond or a 2 to 10 valent organic group, and preferably a single bond or a 2 to 10 valent organic group having at least one selected from the group consisting of -C₆H₄- (that is, -phenylene-, hereinafter referred to as a phenylene group.), -CO- (a carbonyl group), -NR⁴³- and -SO₂-. The above-mentioned R⁴³s each independently represent a hydrogen atom, a phenyl group or a C₁₋₆ alkyl group (preferably a methyl group), and preferably a hydrogen atom or a methyl group. The above-mentioned -C₆H₄-, -CO-, -NR⁴³- or -SO₂- is preferably contained in the main chain of the molecule of the (A) PFPE-containing silane compound.

X^{e} more preferably represents a single bond or a 2 to 10 valent organic group having at least one selected from the group consisting of -C₆H₄-, -CONR⁴³-, -CONR⁴³-C₆H₄-, -CO-, -CO-C₆H₄-, -SO₂NR⁴³-, -SO₂NR⁴³-C₆H₄-, -SO₂- and -SO₂-C₆H₄-. The above-mentioned -C₆H₄-, -CONR⁴³-, -CONR⁴³-C₆H₄-, -CO-, -CO-C₆H₄-, -SO₂NR⁴³-, -SO₂NR⁴³-C₆H₄-, -SO₂- or -SO₂-C₆H₄- is preferably contained in the main chain of the molecule of the (A) PFPE-containing silane compound.

In the formula (A-1), j and k are each an integer of 1 to 9, and can vary depending on the number of the valences of X¹¹ and X^{11'}. In the formula (A-1), j and k are values subtracting 1 from the number of the valences of X¹¹ and X^{11'}, respectively. When X¹¹ and X^{11'} are single bonds, j and k are each 1.

X¹¹ and X^{11'} are preferably 2 to 7 valent, more preferably 2 to 4 valent, and further preferably divalent organic groups.

In one embodiment, X¹¹ and X^{11'} are 2 to 4 valent organic groups, and j and k are each integers of 1 to 3.

In another embodiment, X¹¹ and X^{11'} are divalent organic groups, and j and k are each 1. In this case, the formula (A-1) is represented by the following formula (A'-1).

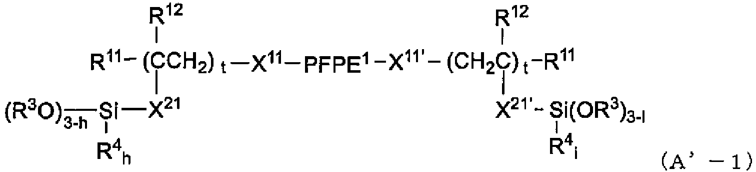

In the formula (A'-1), examples of X¹¹ and X^{11'} are not particularly limited, and there may be mentioned, for example, a divalent group represented by the following formula:

-(R³¹)_{p'}-(X^{a})_{q'}-

[wherein:
R³¹ represents a single bond, -(CH₂)_{s'}-, or an o-, m- or p-phenylene group, and preferably -(CH₂)_{s'}-,
s' is an integer of 1 to 20, preferably an integer of 1 to 6, more preferably an integer of 1 to 3, and further more preferably 1 or 2,
X^{a} represents -(X^{b})_{t'}-,
X^{b}s each independently represent a group selected from the group consisting of -O-, -S-, an o-, m- or p-phenylene group, -C(O)O-, -Si(R³³)₂-, -(Si(R³³)₂O)_{m'}-Si(R³³)₂-, -CONR³⁴-, -O-CONR³⁴-, -NR³⁴- and -(CH₂)_{n'}- at each appearance,
R³³s each independently represent a phenyl group, a C₁₋₆ alkyl group or a C₁₋₆ alkoxy group at each appearance, preferably a phenyl group or a C₁₋₆ alkyl group, and more preferably a methyl group,
R³⁴s each independently represent a hydrogen atom, a phenyl group or a C₁₋₆ alkyl group (preferably a methyl group) at each appearance,
m' is each independently an integer of 1 to 100, and preferably an integer of 1 to 20 at each appearance,
n' is each independently an integer of 1 to 20, preferably an integer of 1 to 6, and more preferably an integer of 1 to 3 at each appearance,
1' is an integer of 1 to 10, preferably an integer of 1 to 5, and more preferably an integer of 1 to 3,
p' is 0 or 1,
q' is 0 or 1,
here, at least one of p' and q' is 1, and the order of existence of each recurring units enclosed with parentheses applied with p' or q' is arbitrary].
Here, R³¹ and X^{a} (typically a hydrogen atom of R³¹ and X^{a}) may be substituted with one or more substituents selected from a fluorine atom, a C₁₋₃ alkyl group and a C₁₋₃ fluoroalkyl group.

In one embodiment, 1' is 1.

X¹¹ and X^{11'} are preferably -(R³¹)_{p'}-(X^{a})_{q'}-R³²-. R³² represents a single bond, -(CH₂)_{t'}- or an o-, m- or p-phenylene group, and preferably -(CH₂)_{t'}-. t' is an integer of 1 to 20, preferably an integer of 2 to 6, and more preferably an integer of 2 to 3. Here, R³² (typically a hydrogen atom in R³²) may be substituted with one or more substituents selected from a fluorine atom, a C₁₋₃ alkyl group and a C₁₋₃ fluoroalkyl group.

X¹¹ and X^{11'} can be preferably
a single bond,
a C₁₋₂₀ alkylene group,

   -X^{b}-

   -R³¹-X^{c}-R³²-,

   or

   -X^{d}-R³¹-
[wherein, R³¹ and R³² have the same meanings as defined above.].
Incidentally, the alkylene group refers to a group having a -(C_{δ}H_{2δ})- structure, which may be substituted or unsubstituted, and may be linear or branched.

X¹¹ and X^{11'} are more preferably
a single bond,
a C₁₋₂₀ alkylene group,

   -X^{b}-

   -(CH₂)_{s'}-X^{c}-,

   -(CH₂)_{s'}-X^{c}-(CH₂)_{t'}-,

   -X^{d}-,

   or

   -X^{d}-(CH₂)_{t'}-
[wherein, s' and t' have the same meanings as defined above.].

X¹¹ and X^{11'} are further preferably
-X^{b}-
-X^{f}-,
-X^{f}-C₁₋₂₀ alkylene group,

   -X^{f}-(CH₂)_{s'}-X^{c}-,

   -X^{f}(CH₂)_{s'}-X^{c}-(CH₂)_{t'}-

   -X^{f}-X^{d}-,

   or

   -X^{f}-X^{d}-(CH₂)_{t'}-.
In the formulae, s' and t' have the same meanings as defined above.

In the above-mentioned formulae, X^{f} is an alkylene group having 1 to 6 carbon atoms, preferably 1 to 4 carbon atoms, and more preferably 1 to 2 carbon atoms, for example, a methylene group. The hydrogen atom in X^{f} may be substituted with one or more substituents selected from a fluorine atom, a C₁₋₃ alkyl group and a C₁₋₃ fluoroalkyl group, and preferably substituted. X^{f} may be linear or branched, and preferably linear.

In the above-mentioned formulae, X^{c} represents

-O-,

-S-,

-C(O)O-,

-CONR³⁴-,

-O-CONR³⁴-,

-Si(R³³)₂-,

-(Si(R³³)₂O)_{m'}-Si(R³³)₂-,

-O-(CH₂)_{u'}-(Si(R³³)₂O)_{m'}-Si(R³³)₂-,

-O-(CH₂)_{u'}-Si(R³³)₂-O-Si(R³³)₂-CH₂CH₂-Si(R³³)₂-O-Si(R³³)₂-,

-O-(CH₂)_{u'}-Si(OCH₃)₂OSi(OCH₃)₂-,

-CONR³⁴-(CH₂)_{u'}-(Si(R³³)₂O)_{m'}-Si(R³³)₂-,

-CONR³⁴-(CH₂)_{u'}-N(R³⁴)-,

or

-CONR³⁴-(o-, m- or p-phenylene)-Si(R³³)₂-

[wherein, R³³, R³⁴ and m' have the same meanings as defined above, and
u' is an integer of 1 to 20, preferably an integer of 2 to 6, and more preferably an integer of 2 to 3.]. X^{c} is preferably -O-.

In the above-mentioned formulae, X^{d} represents

-S-,

-C(O)O-,

-CONR³⁴-,

-CONR³⁴-(CH₂)_{u'}-(Si(R³³)₂O)_{m'}-Si(R³³)₂-,

-CONR³⁴-(CH₂)_{u'}-N(R³⁴)-,

or

-CONR³⁴-(o-, m- or p-phenylene)-Si(R³³)₂-

[wherein, each symbol has the same meaning as defined above.].

X¹¹ and X^{11'} are particularly preferably groups represented by
-X^{b}-
-X^{f}-,
-X^{f}G₁₋₂₀ alkylene group,

   -X^{f}-(CH₂)_{s'}-X^{c}-,

   -X^{f}-(CH₂)_{s'}-X^{c}-(CH₂)_{t'}-

   -X^{f}-X^{d}-,

   or

   -X^{f}-X^{d}-(CH₂)_{t'}-
[wherein, X^{b}, X^{f}, s' and t' have the same meanings as defined above.],
   wherein,
   X^{b} is -CONR³⁴-
   X^{c} is -O- or -CONR³⁴-,
   X^{d} is -CONR³⁴-,
[R³⁴s each independently represent a hydrogen atom, a phenyl group or a C₁₋₆ alkyl group (preferably a methyl group) at each appearance.].

In one embodiment, X¹¹ and X^{11'} are groups represented by

-X^{b}-

-X^{f}-(CH₂)_{s'}-X^{c}-,

-X^{f}-(CH₂)_{s'}-X^{c}-(CH₂)_{t'}-

-X^{f}-X^{d}-,

or

-X^{f}-X^{d}-(CH₂)_{t'}-

[wherein, X^{f}, s' and t' have the same meanings as defined above.],
   wherein,
   X^{b} is -CONR³⁴-
   X° is -CONR³⁴-,
   X^{d} is -CONR³⁴-,
[R³⁴s each independently represent a hydrogen atom, a phenyl group or a C₁₋₆ alkyl group (preferably a methyl group) at each appearance.].

In one embodiment, X¹¹ and X^{11'} can be
a single bond,
a C₁₋₂₀ alkylene group,

   -X^{b}-

   -(CH₂)_{s'}-X^{c}-(CH₂)_{t'}-,

   or

   -X^{d}-(CH₂)_{t'}-
[wherein, each symbol has the same meaning as defined above.].

X¹¹ and X^{11'} are preferably
a single bond,
a C₁₋₂₀ alkylene group,

   -CONR³⁴-

   -(CH₂)_{s'}-O-(CH₂)_{t'}-,

   -(CH₂)_{s'}-(Si(R³³)₂O)_{m'}-Si(R³³)₂-(CH₂)_{t'}-,

   -(CH₂)_{s'}-O-(CH₂)_{u'}-(Si(R³³)₂O)_{m'}-Si(R³³)₂-(CH₂)_{t'}-,

   or

   -(CH₂)_{s'}-O-(CH₂)_{t'}-Si(R³³)₂ -(CH₂)_{u'}-Si(R³³)₂-(CᵥH₂ᵥ)-
[wherein, R³³, R³⁴, m', s', t' and u' have the same meanings as defined above, v is an integer of 1 to 20, preferably an integer of 2 to 6, and more preferably an integer of 2 to 3.].

In the above-mentioned formula, -(CᵥH₂ᵥ)- may be linear or may be branched, and, for example, can be -CH₂-, -CH₂CH₂-, -CH₂CH₂CH₂-, -CH(CH₃)- or -CH(CH₃)CH₂-.

X¹¹ and X^{11'} groups may be substituted with one or more substituents selected from a fluorine atom, a C₁₋₃ alkyl group and a C₁₋₃ fluoroalkyl group (preferably a C₁₋₃ perfluoroalkyl group).

In one embodiment, X¹¹ and X^{11'} groups can be other than the -O-C₁₋₆ alkylene group.

In another embodiment, as the X¹¹ and X^{11'} groups, for example, there may be mentioned the following groups: 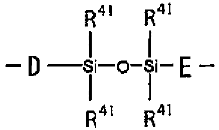 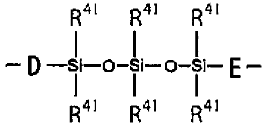 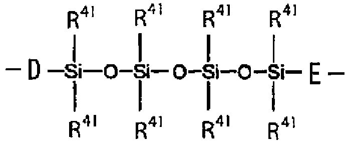 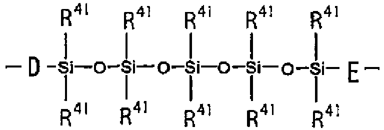 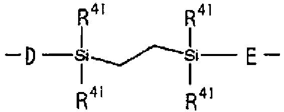 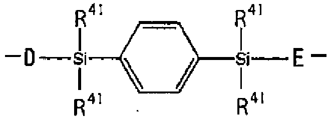 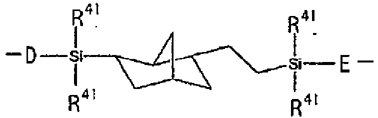 [wherein, R⁴¹s are each independently a hydrogen atom, a phenyl group, an alkyl group having 1 to 6 carbon atoms or a C₁₋₆ alkoxy group, and preferably a methyl group;
D is a group selected from

   -CH₂O(CH₂)₂-,

   -CH₂O(CH₂)₃-,

   -CF₂O(CH₂)₃-,

   -(CH₂)₂-,

   -(CH₂)₃-,

   -(CH₂)₄-,

   -CONH-(CH₂)₃-,

   -CON(CH₃)-(CH₂)₃-,

   -CON(Ph)-(CH₂)₃- (wherein, Ph means phenyl), and

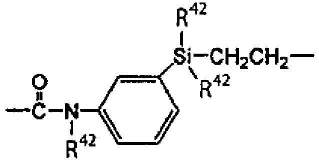

   (wherein, R⁴²s each independently represent a hydrogen atom, a C₁₋₆ alkyl group or a C₁₋₆ alkoxy group, preferably a methyl group or a methoxy group, and more preferably a methyl group.),
E is -(CH₂)ₙₑ- (ne is an integer of 2 to 6),
D binds to PFPE¹ of the main chain of the molecule, and E binds to the group opposite to PFPE¹.]

As specific examples of X¹¹ and X^{11'}, there may be mentioned, for example: a single bond,

-CH₂OCH₂-,

-CH₂O(CH₂)₂-,

-CH₂O(CH₂)₃-,

-CH₂O(CH₂)₆-,

-CF₂-CH₂-O-CH₂-,

-CF₂-CH₂-O-(CH₂)₂-,

-CF₂-CH₂-O-(CH₂)₃-,

-CF₂-CH₂-O-(CH₂)₆-,

-CH₂O(CH₂)₃Si(CH₃)₂OSi(CH₃)₂(CH₂)₂-,

-CH₂O(CH₂)₃Si(CH₃)₂OSi(CH₃)₂OSi(CH₃)₂(CH₂)₂-,

- CH₂O(CH₂)₃Si(CH₃)₂O(Si(CH₃)₂O)₂Si(CH₃)₂(CH₂)₂-,

-CH₂O(CH₂)₃Si(CH₃)₂O(Si(CH₃)₂O)₃Si(CH₃)₂(CH₂)₂-,

-CH₂O(CH₂)₃Si(CH₃)₂O(Si(CH₃)₂O)]₁₀Si(CH₃)₂(CH₂)₂-,

-CH₂O(CH₂)₃Si(CH₃)₂O(Si(CH₃)₂O)₂₀Si(CH₃)₂(CH₂)₂-,

-CH₂OCF₂CHFOCF₂-,

-CH₂OCF₂CHFOCF₂CF₂-,

-CH₂OCF₂CHFOCF₂CF₂CF₂-,

-CH₂OCH₂CF₂CF₂OCF₂-,

-CH₂OCH₂CF₂CF₂OCF₂CF₂-,

-CH₂OCH₂CF₂CF₂OCF₂CF₂CF₂-,

-CH₂OCH₂CF₂CF₂OCF(CF₃)CF₂OCF₂-,

-CH₂OCH₂CF₂CF₂OCF(CF₃)CF₂OCF₂CF₂-,

-CH₂OCH₂CF₂CF₂OCF(CF₃)CF₂OCF₂CF₂CF₂-,

-CH₂OCH₂CHFCF₂OCF₂-,

-CH₂OCH₂CHFCF₂OCF₂CF₂-,

-CH₂OCH₂CHFCF₂OCF₂CF₂CF₂-,

-CH₂OCH₂CHFCF₂OCF(CF₃)CF₂OCF₂-,

-CH₂OCH₂CHFCF₂OCF(CF₃)CF₂OCF₂CF₂-,

-CH₂OCH₂CHFCF₂OCF(CF₃)CF₂OCF₂CF₂CF₂-,

-CH₂OCF₂CHFOCF₂CF₂CF₂-C(O)NH-CH₂-,

-CH₂OCH₂(CH₂)₇CH₂Si(OCH₃)₂OSi(OCH₃)₂(CH₂)₂Si(OCH₃)₂OSi(OCH₃)₂(CH₂)₂-,

-CH₂OCH₂CH₂CH₂Si(OCH₃)₂OSi(OCH₃)₂(CH₂)₃-,

-CH₂OCH₂CH₂CH₂Si(OCH₂CH₃)₂OSi(OCH₂CH₃)₂(CH₂)₃-,

-CH₂OCH₂CH₂CH₂Si(OCH₃)₂OSi(OCH₃)₂(CH₂)₂-,

-CH₂OCH₂CH₂CH₂Si(OCH₂CH₃)₂OSi(OCH₂CH₃)₂(CH₂)₂-,

-(CH₂)₂-Si(CH₃)₂-(CH₂)₂-,

-CH₂-,

-(CH₂)₂-,

-(CH₂)₃-,

-(CH₂)₄-,

-(CH₂)₅-,

-(CH₂)₆-,

-CF₂-,

-(CF₂)₂-,

-CF₂-CH₂-,

-CF₂-(CH₂)₂-,

-CF₂-(CH₂)₃-,

-CF₂-(CH₂)₄-,

-CF₂-(CH₂)₅-,

-CF₂-(CH₂)₆-,

-CO-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-,

-CON(CH₃)-(CH₂)₃-,

-CON(Ph)-

(wherein, Ph means phenyl),

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

-CONH-(CH₂)₆NH(CH₂)₃-,

-CH₂O-CONH-(CH₂)₃-,

-CH₂O-CONH-(CH₂)₆-,

-S-(CH₂)₃-,

-(CH₂)₂S(CH₂)₃-,

-CONH-(CH₂)₃Si(CH₃)₂OSi(CH₃)₂(CH₂)₂-,

-CONH-(CH₂)₃Si(CH₃)₂OSi(CH₃)₂OSi(CH₃)₂(CH₂)₂-,

-CONH-(CH₂)₃Si(CH₃)₂O(Si(CH₃)₂O)₂Si(CH₃)₂(CH₂)₂-,

-CONH-(CH₂)₃Si(CH₃)₂O(Si(CH₃)₂O)₃Si(CH₃)₂(CH₂)₂-,

-CONH-(CH₂)₃Si(CH₃)₂O(Si(CH₃)₂O)₁₀Si(CH₃)₂(CH₂)₂-,

-CONH-(CH₂)₃Si(CH₃)₂O(Si(CH₃)₂O)₂₀Si(CH₃)₂(CH₂)₂-,

-C(O)O-(CH₂)₃-,

-C(O)O-(CH₂)₆-,

-CH₂-O-(CH₂)₃-Si(CH₃)₂-(CH₂)₂-Si(CH₃)₂-(CH₂)₂-,

-CH₂-O-(CH₂)₃-Si(CH₃)₂-(CH₂)₂-Si(CH₃)₂-CH(CH₃)-₃

-CH₂-O-(CH₂)₃-Si(CH₃)₂-(CH₂)₂-Si(CH₃)₂-(CH₂)₃-,

-CH₂-O-(CH₂)₃-Si(CH₃)₂-(CH₂)₂-Si(CH₃)₂-CH(CH₃)-CH₂-,

-OCH₂-,

-O(CH₂)₃-,

-OCFHCF₂-,

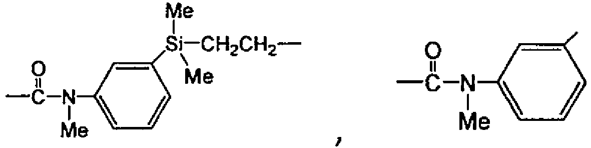

and the like.

Among the above, X¹¹ and X^{11'} are preferably

-CH₂OCH₂-,

-CH₂O(CH₂)₂-,

-CH₂O(CH₂)₃-,

-CH₂O(CH₂)₆-,

-CF₂-CH₂-O-CH₂-,

-CF₂-CH₂-O-(CH₂)₂-,

-CF₂-CH₂-O-(CH₂)₃-,

-CF₂-CH₂-O-(CH₂)₆-,

-CH₂OCF₂CHFOCF₂-,

-CH₂OCF₂CHFOCF₂CF₂-,

-CH₂OCF₂CHFOCF₂CF₂CF₂-,

-CH₂OCH₂CF₂CF₂OCF₂-,

-CH₂OCH₂CF₂CF₂OCF₂CF₂-,

-CH₂OCH₂CF₂CF₂OCF₂CF₂CF₂-,

-CH₂OCH₂CF₂CF₂OCF(CF₃)CF₂OCF₂-,

-CH₂OCH₂CF₂CF₂OCF(CF₃)CF₂OCF₂CF₂-,

-CH₂OCH₂CF₂CF₂OCF(CF₃)CF₂OCF₂CF₂CF₂-,

-CH₂OCH₂CHFCF₂OCF₂-,

-CH₂OCH₂CHFCF₂OCF₂CF₂-,

-CH₂OCH₂CHFCF₂OCF₂CF₂CF₂-,

-CH₂OCH₂CHFCF₂OCF(CF₃)CF₂OCF₂-,

-CH₂OCH₂CHFCF₂OCF(CF₃)CF₂OCF₂CF₂-,

-CH₂OCH₂CHFCF₂OCF(CF₃)CF₂OCF₂CF₂CF₂-,

-CH₂OCF₂CHFOCF₂CF₂CF₂-C(O)NH-CH₂-,

-CH₂-,

-(CH₂)₂-,

-(CH₂)₃-,

-(CH₂)₄-,

-(CH₂)₅-,

-(CH₂)₆-,

-CF₂-,

-(CF₂)₂-,

-CF₂-CH₂-,

-CF₂-(CH₂)₂-,

-CF₂-(CH₂)₃-,

-CF₂-(CH₂)₄-,

-CF₂-(CH₂)₅-,

-CF₂-(CH₂)₆-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-,

-CON(CH₃)-(CH₂)₃-,

-CON(Ph)-

(wherein, Ph means phenyl),

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

-CONH-(CH₂)₆NH(CH₂)₃-,

-CH₂O-CONH-(CH₂)₃-,

-CH₂O-CONH-(CH₂)₆-,

-OCH₂-,

-O(CH₂)₃-, or

-OCFHCF₂-.

Among the above, X¹¹ and X^{11'} are more preferably

-CH₂OCF₂CHFOCF₂CF₂CF₂-C(O)NH-CH₂-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-,

-CON(CH₃)-(CH₂)₃-,

-CON(Ph)-

(wherein, Ph means phenyl),

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

-CONH-(CH₂)₆NH(CH₂)₃-.

In one embodiment, X¹¹ and X^{11'} represent X^{e'}. X^{e'} is a single bond, an alkylene group having 1 to 6 carbon atoms, -R⁵¹-C₆H₄-R⁵²-, -R⁵¹-CONR⁴³-R⁵²-, -R⁵¹-CONR⁴³-C₆H₄-R⁵²-, -R⁵¹-CO-R⁵²-, -R⁵¹-CO-C₆H₄-R⁵²-, -R⁵¹-SO₂NR⁴³-R⁵²-, -R⁵¹. SO₂NR⁴³-C₆H₄-R⁵²-, -R⁵¹-SO₂-R⁵²-, or -R⁵¹-SO₂-C₆H₄-R⁵²-. R⁵¹ and R⁵² each independently represent a single bond or an alkylene group having 1 to 6 carbon atoms, and preferably a single bond or an alkylene group having 1 to 3 carbon atoms. R⁴³ has the same meaning as defined above. The above-mentioned alkylene group is substituted or unsubstituted, and preferably unsubstituted. As the substituents of the above-mentioned alkylene group, there may be mentioned, for example, a halogen atom, and preferably a fluorine atom. The above-mentioned alkylene group is linear or branched, and preferably linear.

In a preferred embodiment, X^{e'} can be
a single bond,

   -X^{f}-,
an alkylene group having 1 to 6 carbon atoms, preferably having 1 to 3 carbon atoms,
-X^{f}-C₁₋₆ alkylene group, preferably -X^{f}-C₁₋₃ alkylene group, and more preferably
-X^{f}-C₁₋₂ alkylene group,

   -C₆H₄-R^{52'}-,

   -CONR^{43'}-R^{52'}-,

   -CONR^{43'}-C₆H₄-R^{52'}-,

   -X^{f}CONR^{43'}-R^{52'}-,

   -X^{f}-CONR^{43'}-C₆H₄-R^{52'}-,

   -CO-R^{52'}-,

   -CO-C₆H₄-R^{52'}-,

   -SO₂NR^{43'}-R^{52'}-,

   -SO₂NR^{43'}-C₆H₄-R^{52'}-,

   -SO₂-R^{52'}-,

   -SO₂-C₆H₄-R^{52'}-,

   -R^{51'}-C₆H₄-,

   -R^{51'}-CONR⁴³'-,

   -R^{51'}-CONR^{43'}-C₆H₄-,

   -R^{51'}-CO-,

   -R^{51'}-CO-C₆H₄-,

   -R^{51'}-SO₂NR^{43'}-,

   -R^{51'}-SO₂NR^{43'}-C₆H₄-,

   -R^{51'}-SO₂-,

   -R^{51'}-SO₂-C₆H₄-,

   -C₆H₄-,

   -CONR^{43'}-,

   -CONR^{43'}-C₆H₄-,

   -X^{f}-CONR^{43'}-,

   -X^{f}-CONR^{43'}-C₆H₄-,

   -CO-,

   -CO-C₆H₄-,

   -SO₂NR^{43'}-,

   -SO₂NR^{43'}-C₆H₄-,

   -SO₂-,

   or

   -SO₂-C₆H₄-
(wherein, R^{51'} and R^{52'} are each independently a linear alkylene group having 1 to 6 carbon atoms, and preferably 1 to 3 carbon atoms. As mentioned above, the above-mentioned alkylene group is substituted or unsubstituted, and as the substituents for the above-mentioned alkylene group, there may be mentioned, for example, a halogen atom, and preferably a fluorine atom.

R^{43'} is a hydrogen atom or a methyl group.).

Among the above-mentioned, X^{e'} can be preferably

-X^{f}-,

an alkylene group having 1 to 6 carbon atoms, and preferably having 1 to 3 carbon atoms,
-X^{f}-C₁₋₆ alkylene group, preferably -X^{f}-C₁₋₃ alkylene group, and more preferably
-X^{f}-C₁₋₂ alkylene group,

   -CONR^{43'}-R^{52'}-,

   -CONR^{43'}-C₆H₄-R^{52'}-,

   -X^{f}-CONR^{43'}-R^{52'}-.

   -X^{f}-CONR^{43'}-C₆H₄-R^{52'}-,

   -R^{51'}-CONR^{43'}-,

   -R^{51'}-CONR^{43'}-C₆H₄-,

   -CONR^{43'}-,

   -CONR^{43'}-C₆H₄-,

   -X^{f}-CONR^{43'}-,

   -X^{f}-CONR^{43'}-C₆H₄-,

   -R^{51'}-CONR⁴³'-,

   or

   -R^{51'}-CONR^{43'}-C₆H₄-.
In the formulae, X^{f}, R^{43'}, R^{51'} and R^{52'} each have the same meanings as defined above.

Among the above-mentioned, X^{e'} can be more preferably

-CONR^{43'}-R^{52'}-,

-CONR^{43'}-C₆H₄-R^{52'}-,

-X^{f}-CONR^{43'}-R^{52'}-,

-X^{f}-CONR^{43'}-C₆H₄-R^{52'}-,

-R^{51'}-CONR⁴³'-,

-R^{51'}-CONR^{43'}-C₆H₄-,

-CONR^{43'}-,

-CONR^{43'}-C₆H₄-,

-X^{f}-CONR^{43'}-,

or

-X^{f}-CONR^{43'}-C₆H₄-.

In this embodiment, as specific examples of X^{e'}, there may be mentioned, for example,
a single bond,
an alkylene group having 1 to 6 carbon atoms,
a perfluoroalkylene group having 1 to 6 carbon atoms (for example, -CF₂-, -(CF₂)₂-, etc.),
-CF₂-C₁₋₆ alkylene group,

   -CONH-,

   -CONH-CH₂-,

   -CONH-(CH₂)₂-,

   -CONH-(CH₂)₃-,

   -CF₂-CONH-,

   -CF₂CONHCH₂-,

   -CF₂CONH(CH₂)₂-,

   -CF₂CONH(CH₂)₃-,

   -CON(CH₃)-,

   -CON(CH₃)-CH₂-,

   -CON(CH₃)-(CH₂)₂-,

   -CON(CH₃)-(CH₂)₃-,

   -CF₂-CON(CH₃)-,

   -CF₂-CON(CH₃)CH₂-,

   -CF₂-CON(CH₃)-(CH₂)₂-,

   -CF₂-CON(CH₃)-(CH₂)₃-,

   -CH₂-CONH-,

   -CH₂-CONH-CH₂-,

   -CH₂-CONH-(CH₂)₂-,

   -CH₂-CONH-(CH₂)₃-,

   -CF₂-CH₂-CONH-,

   -CF₂-CH₂-CONH-CH₂-,

   -CF₂-CH₂-CONH-(CH₂)₂-,

   -CF₂-CH₂-CONH-(CH₂)₃-,

   -CONH-C₆H₄-,

   -CON(CH₃)-C₆H₄-,

   -CH₂-CON(CH₃)-CH₂-,

   -CH₂-CON(CH₃)-(CH₂)₂-,

   -CH₂-CON(CH₃)-(CH₂)₃-,

   -CON(CH₃)-C₆H₄-,

   -CF₂-CONH-C₆H₄-,

   -CF₂-CON(CH₃)-C₆H₄-,

   -CF₂-CH₂-CON(CH₃)-CH₂-,

   -CF₂-CH₂-CON(CH₃)-(CH₂)₂-,

   -CF₂-CH₂-CON(CH₃)-(CH₂)₃-,

   -CF₂-CON(CH₃)-C₆H₄-,

   -CO-,

   -CO-C₆H₄-,

   -C₆H₄-,

   -SO₂NH-,

   -SO₂NH-CH₂-,

   -SO₂NH-(CH₂)₂-,

   -SO₂NH-(CH₂)₃-,

   -SO₂NH-C₆H₄-,

   -SO₂N(CH₃)-,

   -SO₂N(CH₃)-CH₂-,

   -SO₂N(CH₃)-(CH₂)₂-,

   -SO₂N(CH₃)-(CH₂)₃-,

   -SO₂N(CH₃)-C₆H₄-,

   -SO₂-,

   -SO₂-CH₂-,

   -SO₂-(CH₂)₂-,

   -SO₂-(CH₂)₃-,

   or

   -SO₂-C₆H₄-,

   etc.

Among the above-mentioned exemplification, as preferred X^{e'}, there may be mentioned
an alkylene group having 1 to 6 carbon atoms,
a perfluoroalkylene group having 1 to 6 carbon atoms (for example, -CF₂-, -(CF₂)₂-, etc.),
-CF₂-C₁₋₆ alkylene group,

   -CONH-,

   -CONH-CH₂-,

   -CONH-(CH₂)₂-,

   -CONH-(CH₂)₃-,

   -CF₂CONH-,

   -CF₂CONHCH₂-,

   -CF₂CONH(CH₂)₂-,

   -CF₂CONH(CH₂)₃-,

   -CON(CH₃)-,

   -CON(CH₃)-CH₂-,

   -CON(CH₃)-(CH₂)₂-,

   -CON(CH₃)-(CH₂)₃-,

   -CF₂-CON(CH₃)-,

   -CF₂-CON(CH₃)CH₂-,

   -CF₂-CON(CH₃)-(CH₂)₂-,

   -CF₂-CON(CH₃)-(CH₂)₃-,

   -CH₂-CONH-,

   -CH₂-CONH-CH₂-,

   -CH₂-CONH-(CH₂)₂-,

   -CH₂-CONH-(CH₂)₃-,

   -CF₂-CH₂-CONH-,

   -CF₂-CH₂-CONH-CH₂-,

   -CF₂-CH₂-CONH-(CH₂)₂-,

   -CF₂-CH₂-CONH-(CH₂)₃-,

   -CONH-C₆H₄-,

   -CON(CH₃)-C₆H₄-,

   -CH₂-CON(CH₃)-CH₂-,

   -CH₂-CON(CH₃)-(CH₂)₂-,

   -CH₂-CON(CH₃)-(CH₂)₃-,

   -CON(CH₃)-C₆H₄-

   -CF₂-CONH-C₆H₄-,

   -CF₂-CON(CH₃)-C₆H₄-,

   -CF₂-CH₂-CON(CH₃)-CH₂-,

   -CF₂-CH₂-CON(CH₃)-(CH₂)₂-,

   -CF₂-CH₂-CON(CH₃)-(CH₂)₃-,

   -CF₂-CON(CH₃)-C₆H₄-, etc.

Among the above-mentioned exemplification, as more preferred X^{e'}, there may be mentioned

-CONH-,

-CONH-CH₂-,

-CONH-(CH₂)₂-,

-CONH-(CH₂)₃-,

-CF₂CONH-,

-CF₂CONHCH₂-,

-CF₂CONH(CH₂)₂-,

-CF₂CONH(CH₂)₃-,

-CON(CH₃)-,

-CON(CH₃)-CH₂-,

-CON(CH₃)-(CH₂)₂-,

-CON(CH₃)-(CH₂)₃-,

-CF₂-CON(CH₃)-,

-CF₂-CON(CH₃)CH₂-,

-CF₂-CON(CH₃)-(CH₂)₂-,

-CF₂-CON(CH₃)-(CH₂)₃-,

-CH₂-CONH-,

-CH₂-CONH-CH₂-,

-CH₂-CONH-(CH₂)₂-,

-CH₂-CONH-(CH₂)₃-,

-CF₂-CH₂-CONH-,

-CF₂-CH₂-CONH-CH₂-,

-CF₂-CH₂-CONH-(CH₂)₂-,

-CF₂-CH₂-CONH-(CH₂)₃-,

-CONH-C₆H₄-,

-CON(CH₃)-C₆H₄-,

-CH₂-CON(CH₃)-CH₂-,

-CH₂-CON(CH₃)-(CH₂)₂-,

-CH₂-CON(CH₃)-(CH₂)₃-,

-CON(CH₃)-C₆H₄-

-CF₂-CONH-C₆H₄-,

-CF₂-CON(CH₃)-C₆H₄-,

-CF₂-CH₂-CON(CH₃)-CH₂-,

-CF₂-CH₂-CON(CH₃)-(CH₂)₂-,

-CF₂-CH₂-CON(CH₃)-(CH₂)₃-,

or

-CF₂-CON(CH₃)-C₆H₄-,

etc.

In one embodiment, X^{e'} is a single bond. In this embodiment, PFPE¹ and a group having a bonding ability to a substrate (that is, in (A-1), a group enclosed with parentheses to which j and k are applied) are directly bonded.

In yet another embodiment, X¹¹ and X^{11'} are groups represented by the formula: -(R¹⁶)ₓ-(CFR¹⁷)_{y}-(CH₂)_{z}-. In the formula, x, y and z are each independently an integer of 0 to 10, a sum of x, y and z is 1 or more, and the order of existence of each recurring units enclosed with parentheses is arbitrary in the formula.

In the above-mentioned formula, R¹⁶s each independently represent an oxygen atom, phenylene, carbazolylene, -NR¹⁸- (wherein, R¹⁸ represents a hydrogen atom or an organic group) or a divalent organic group at each appearance. R¹⁶ is preferably an oxygen atom or a divalent polar group.

The above-mentioned "divalent polar group" is not particularly limited, and there may be mentioned -C(O)-, -C(=NR¹⁹)-, and -C(O)NR¹⁹- (in these formulae, R¹⁹ represents a hydrogen atom or a lower alkyl group). The "lower alkyl group" is, for example, an alkyl group having 1 to 6 carbon atoms, for example, a methyl group, an ethyl group and an n-propyl group, and these may be substituted with one or more fluorine atoms.

In the above-mentioned formula, R¹⁷s are each independently a hydrogen atom, a fluorine atom or a lower fluoroalkyl group, and preferably a fluorine atom at each appearance. The "lower fluoroalkyl group" is, for example, a fluoroalkyl group having 1 to 6 carbon atoms, preferably 1 to 3 carbon atoms, preferably a perfluoroalkyl group having 1 to 3 carbon atoms, more preferably a trifluoromethyl group or a pentafluoroethyl group, and further preferably a trifluoromethyl group.

In this embodiment, X¹¹ and X^{11'} are preferably groups represented by the formula: -(O)ₓ-(CF₂)_{y}-(CH₂)_{z}- (wherein, x, y and z have the same meanings as defined above, and the order of existence of each recurring units enclosed with parentheses is arbitrary in the formula).

As the group represented by the above-mentioned formula: -(O)ₓ-(CF₂)_{y}-(CH₂)_{z}-, there may be mentioned, for example, a group represented by -(O)_{x'}-(CH₂)_{z"}-O-[(CH₂)_{z'''}-O-]_{z""}, and -(O)_{x'}-(CF₂)_{y"}-(CH₂)_{z"}-O-[(CH₂)_{z‴}-O-]_{zʺʺ} (wherein, x' is 0 or 1, y", z" and z''' are each independently an integer of 1 to 10, and z"" is 0 or 1). Incidentally, the left end of these groups is bonded to the PFPE¹ side.

In another preferred embodiment, X¹¹ and X^{11'} are -O-CFR²⁰-(CF₂)_{e'}-.

The above-mentioned R²⁰s each independently represent a fluorine atom or a lower fluoroalkyl group. Here, the lower fluoroalkyl group is, for example, a fluoroalkyl group having 1 to 3 carbon atoms, preferably a perfluoroalkyl group having 1 to 3 carbon atoms, more preferably a trifluoromethyl group and a pentafluoroethyl group, and further preferably a trifluoromethyl group.

The above-mentioned e's are each independently 0 or 1.

In one specific example, R²⁰ is a fluorine atom, and e' is 1.

In yet another embodiment, as examples of X¹¹ and X^{11'} groups, there may be mentioned the following groups: 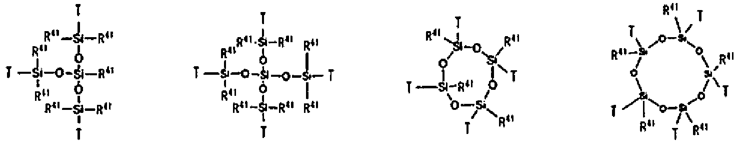 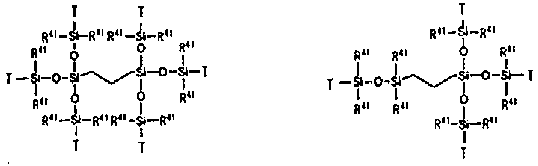 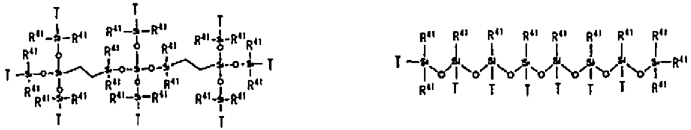 [wherein,
R⁴¹s are each independently a hydrogen atom, a phenyl group, an alkyl group having 1 to 6 carbon atoms or a C₁₋₆ alkoxy group, and preferably a methyl group;
some of optional Ts is/are the following group bonded to PFPE¹ of the main chain of the molecule:

   -CH₂O(CH₂)₂-,

   -CH₂O(CH₂)₃-,

   -CF₂O(CH₂)₃-,

   -CH₂-,

   -(CH₂)₂-,

   -(CH₂)₃-,

   -(CH₂)₄-,

   -CONH-(CH₂)₃-,

   -CON(CH₃)-(CH₂)₃-,

   -CON(Ph)-(CH₂)₃-

   (wherein, Ph means phenyl), or 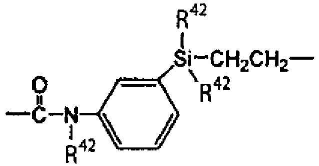
   [wherein, R⁴²s each independently represent a hydrogen atom, a C₁₋₆ alkyl group or a C₁₋₆ alkoxy group, preferably a methyl group or a methoxy group, and more preferably a methyl group.],
   some of the other Ts is/are -(CH₂)_{n"}-(n" is an integer of 2 to 6) bonded to the group opposite to PFPE¹ of the main chain of the molecule, and the remaining Ts, when it is present, can be each independently a methyl group, a phenyl group, a C₁₋₆ alkoxy group, or a radical capturing group or an ultraviolet absorbing group.]. Incidentally, also in the above-mentioned embodiment, in the groups described as X¹¹ and X^{11'}, the left side is bonded to the group represented by PFPE¹ and the right side is bonded to the group enclosed with parentheses by applying j or k, respectively.

The radical capturing group is not particularly limited as long as it can capture radicals generated by photoirradiation, and there may be mentioned, for example, residues of benzophenones, benzotriazoles, benzoic acid esters, phenyl salicylates, crotonic acids, malonic acid esters, organoacrylates, hindered amines, hindered phenols or triazines.

The ultraviolet absorbing group is not particularly limited as long as it can absorb ultraviolet rays, and there may be mentioned, for example, residues of benzotriazoles, hydroxybenzophenones, esters of substituted and unsubstituted benzoic acid or salicylic acid compounds, acrylates or alkoxy cinnamates, oxamides, oxanilides, benzoxazinones or benzoxazoles.

In a preferred embodiment, as the preferred radical capturing group or ultraviolet absorbing group, there may be mentioned

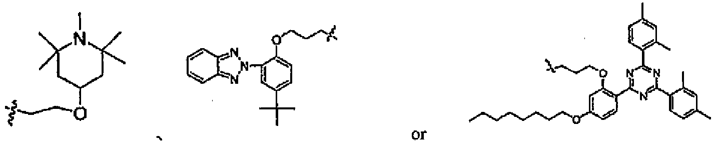

In this embodiment, X¹¹ and X^{11'} (and X¹² and X^{12'}, X¹³ and X^{13'}, and X¹⁴ and X^{14'} mentioned below) can be a 3 to 10 valent organic group.

In the formula (A-1), X²¹ and X^{21'} each represent a single bond or a divalent organic group. X²¹ and X²¹' are preferably alkylene groups having 1 to 20 carbon atoms, and more preferably -(CH₂)ᵤ- (wherein, u is an integer of 0 to 2).

In the formula (A-1), "t"s are each independently an integer of 1 to 10. In a preferred embodiment, t is an integer of 1 to 6. In another preferred embodiment, t is an integer of 2 to 10, and is preferably an integer of 2 to 6.

The compound represented by the formula (A-1) is preferably a compound represented by the following formula (A'-1): 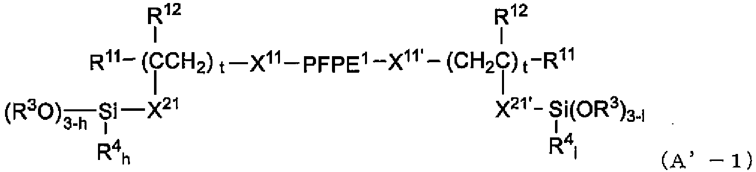 [wherein:
PFPE¹ is a group represented by the formula:

   -(C_{f}F_{2f})-(OCF₂)ₐ₁-(OC₂F₄)ₐ₂-(OC₃F₆)ₐ₃-(OC₄F₈)ₐ₄-(OC₅F₁₀)ₐ₅-(OC₆F₁₂)ₐ₆-(OC₇F₁₄)ₐ₇- (OC₈F₁₆)ₐ₈-

   (wherein, f is an integer of 1 to 10, a1 and a2 are each independently an integer of 1 or more and 200 or less, a3, a4, a5, a6, a7 and a8 are each independently an integer of 0 or more and 30 or less, a sum of a1, a2, a3, a4, a5, a6, a7 and a8 is an integer of 5 or more and 200 or less, the unit represented by (C_{f}F_{2f}) is located at the left end of the group, and the order of existence of each repeating unit enclosed in parentheses with the subscript a1, a2, a3, a4, a5, a6, a7 or a8 is arbitrary in the formula.);
R³s each independently represent a hydrogen atom or a monovalent organic group at each appearance,
R⁴s each independently represent a hydrogen atom or an alkyl group having 1 to 22 carbon atoms at each appearance;
R¹¹s each independently represent a hydrogen atom or a halogen atom at each appearance;
R¹²s each independently represent a hydrogen atom or a lower alkyl group at each appearance;
h and i are each an integer of 0 to 2, and preferably 0,
X¹¹ and X^{11'} are each independently -O-CFR²⁰-(CF₂)_{e'}-;
R²⁰s each independently represent a fluorine atom or a lower fluoroalkyl group at each appearance;
e's are each independently 0 or 1 at each appearance;
X²¹ and X^{21'} are each independently -(CH₂)ᵤ-;
"u"s are each independently an integer of 0 to 2 at each appearance; and
"t"s are each independently an integer of 2 to 10 at each appearance.].

The compound represented by the formula (A-1) is preferably a compound represented by the following formula (A'-1): 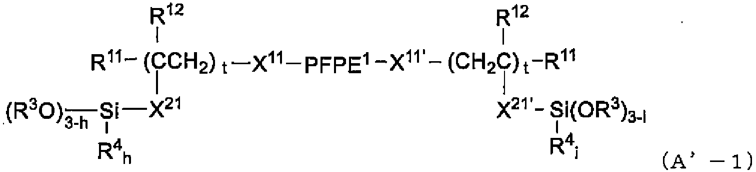 [wherein:
PFPE¹ is a group represented by the formula:

   -(C_{f}F_{2f})-(OCF₂)ₐ₁-(OC₂F₄)ₐ₂-(OC₃F₆)ₐ₃-(OC₄F₈)ₐ₄-(OC₅F₁₀)ₐ₅-(OC₆F₁₂)ₐ₆-(OC₇F₁₄)ₐ₇- (OC₈F₁₆)ₐ₈-

   (wherein, f is an integer of 1 to 10, a1 and a2 are each independently an integer of 1 or more and 200 or less, a3, a4, a5, a6, a7 and a8 are each independently an integer of 0 or more and 30 or less, a sum of a1, a2, a3, a4, a5, a6, a7 and a8 is an integer of 5 or more and 200 or less, the unit represented by (C_{f}F_{2f}) is located at the left end of the group, and the order of existence of each repeating unit enclosed in parentheses with the subscript a1, a2, a3, a4, a5, a6, a7 or a8 is arbitrary in the formula.);
R³s each independently represent a hydrogen atom or a monovalent organic group at each appearance,
R⁴s each independently represent a hydrogen atom or an alkyl group having 1 to 22 carbon atoms at each appearance;
R¹¹s each independently represent a hydrogen atom or a halogen atom at each appearance;
R¹²s each independently represent a hydrogen atom or a lower alkyl group at each appearance;
h and i are each an integer of 0 to 2, and preferably 0,
X¹¹ and X^{11'} are each independently -CONR⁴³-;
R⁴³s each independently represent a hydrogen atom, a phenyl group or a C₁₋₆ alkyl group, and preferably a hydrogen atom or a methyl group;
X²¹ and X^{21'} are each independently -(CH₂)ᵤ-;
"u"s are each independently an integer of 0 to 2 at each appearance; and
"t" is an integer of 1 to 6.].

The compound represented by the above-mentioned formula (A-1) can be obtained, for example, using a perfluoro(poly)ether derivative corresponding to the -PFPE¹- portion as a starting material, by introducing iodine into the terminal, then, reacting vinyl monomers corresponding to -CH₂CR¹²(X²¹-Si(OR³)₃₋ₕR⁴ₕ)- and -CH₂CR¹²(X^{21'}-Si(OR³)₃₋ᵢR⁴ᵢ)-.

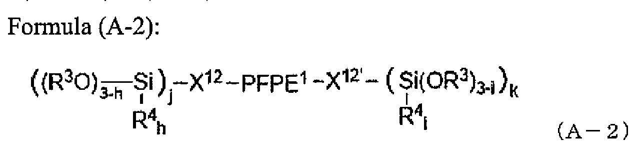

wherein, PFPE¹, R³, R⁴, h, i, j and k have the same meanings as defined in the formula (A-1).

In the formula (A-2), the Si atom bonded to at least one group selected from the group consisting of a hydroxyl group and a hydrolyzable group refers to an Si atom in the group of the following: 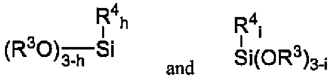 in which h and i are integers of 0 to 2. In the formula (A-2), such Si atoms exist at least two.

In the formula (A-2), h and i are each independently an integer of 0 to 3 at each appearance, provided that at least two of h and i existing with a number of j+k are integers of 0 to 2, and preferably 0 or 1. h and i are each independently and preferably 0 to 2 at each appearance, more preferably 0 or 1, and particularly preferably 0.

In the formula (A-2), the Si atom bonded to at least one group selected from the group consisting of a hydroxyl group and a hydrolyzable group is preferably present at both terminals of the main chain of the molecule. That is, in the formula (A-2), at least one of "h"s existing with a number of j and at least one of "i" existing with a number of k are each preferably an integer of 0 to 2, more preferably 0 or 1, and particularly preferably 0.

In the formula (A-2), X¹² and X^{12'} each independently represent a single bond or a 2 to 10 valent organic group. X¹² and X^{12'} are understood to be a linker, in the compound represented by the formula (A-2), which links a perfluoro(poly)ether portion (that is, -PFPE¹- portion) which mainly provides water repellent property, surface slipperiness, etc., and a silane portion which provides a bonding ability to a substrate, that is, the group represented by 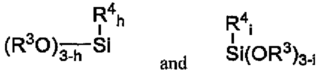 Accordingly, X¹² and X^{12'} may be a single bond, or may be any of 2 to 10 valent organic groups, as long as the compound represented by the formula (A-2) can be stably present. Among these, X¹² and X^{12'} are each preferably a divalent organic group. Incidentally, in the structures described as X¹² and X^{12'}, the left side is bonded to the group represented by PFPE¹ and the right side is bonded to the group enclosed with parentheses to which j or k is applied, respectively.

In another embodiment, X¹² and X^{12'} represent X^{e}. X^{e} has the same meaning as defined above.

In the formula (A-2), j and k are each an integer of 1 to 9, and can vary depending on the number of the valences of X¹² and X^{12'}. In the formula (A-2), j and k are values subtracting 1 from the number of the valences of X¹² and X^{12'}, respectively. When X¹² and X^{12'} are single bonds, j and k are each 1.

X¹² and X^{12'} are preferably 2 to 7 valent, more preferably 2 to 4 valent, and further preferably divalent organic groups.

In one embodiment, X¹² and X^{12'} are 2 to 4 valent organic groups, and j and k are each integers of 1 to 3.

In another embodiment, X¹² and X^{12'} are divalent organic groups, and j and k are each 1. In this case, the formula (A-2) is represented by the following formula (A'-2).

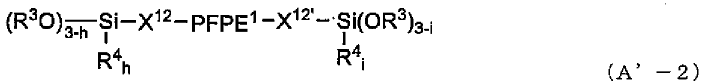

Examples of X¹² and X^{12'} are not particularly limited, and there may be mentioned, for example, the same as those described in X¹¹ and X^{11'}.

Among these, as preferable specific X¹² and X^{12'}, there may be mentioned a single bond,

-CH₂OCH₂-,

-CH₂O(CH₂)₂-,

-CH₂O(CH₂)₃-,

-CH₂O(CH₂)₆-,

-CF₂-CH₂-O-CH₂-,

-CF₂-CH₂-O-(CH₂)₂-,

-CF₂-CH₂-O-(CH₂)₃-,

-CF₂-CH₂-O-(CH₂)₆-,

-CH₂O(CH₂)₃Si(CH₃)₂OSi(CH₃)₂(CH₂)₂-,

-CH₂O(CH₂)₃Si(CH₃)₂OSi(CH₃)₂OSi(CH₃)₂(CH₂)₂-,

-CH₂O(CH₂)₃Si(CH₃)₂O(Si(CH₃)₂O)₂Si(CH₃)₂(CH₂)₂-,

-CH₂O(CH₂)₃Si(CH₃)₂O(Si(CH₃)₂O)₃Si(CH₃)₂(CH₂)₂-,

-CH₂O(CH₂)₃Si(CH₃)₂O(Si(CH₃)₂O)₁₀Si(CH₃)₂(CH₂)₂-,

-CH₂O(CH₂)₃Si(CH₃)₂O(Si(CH₃)₂O)₂₀Si(CH₃)₂(CH₂)₂-,

-CH₂OCF₂CHFOCF₂-,

-CH₂OCF₂CHFOCF₂CF₂-,

-CH₂OCF₂CHFOCF₂CF₂CF₂-,

-CH₂OCH₂CF₂CF₂OCF₂-,

-CH₂OCH₂CF₂CF₂OCF₂CF₂-,

-CH₂OCH₂CF₂CF₂OCF₂CF₂CF₂-,

-CH₂OCH₂CF₂CF₂OCF(CF₃)CF₂OCF₂-,

-CH₂OCH₂CF₂CF₂OCF(CF₃)CF₂OCF₂CF₂-,

-CH₂OCH₂CF₂CF₂OCF(CF₃)CF₂OCF₂CF₂CF₂-,

-CH₂OCH₂CHFCF₂OCF₂-,

-CH₂OCH₂CHFCF₂OCF₂CF₂-,

-CH₂OCH₂CHFCF₂OCF₂CF₂CF₂-,

-CH₂OCH₂CHFCF₂OCF(CF₃)CF₂OCF₂-,

-CH₂OCH₂CHFCF₂OCF(CF₃)CF₂OCF₂CF₂-,

-CH₂OCH₂CHFC₂OCF(CF₃)CF₂OCF₂CF₂CF₂-,

-CH₂OCF₂CHFOCF₂CF₂CF₂-C(O)NH-CH₂-,

-CH₂OCH₂(CH₂)₇CH₂Si(OCH₃)₂OSi(OCH₃)₂(CH₂)₂Si(OCH₃)₂OSi(OCH₃)₂(CH₂)₂-,

-CH₂OCH₂CH₂CH₂Si(OCH₃)₂OSi(OCH₃)₂(CH₂)₃-,

-CH₂OCH₂CH₂CH₂Si(OCH₂CH₃)₂OSi(OCH₂CH₃)₂(CH₂)₃-,

-CH₂OCH₂CH₂CH₂Si(OCH₃)₂OSi(OCH₃)₂(CH₂)₂-,

-CH₂OCH₂CH₂CH₂Si(OCH₂CH₃)₂OSi(OCH₂CH₃)₂(CH₂)₂-,

-(CH₂)₂-Si(CH₃)₂-(CH₂)₂-,

-CH₂-,

-(CH₂)₂-,

-(CH₂)₃-,

-(CH₂)₄-,

-(CH₂)₅-,

-(CH₂)₆-,

-CF₂-,

-(CF₂)₂-,

-CF₂-CH₂-,

-CF₂-(CH₂)₂-,

-CF₂-(CH₂)₃-,

-CF₂-(CH₂)₄-,

-CF₂-(CH₂)₅-,

-CF₂-(CH₂)₆-,

-CO-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-(CH₂)₃-,

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

-CONH-(CH₂)₆NH(CH₂)₃-,

-CH₂O-CONH-(CH₂)₃-,

-CH₂O-CONH-(CH₂)₆-,

-S-(CH₂)₃-,

-(CH₂)₂S(CH₂)₃-,

-CONH-(CH₂)₃Si(CH₃)₂OSi(CH₃)₂(CH₂)₂-,

-CONH-(CH₂)₃Si(CH₃)₂OSi(CH₃)₂OSi(CH₃)₂(CH₂)₂-,

-CONH-(CH₂)₃Si(CH₃)₂O(Si(CH₃)₂O)₂Si(CH₃)₂(CH₂)₂-,

-CONH-(CH₂)₃Si(CH₃)₂O(Si(CH₃)₂O)₃Si(CH₃)₂(CH₂)₂-,

-CONH-(CH₂)₃Si(CH₃)₂O(Si(CH₃)₂O)₁₀Si(CH₃)₂(CH₂)₂-,

-CONH-(CH₂)₃Si(CH₃)₂O(Si(CH₃)₂O)₂₀Si(CH₃)₂(CH₂)₂-,

-C(O)O-(CH₂)₃-,

-C(O)O-(CH₂)₆-,

-CH₂-O-(CH₂)₃-Si(CH₃)₂-(CH₂)₂-Si(CH₃)₂-(CH₂)₂-,

-CH₂-O-(CH₂)₃-Si(CH₃)₂-(CH₂)₂-Si(CH₃)₂-CH(CH₃)-₃

-CH₂-O-(CH₂)₃-Si(CH₃)₂-(CH₂)₂-Si(CH₃)₂-(CH₂)₃-,

-CH₂-O-(CH₂)₃-Si(CH₃)₂-(CH₂)₂-Si(CH₃)₂-CH(CH₃)-CH₂-,

-OCH₂-,

-O(CH₂)₃-,

-OCFHCF₂-,

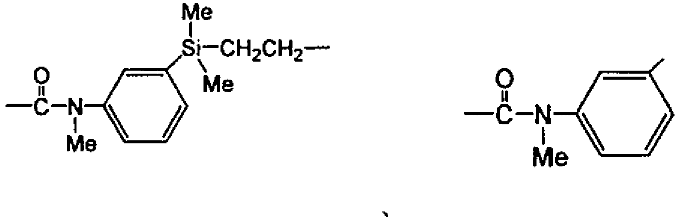

etc.

Among the above, X¹² and X^{12'} are preferably

-CH₂OCH₂-,

-CH₂O(CH₂)₂-,

-CH₂O(CH₂)₃-,

-CH₂O(CH₂)₆-,

-CF₂-CH₂-O-CH₂-,

-CF₂-CH₂-O-(CH₂)₂-,

-CF₂-CH₂-O-(CH₂)₃-,

-CF₂-CH₂-O-(CH₂)₆-,

-CH₂OCF₂CHFOCF₂-,

-CH₂OCF₂CHFOCF₂CF₂-,

-CH₂OCF₂CHFOCF₂CF₂CF₂-,

-CH₂OCH₂CF₂CF₂OCF₂-,

-CH₂OCH₂CF₂CF₂OCF₂CF₂-,

-CH₂OCH₂CF₂CF₂OCF₂CF₂CF₂-,

-CH₂OCH₂CF₂CF₂OCF(CF₃)CF₂OCF₂-,

-CH₂OCH₂CF₂CF₂OCF(CF₃)CF₂OCF₂CF₂-,

-CH₂OCH₂CF₂CF₂OCF(CF₃)CF₂OCF₂CF₂CF₂-,

-CH₂OCH₂CHFCF₂OCF₂-,

-CH₂OCH₂CHFCF₂OCF₂CF₂-,

-CH₂OCH₂CHFCF₂OCF₂CF₂CF₂-,

-CH₂OCH₂CHFCF₂OCF(CF₃)CF₂OCF₂-,

-CH₂OCH₂CHFCF₂OCF(CF₃)CF₂OCF₂CF₂-,

-CH₂OCH₂CHFCF₂OCF(CF₃)CF₂OCF₂CF₂CF₂-,

-CH₂OCF₂CHFOCF₂CF₂CF₂-C(O)NH-CH₂-,

-CF₂-CH₂OCF₂CHFOCF₂CF₂CF₂-C(O)NH-CH₂-,

-CH₂-,

-(CH₂)₂-,

-(CH₂)₃-,

-(CH₂)₄-,

-(CH₂)₅-,

-(CH₂)₆-,

-CF₂-,

-(CF₂)₂-,

-CF₂-CH₂-,

-CF₂-(CH₂)₂-,

-CF₂-(CH₂)₃-,

-CF₂-(CH₂)₄-,

-CF₂-(CH₂)₅-,

-CF₂-(CH₂)₆-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-(CH₂)₃-,

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

-CONH-(CH₂)₆NH(CH₂)₃-,

-CH₂O-CONH-(CH₂)₃-,

-CH₂O-CONH-(CH₂)₆-,

-OCH₂-,

-O(CH₂)₃-, or

-OCFHCF₂-.

Among the above, X¹² and X^{12'} are more preferably

-CH₂OCF₂CHFOCF₂CF₂CF₂-C(O)NH-CH₂-,

-CF₂-CH₂OCF₂CHFOCF₂CF₂CF₂-C(O)NH-CH₂-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-(CH₂)₃-,

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

or

-CONH-(CH₂)₆NH(CH₂)₃-.

In another preferred embodiment, X¹² and X^{12'} represent X^{e'}. X^{e'} has the same meaning as defined above.

In one embodiment, X^{e'} is a single bond. In this embodiment, PFPE¹ and a group having a bonding ability to a substrate (that is, in (A-2), a group enclosed with parentheses to which j and k are applied) are directly bonded.

In one embodiment, in the formula (A-2), Si atoms bonded to a hydroxyl group or a hydrolyzable group exist at least two. That is, in the formula (A-2), the groups of 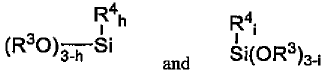 (wherein, h and i are integers of 0 to 2) exist at least two.

The compound represented by the formula (A-2) is preferably a compound represented by the following formula (A'-2): 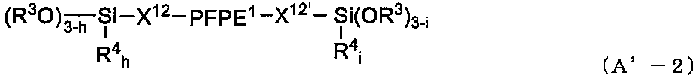 [wherein:
PFPE¹ is a group represented by the formula:

   -(C_{f}F_{2f})-(OCF₂)ₐ₁-(OC₂F₄)ₐ₂-(OC₃F₆)ₐ₃-(OC₄F₈)ₐ₄-(OC₅F₁₀)ₐ₅-(OC₆F₁₂)ₐ₆-(OC₇F₁₄)ₐ₇- (OC₈F₁₆)ₐ₈-

   (wherein, f is an integer of 1 to 10, a1 and a2 are each independently an integer of 1 or more and 200 or less, a3, a4, a5, a6, a7 and a8 are each independently an integer of 0 or more and 30 or less, a sum of a1, a2, a3, a4, a5, a6, a7 and a8 is an integer of 5 or more and 200 or less, the unit represented by (C_{f}F_{2f}) is located at the left end of the group, and the order of existence of each repeating unit enclosed in parentheses with the subscript a1, a2, a3, a4, a5, a6, a7 or a8 is arbitrary in the formula.);
R³s each independently represent a hydrogen atom or a monovalent organic group at each appearance;
R⁴s each independently represent a hydrogen atom or an alkyl group having 1 to 22 carbon atoms at each appearance;
h and i are each an integer of 0 to 2, and preferably 0,
X¹² and X^{12'} are each independently -CH₂O(CH₂)₂-, -CH₂O(CH₂)₃- or -CH₂O(CH₂)₆-.].

The compound represented by the formula (A-2) can be produced by the known method, for example, the method described in JP 2013-117012A or an improved method thereof.

The formula (A-3):

(R^{c}ₙ₁R^{b}ₘ₁R^{a}ₗ₁Si)ⱼ₁-X¹³-PFPE¹-X^{13'}-(SiR^{a}ₗ₂R^{b}ₘ₂R^{c}ₙ₂)ₖ₁ (A - 3)

wherein, PFPE¹ has the same meaning as defined in the formula (A-1).

In the formula (A-3), X¹³ and X^{13'} each independently represent a single bond or a 2 to 10 valent organic group. X¹³ and X^{13'} are understood to be a linker, in the compound represented by the formula (A-3), which links a perfluoro(poly)ether portion (that is, -PFPE¹- portion) which mainly provides water repellent property, surface slipperiness, etc., and a silane portion which provides a bonding ability to a substrate (that is, the group represented by SiR^{a}ₗ₁R^{b}ₘ₁R^{c}ₙ₁ and SiR^{a}ₗ₂R^{b}ₘ₂R^{c}ₙ₂). Accordingly, X¹³ and X^{13'} may be a single bond, or may be any of 2 to 10 valent organic groups, as long as the compound represented by the formula (A-3) can be stably present. Among these, X¹³ and X^{13'} are each preferably a divalent organic group. Incidentally, in the structure described as X¹³ and X^{13'}, the left side is bonded to the group represented by PFPE¹ and the right side is bonded to the group enclosed with parentheses to which j1 or k1 is applied, respectively.

In another embodiment, X¹³ and X^{13'} represent X^{e}. X^{e} have the same meanings as defined above.

In the formula (A-3), j1 and k1 are each an integer of 1 to 9, and can vary depending on the number of the valences of X¹³ and X^{13'}. In the formula (A-3), j1 and k1 are values subtracting 1 from the number of the valences of X¹³ and X^{13'}, respectively. When X¹³ and X^{13'} are single bonds, j1 and k1 are each 1.

X¹³ and X^{13'} are preferably 2 to 7 valent, more preferably 2 to 4 valent, and further preferably divalent organic groups.

In one embodiment, X¹³ and X^{13'} are 2 to 4 valent organic groups, and j1 and k1 are each an integer of 1 to 3.

In another embodiment, X¹³ and X^{13'} are divalent organic groups, and j1 and k1 are each 1. In this case, the formula (A-3) is represented by the following formula (A'-3).

R^{c}ₙ₁R^{b}ₘ₁R^{a}ₗ₁Si-X¹³-PFPE¹-X^{13'}-SiR^{a}ₗ₂R^{b}ₘ₂R^{c}ₙ₂ (A' - 3)

Examples of X¹³ and X^{13'} are not particularly limited, and there may be mentioned, for example, the same as those described in X¹¹ and X^{11'}.

Among these, as preferable specific X¹³ and X^{13'}, there may be mentioned a single bond,

-CH₂OCH₂-,

-CH₂O(CH₂)₂-,

-CH₂O(CH₂)₃-,

-CH₂O(CH₂)₆-,

-CF₂-CH₂-O-CH₂-,

-CF₂-CH₂-O-(CH₂)₂-,

-CF₂-CH₂-O-(CH₂)₃-,

-CF₂-CH₂-O-(CH₂)₆-,

-CH₂O(CH₂)₃Si(CH₃)₂OSi(CH₃)₂(CH₂)₂-,

-CH₂O(CH₂)₃Si(CH₃)₂OSi(CH₃)₂OSi(CH₃)₂(CH₂)₂-,

-CH₂O(CH₂)₃Si(CH₃)₂O(Si(CH₃)₂O)₂Si(CH₃)₂(CH₂)₂-,

-CH₂O(CH₂)₃Si(CH₃)₂O(Si(CH₃)₂O)₃Si(CH₃)₂(CH₂)₂-,

-CH₂O(CH₂)₃Si(CH₃)₂O(Si(CH₃)₂O)₁₀Si(CH₃)₂(CH₂)₂-,

-CH₂O(CH₂)₃Si(CH₃)₂O(Si(CH₃)₂O)₂₀Si(CH₃)₂(CH₂)₂-,

-CH₂OCF₂CHFOCF₂-,

-CH₂OCF₂CHFOCF₂CF₂-,

-CH₂OCF₂CHFOCF₂CF₂CF₂-,

-CH₂OCH₂CF₂CF₂OCF₂-,

-CH₂OCH₂CF₂CF₂OCF₂CF₂-,

-CH₂OCH₂CF₂CF₂OCF₂CF₂CF₂-,

-CH₂OCH₂CF₂CF₂OCF(CF₃)CF₂OCF₂-,

-CH₂OCH₂CF₂CF₂OCF(CF₃)CF₂OCF₂CF₂-,

-CH₂OCH₂CF₂CF₂OCF(CF₃)CF₂OCF₂CF₂CF₂-,

-CH₂OCH₂CHFCF₂OCF₂-,

-CH₂OCH₂CHFCF₂OCF₂CF₂-,

-CH₂OCH₂CHFCF₂OCF₂CF₂CF₂-,

-CH₂OCH₂CHFCF₂OCF(CF₃)CF₂OCF₂-,

-CH₂OCH₂CHFCF₂OCF(CF₃)CF₂OCF₂CF₂-,

-CH₂OCH₂CHFCF₂OCF(CF₃)CF₂OCF₂CF₂CF₂-,

-CH₂OCF₂CHFOCF₂CF₂CF₂-C(O)NH-CH₂-,

-CH₂OCH₂(CH₂)₇CH₂Si(OCH₃)₂OSi(OCH₃)₂(CH₂)₂Si(OCH₃)₂OSi(OCH₃)₂(CH₂)₂-,

-CH₂OCH₂CH₂CH₂Si(OCH₃)₂OSi(OCH₃)₂(CH₂)₃-,

-CH₂OCH₂CH₂CH₂Si(OCH₂CH₃)₂OSi(OCH₂CH₃)₂(CH₂)₃-,

-CH₂OCH₂CH₂CH₂Si(OCH₃)₂OSi(OCH₃)₂(CH₂)₂-,

-CH₂OCH₂CH₂CH₂Si(OCH₂CH₃)₂OSi(OCH₂CH₃)₂(CH₂)₂-,

-(CH₂)₂-Si(CH₃)₂-(CH₂)₂-,

-CH₂-,

-(CH₂)₂-,

-(CH₂)₃-,

-(CH₂)₄-,

-(CH₂)₅-,

-(CH₂)₆-,

-CF₂-,

-(CF₂)₂-,

-CF₂-CH₂-,

-CF₂-(CH₂)₂-,

-CF₂-(CH₂)₃-,

-CF₂-(CH₂)₄-,

-CF₂-(CH₂)₅-,

-CF₂-(CH₂)₆-,

-CO-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-(CH₂)₃-,

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

-CONH-(CH₂)₆NH(CH₂)₃-,

-CH₂O-CONH-(CH₂)₃-,

-CH₂O-CONH-(CH₂)₆-,

-S-(CH₂)₃-,

-(CH₂)₂S(CH₂)₃-,

-CONH-(CH₂)₃Si(CH₃)₂OSi(CH₃)₂(CH₂)₂-,

-CONH-(CH₂)₃Si(CH₃)₂OSi(CH₃)₂OSi(CH₃)₂(CH₂)₂-,

-CONH-(CH₂)₃Si(CH₃)₂O(Si(CH₃)₂O)₂Si(CH₃)₂(CH₂)₂-,

-CONH-(CH₂)₃Si(CH₃)₂O(Si(CH₃)₂O)₃Si(CH₃)₂(CH₂)₂-,

-CONH-(CH₂)₃Si(CH₃)₂O(Si(CH₃)₂O)₁₀Si(CH₃)₂(CH₂)₂-,

-CONH-(CH₂)₃Si(CH₃)₂O(Si(CH₃)₂O)₂₀Si(CH₃)₂(CH₂)₂-,

-C(O)O-(CH₂)₃-,

-C(O)O-(CH₂)₆-,

-CH₂-O-(CH₂)₃-Si(CH₃)₂-(CH₂)₂-Si(CH₃)₂-(CH₂)₂-,

-CH₂-O-(CH₂)₃-Si(CH₃)₂-(CH₂)₂-Si(CH₃)₂-CH(CH₃)-,

-CH₂-O-(CH₂)₃-Si(CH₃)₂-(CH₂)₂-Si(CH₃)₂-(CH₂)₃-,

-CH₂-O-(CH₂)₃-Si(CH₃)₂-(CH₂)₂-Si(CH₃)₂-CH(CH₃)-CH₂-,

-OCH₂-,

-O(CH₂)₃-,

-OCFHCF₂-,

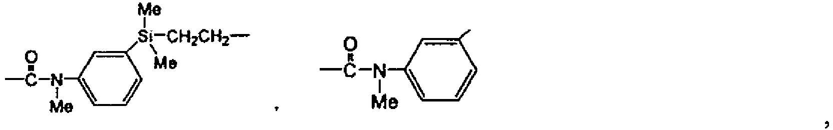

etc.

Among the above, X¹³ and X^{13'} are preferably

-CH₂OCH₂-,

-CH₂O(CH₂)₂-,

-CH₂O(CH₂)₃-,

-CH₂O(CH₂)₆-,

-CF₂-CH₂-O-CH₂-,

-CF₂-CH₂-O-(CH₂)₂-,

-CF₂-CH₂-O-(CH₂)₃-,

-CF₂-CH₂-O-(CH₂)₆-,

-CH₂OCF₂CHFOCF₂-,

-CH₂OCF₂CHFOCF₂CF₂-,

-CH₂OCF₂CHFOCF₂CF₂CF₂-,

-CH₂OCH₂CF₂CF₂OCF₂-,

-CH₂OCH₂CF₂CF₂OCF₂CF₂-,

-CH₂OCH₂CF₂CF₂OCF₂CF₂CF₂-,

-CH₂OCH₂CF₂CF₂OCF(CF₃)CF₂OCF₂-,

-CH₂OCH₂CF₂CF₂OCF(CF₃)CF₂OCF₂CF₂-,

-CH₂OCH₂CF₂CF₂OCF(CF₃)CF₂OCF₂CF₂CF₂-,

-CH₂OCH₂CHFCF₂OCF₂-,

-CH₂OCH₂CHFCF₂OCF₂CF₂-,

-CH₂OCH₂CHFCF₂OCF₂CF₂CF₂-,

-CH₂OCH₂CHFCF₂OCF(CF₃)CF₂OCF₂-,

-CH₂OCH₂CHFCF₂OCF(CF₃)CF₂OCF₂CF₂-,

-CH₂OCH₂CHFCF₂OCF(CF₃)CF₂OCF₂CF₂CF₂-,

-CH₂OCF₂CHFOCF₂CF₂CF₂-C(O)NH-CH₂-,

-CF₂-CH₂OCF₂CHFOCF₂CF₂CF₂-C(O)NH-CH₂-,

-CH₂-,

-(CH₂)₂-,

-(CH₂)₃-,

-(CH₂)₄-,

-(CH₂)₅-,

-(CH₂)₆-,

-CF₂-,

-(CF₂)₂-,

-CF₂-CH₂-,

-CF₂-(CH₂)₂-,

-CF₂-(CH₂)₃-,

-CF₂-(CH₂)₄-,

-CF₂-(CH₂)₃-,

-CF₂-(CH₂)₆-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-(CH₂)₃-,

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

-CONH-(CH₂)₆NH(CH₂)₃-,

-CH₂O-CONH-(CH₂)₃-,

-CH₂O-CONH-(CH₂)₆-,

-OCH₂-,

-O(CH₂)₃-,

or

-OCFHCF₂-.

Among the above, X¹³ and X^{13'} are more preferably

-CH₂OCF₂CHFOCF₂CF₂CF₂-C(O)NH-CH₂-,

-CF₂-CH₂OCF₂CHFOCF₂CF₂CF₂-C(O)NH-CH₂-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-(CH₂)₃-,

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

or

-CONH-(CH₂)₆NH(CH₂)₃-.

In another preferred embodiment, X¹³ and X^{13'} represent X^{e'}. X^{e'} have the same meanings as defined above.

In one embodiment, X^{e'} is a single bond. In this embodiment, PFPE¹ and a group having a bonding ability to a substrate (that is, in the formula (A-3), the group enclosed with parentheses to which j1 and k1 are applied) are directly bonded.

In the above-mentioned formula, R^{a}s each independently represent -Z³-SiR⁷¹ₚ₁R⁷²_{q1}R⁷³ᵣ₁ at each appearance.

In the formula, Z³s each independently represent an oxygen atom or a divalent organic group at each appearance. Z³ is preferably a divalent organic group, and does not include a group which forms a siloxane bond with the Si atom (Si atom to which R^{a} is bonded) at the terminal of the main chain of the molecule in the formula (A-3).

Z³ is preferably a C₁₋₆ alkylene group, -(CH₂)ₛ₁-O-(CH₂)ₛ₂- (wherein, s1 is an integer of 1 to 6, and s2 is an integer of 1 to 6) or -phenylene-(CH₂)ₛ₃- (wherein, s3 is an integer of 0 to 6), and more preferably a C₁₋₃ alkylene group. These groups may be substituted with one or more substituents selected from, for example, a fluorine atom, a C₁₋₆ alkyl group, a C₂₋₆ alkenyl group and a C₂₋₆ alkynyl group. From the viewpoint that ultraviolet durability is particularly good, Z³ is more preferably a linear or branched alkylene group, and further preferably a linear alkylene group. A number of the carbon atoms constituting the alkylene group of Z³ is preferably in the range of 1 to 6, and more preferably in the range of 1 to 3. Incidentally, with regard to the alkylene group, it is the same as mentioned above.

R⁷¹s are each independently (-Z³-SiR^{71'}_{p1'}R⁷²_{q1'}R⁷³_{r1'})ₛ₄-Z³-SiR⁷²_{q1"}R⁷³_{r1"} at each appearance. In the formula, Z³ has the same meaning as defined above. p1', q1' and r1' are each independently an integer of 0 to 2, provided that a sum of p1', q1' and r1' is 2. q1" and r1" are each independently an integer of 0 to 3, provided that a sum of q1" and r1" is 3. s4 is an integer of 0 to 3. That is, R^{a} contains recurring units of -Z³-Si- with a number of s4+2, and its maximum number is 5.

In R^{a}, a number of the Si atoms linked linearly through the Z³ group is 5 at the maximum. That is, in R^{a}, when R⁷¹ is present with a number of at least one, the Si atoms linked linearly through the Z³ group exist with a number of two or more in R^{a}, and a number of the Si atoms linked linearly through such a Z³ group is 5 at the maximum. Incidentally, a "number of the Si atoms linked linearly through the Z³ group in R^{a}" is equal to the number of repetitions of -Z³-Si- linked linearly in R^{a}.

R^{a} may have, in addition to the above-mentioned linear chain, a plural number of branched chains in which a number of the Si atoms linearly linked through the Z³ group becomes within 5. That is, R⁷¹'s are each independently a group having at least one -Z³-Si- unit at each appearance, and are specifically (-Z³-SiR^{71"}_{p1‴}R⁷²_{q1‴}R⁷³_{r1‴})ₛ₅-Z³-SiR⁷²_{q1ʺʺ}R⁷³_{r1ʺʺ}. In the formula, Z³ has the same meaning as defined above. p1‴, q1'" and r1‴ are each independently an integer of 0 to 2, provided that a sum of p1‴, q1'" and r1''' is 2. q1ʺʺ and r1"" are each independently an integer of 0 to 3, provided that a sum of q1"" and r1"" is 3. s5 is an integer of 0 to 2, and is an integer in which a number of the Si atoms linked through the Z³ group in R^{a} becomes 5 or less. R^{71"} et seq are also defined in the same manner as in R^{71'}.

For example, an example in which the Si atoms are linked through the Z³ group in R^{a} is shown below.

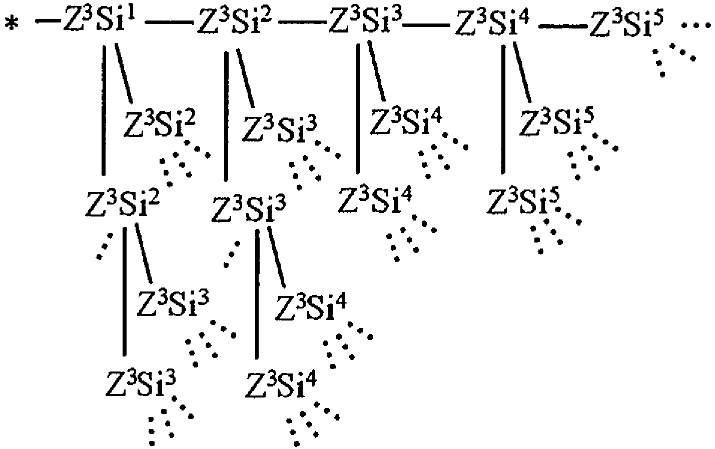

In the above-mentioned formula, * means a site that binds to Si in the main chain, and ··· means that a predetermined group other than Z³Si is bonded, that is, when all three bonding arms of the Si atom are ···, it means the end portion of the repetition of Z³Si. Also, the number on the right shoulder of Si means the number of the appearance of Si linked linearly through the Z³ group counted from *. That is, in the chain in which the Z³Si repetition is terminated at Si², "the number of the Si atoms linked linearly through the Z³ group in R^{a}" is 2, and similarly, in the chain in which the Z³Si repetition is terminated at Si³, Si⁴ and Si⁵, "the number of the Si atoms linked linearly through the Z³ group in R^{a}" are 3, 4 and 5, respectively. Incidentally, as is clear from the above-mentioned formula, there are a plurality of the Z³Si chains in R^{a}, but it is not necessary that they all have the same length, and each may have an arbitrary length.

In a preferred embodiment, as shown below, "the number of the Si atoms linked linearly through the Z³ group in R^{a}" is one (left formula) or two (right formula) in all chains.

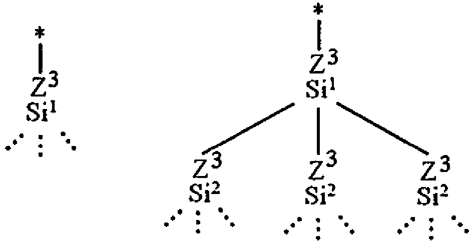

In one embodiment, the number of the Si atoms linked linearly through the Z³ group in R^{a} is 1 or 2, and preferably 1.

In the formula, R⁷²s each independently represent a hydroxyl group or a hydrolyzable group at each appearance. The "hydrolyzable group" has the same meaning as defined above.

R⁷² is preferably -OR^{72'} (wherein, R^{72'} represents a substituted or unsubstituted C₁₋₃ alkyl group, and more preferably a methyl group).

In the formula, R⁷³s each independently represent a hydrogen atom or a lower alkyl group at each appearance. The lower alkyl group is preferably an alkyl group having 1 to 20 carbon atoms, more preferably an alkyl group having 1 to 6 carbon atoms, and further preferably a methyl group.

In the above-mentioned R^{a}, p1s are each independently an integer of 0 to 3 at each appearance; q1s are each independently an integer of 0 to 3 at each appearance; and rls are each independently an integer of 0 to 3 at each appearance. Provided that in each (-Z³-SiR⁷¹ₚ₁R⁷²_{q1}R⁷³ᵣ₁), a sum of p1, q1 and r1 is 3.

In a preferred embodiment, q1, q1", q1"", etc., in R^{a} are preferably 2 or more, for example, are 2 or 3, and more preferably 3.

In a preferred embodiment, at least one of the terminal portions of R^{a} can be -Z³-SiR⁷²_{q1}R⁷³ᵣ₁, -Z³-SiR⁷²_{q1"}R⁷³_{r1"}, -Z³-SiR⁷²_{q1ʺʺ}R⁷³_{r1ʺʺ}, etc. (here, a sum of q1 and r1, a sum of q1" and r1", a sum of q1"" and r1"", etc., are each 3). In the formula, the units such as -Z³-SiR⁷²_{q1}R⁷³ᵣ₁, -Z³-SiR⁷²_{q1"}R⁷³_{r1"}, -Z³-SiR⁷²_{q1ʺʺ}R⁷³_{r1ʺʺ}, etc., are preferably -Z³-SiR⁷²₃. In a further preferred embodiment, the terminal portion of R^{a} can be all -Z³-SiR⁷²_{q1}R⁷³ᵣ₁, -Z³-SiR⁷²_{q1"}R⁷³_{r1"}, -Z³-SiR⁷²_{q1ʺʺ}R⁷³_{r1ʺʺ}, etc., and can be preferably -Z³-SiR⁷²₃.

In a preferred embodiment, at least one of the terminal portions in the group enclosed with parentheses to which j1 is attached can be -Si(-Z³-SiR⁷²_{q1}R⁷³ᵣ₁)₂R^{b}ₘ₁R^{c}ₙ₁ (provided that either one of m1 and n1 is 1 and the other is 0, and that a sum of q1 and r1 is 3), -Si(-Z³-SiR⁷²_{q1''}R⁷³_{r1''})₂R⁷²_{q1}R⁷³ᵣ₁ (provided that either one of q1 and r1 is 1 and the other is 0, and that a sum of q1" and r1" is 3), -Si(-Z³-SiR⁷²_{q1}R⁷³ᵣ₁)₃ (a sum of q1 and r1 is 3) or -Si(-Z³-SiR⁷²_{q1"}R⁷³_{r1"})₃ (a sum of q1" and r1" is 3), etc., and preferably - Si(-Z³-SiR⁷²_{q1}R⁷³ᵣ₁)₃ or -Si(-Z³-SiR⁷²_{q1"}R⁷³_{r1"})₃, etc. In the formula, the units such as (-Z³-SiR⁷²_{q1}R⁷³ᵣ₁)₃, (-Z-SiR⁷²_{q1''}R⁷³_{r1"})₃, etc., are preferably each (-Z³-SiR⁷²₃)₃. In a further preferred embodiment, all the terminal portions of R^{a} can be (-Z³-SiR⁷²_{q1}R⁷³ᵣ₁)₃, -Si(-Z³-SiR⁷²_{q1''}R⁷³_{r1"})₃, etc., and preferably -Si(-Z³-SiR⁷²₃)₃.

In a preferred embodiment, at least one of the terminal portions in the group enclosed with parentheses to which k1 is attached can be -Si(-Z³-SiR⁷²_{q1}R⁷³ᵣ₁)₂R^{b}ₘ₂R^{c}ₙ₂ (provided that either one of m2 and n2 is 1 and the other is 0, and that a sum of q1 and r1 is 3), -Si(-Z³-SiR⁷²_{q1''}R⁷³_{r1"})₂R⁷²_{q1}R⁷³ᵣ₁ (provided that either one of q1 and r1 is 1 and the other is 0, and that a sum of q1" and r1" is 3), -Si(-Z³-SiR⁷²_{q1}R⁷³ᵣ₁)₃ (a sum of q1 and r1 is 3) or -Si(-Z³-SiR⁷²_{q1''}R⁷³_{r1"})₃ (a sum of q1" and r1" is 3), etc., and preferably - Si(-Z³-SiR⁷²_{q1}R⁷³ᵣ₁)₃ or -Si(-Z³-SiR⁷²_{q1''}R⁷³_{r1"})₃, etc. In the formula, the units such as (-Z³-SíR⁷²_{q1}R⁷³ᵣ₁)₃, (-Z³-SiR⁷²_{q1''}R⁷³_{r1"})₃, etc., are preferably each (-Z³-SiR⁷²₃)₃. In a further preferred embodiment, all the terminal portions of R^{a} can be (-Z³-SiR⁷²_{q1}R⁷³ᵣ₁)₃, -Si(-Z³-SiR⁷²_{q1''}R⁷³_{r1"})₃, etc., and preferably -Si(-Z³-SiR⁷²₃)₃.

In the formula (A-3), Si atoms bonded to a hydroxyl group or a hydrolyzable group exist at least two. That is, the structures selected from the group consisting of SiR⁷² (specifically the group represented by -SiR⁷¹ₚ₁R⁷²_{q1}R⁷³ᵣ₁, etc., provided that q1 is an integer of 1 to 3) in R^{a} in the group enclosed to which j1 and k1 are applied, and SiR^{b} (specifically, groups represented by -SiR^{a}ₗ₁R^{b}ₘ₁R^{c}ₙ₁ and -SiR^{a}ₗ₂R^{b}ₘ₂R^{c}ₙ₂, provided that m1 and m2 are integers of 1 to 3) in the group enclosed to which j 1 and k1 are applied are present with at least two. R^{b} will be mentioned later.

The above-mentioned group can correspond to the group of 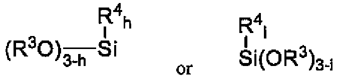 (h and i are integers of 0 to 2) in the formula (1).

In the formula (A-3), at least one Si which is bonded to a hydroxyl group or a hydrolyzable group is more preferably present in both terminals of the main chain of the molecule of the (A) PFPE-containing silane compound. That is, there exist the structure of SiR⁷² or SiR^{b} in R^{a} in the enclosed group by applying j1 with at least one, and exist the structure of SiR⁷² or SiR^{b} in R^{a} in the enclosed group by applying k1 with at least one.

In the formula (A-3), R^{b} groups each independently represent a hydroxyl group or a hydrolyzable group at each appearance. The R^{b} group is preferably a hydroxyl group, -OR^{4'}, -OCOR^{4'}, -O-N=C(R^{4'})₂, -N(R^{4'})₂, -NHR^{4'} or halogen (in these formulae, R^{4'} represents a substituted or unsubstituted alkyl group having 1 to 4 carbon atoms), and more preferably -OR^{4'}. In R^{4'}, an unsubstituted alkyl group such as a methyl group, an ethyl group, a propyl group, an isopropyl group, an n-butyl group, an isobutyl group, etc.; and a substituted alkyl group such as a chloromethyl group, etc., are contained. Among these, an alkyl group, in particular, an unsubstituted alkyl group is preferable, and a methyl group or an ethyl group is more preferable. The hydroxyl group is not particularly limited, and may be one in which it is generated by hydrolyzing a hydrolyzable group. R^{b} is more preferably -OR^{4'} (wherein, R^{4'} represents a substituted or unsubstituted C₁₋₃ alkyl group, and more preferably a methyl group).

In the above-mentioned formula, R^{c}s each independently represent a hydrogen atom or a lower alkyl group at each appearance. The lower alkyl group is preferably an alkyl group having 1 to 20 carbon atoms, more preferably an alkyl group having 1 to 6 carbon atoms, and further preferably a methyl group.

In the formula (A-3), l1 and l2 are each independently an integer of 0 to 3 at each appearance; m1 and m2 are each independently an integer of 0 to 3 at each appearance; and n1 and n2 are each independently an integer of 0 to 3 at each appearance. Provided that, in each (SiR^{a}ₗ₁R^{b}ₘ₁R^{c}ₙ₁) and each (SiR^{a}ₗ₂R^{b}ₘ₂R^{c}ₙ₂), a sum of l1, m1 and n1 and a sum of l2, m2 and n2 are each 3.

In one embodiment, l1 and l2 are each preferably an integer of 1 to 3, and more preferably 3.

The compound represented by the above-mentioned formula (A-3) can be synthesized by, for example, the method described in WO 2014/069592 A1.

The formula (A-4):

(R^{f}ₙ₃R^{e}ₘ₃R^{d}ₗ₃C)ⱼ₂-X¹⁴-PFPE¹-X^{14'}-(CR^{d}ₗ₄R^{e}ₘ₄R^{f}ₙ₄)ₖ₂ (A - 4)

In the formula, PFPE¹ has the same meaning as defined in the formula (A-1).

In the formula (A-4), X¹⁴ and X^{14'} each independently represent a single bond or a 2 to 10 valent organic group. X¹⁴ and X^{14'} are understood to be a linker, in the compound represented by the formula (A-4), which links a perfluoro(poly)ether portion (that is, -PFPE¹- portion) which mainly provides water repellent property, surface slipperiness, etc., and a portion which provides a bonding ability to a substrate (that is, the group represented by CR^{d}ₗ₃R^{e}ₘ₃R^{f}ₙ₃ and CR^{d}ₗ₄R^{e}ₘ₄R^{f}ₙ₄). Accordingly, X¹⁴ and X^{14'} may be a single bond, or may be any of 2 to 10 valent organic groups, as long as the compound represented by the formula (A-4) can be stably present. Among these, X¹⁴ and X^{14'} are each preferably a divalent organic group. Incidentally, in the structure described as X¹⁴ and X^{14'}, the left side is bonded to the group represented by PFPE¹ and the right side is bonded to the group enclosed with parentheses to which j2 or k2 is applied, respectively.

In another embodiment, X¹⁴ and X^{14'} represent X^{e}. X^{e} has the same meaning as defined above.

In the formula (A-4), j2 and k2 are each an integer of 1 to 9, and can vary depending on the number of the valences of X¹⁴ and X^{14'}. In the formula (A-4), j2 and k2 are values subtracting 1 from the number of the valences of X¹⁴ and X^{14'}, respectively. When X¹⁴ and X^{14'} are single bonds, j2 and k2 are each 1.

X¹⁴ and X^{14'} are preferably 2 to 7 valent, more preferably 2 to 4 valent, and further preferably divalent organic groups.

In one embodiment, X¹⁴ and X^{14'} are 2 to 4 valent organic groups, and j2 and k2 are each an integer of 1 to 3.

In another embodiment, X¹⁴ and X^{14'} are divalent organic groups, and j2 and k2 are each 1. In this case, the formula (A-4) is represented by the following formula (A'-4).

R^{f}ₙ₃R^{e}ₘ₃R^{d}ₗ₃C-X¹⁴-PFPE¹-X^{14'}-CR^{d}ₗ₄R^{e}ₘ₄R^{f}ₙ₄ (A' - 4)

Examples of the above-mentioned X¹⁴ and X^{14'} are not particularly limited, and there may be mentioned, for example, the same as those described in X¹¹ and X^{11'}.

Among these, as preferable specific X¹⁴ and X^{14'}, there may be mentioned,
a single bond,

   -CH₂OCH₂-,

   -CH₂O(CH₂)₂-,

   -CH₂O(CH₂)₃-,

   -CH₂O(CH₂)₆-,

   -CF₂-CH₂-O-CH₂-,

   -CF₂-CH₂-O-(CH₂)₂-,

   -CF₂-CH₂-O-(CH₂)₃-,

   -CF₂-CH₂-O-(CH₂)₆-,

   -CH₂O(CH₂)₃Si(CH₃)₂OSi(CH₃)₂(CH₂)₂-,

   -CH₂O(CH₂)₃Si(CH₃)₂OSi(CH₃)₂OSi(CH₃)₂(CH₂)₂-,

   -CH₂O(CH₂)₃Si(CH₃)₂O(Si(CH₃)₂O)₂Si(CH₃)₂(CH₂)₂-,

   -CH₂O(CH₂)₃Si(CH₃)₂O(Si(CH₃)₂O)₃Si(CH₃)₂(CH₂)₂-,

   -CH₂O(CH₂)₃Si(CH₃)₂O(Si(CH₃)₂O)₁₀Si(CH₃)₂(CH₂)₂-,

   -CH₂O(CH₂)₃Si(CH₃)₂O(Si(CH₃)₂O)₂₀Si(CH₃)₂(CH₂)₂-,

   -CH₂OCF₂CHFOCF₂-,

   -CH₂OCF₂CHFOCF₂CF₂-,

   -CH₂OCF₂CHFOCF₂CF₂CF₂-,

   -CH₂OCH₂CF₂CF₂OCF₂-,

   -CH₂OCH₂CF₂CF₂OCF₂CF₂-,

   -CH₂OCH₂CF₂CF₂OCF₂CF₂CF₂-,

   -CH₂OCH₂CF₂CF₂OCF(CF₃)CF₂OCF₂-,

   -CH₂OCH₂CF₂CF₂OCF(CF₃)CF₂OCF₂CF₂-,

   -CH₂OCH₂CF₂CF₂OCF(CF₃)CF₂OCF₂CF₂CF₂-,

   -CH₂OCH₂CHFCF₂OCF₂-,

   -CH₂OCH₂CHFCF₂OCF₂CF₂-,

   -CH₂OCH₂CHFCF₂OCF₂CF₂CF₂-,

   -CH₂OCH₂CHFCF₂OCF(CF₃)CF₂OCF₂-,

   -CH₂OCH₂CHFCF₂OCF(CF₃)CF₂OCF₂CF₂-,

   -CH₂OCH₂CHFCF₂OCF(CF₃)CF₂OCF₂CF₂CF₂-,

   -CH₂OCF₂CHFOCF₂CF₂CF₂-C(O)NH-CH₂-,

   -CH₂OCH₂(CH₂)₇CH₂Si(OCH₃)₂OSi(OCH₃)₂(CH₂)₂Si(OCH₃)₂OSi(OCH₃)₂(CH₂)₂-,

   -CH₂OCH₂CH₂CH₂Si(OCH₃)₂OSi(OCH₃)₂(CH₂)₃-,

   -CH₂OCH₂CH₂CH₂Si(OCH₂CH₃)₂OSi(OCH₂CH₃)₂(CH₂)₃-,

   -CH₂OCH₂CH₂CH₂Si(OCH₃)₂OSi(OCH₃)₂(CH₂)₂-,

   -CH₂OCH₂CH₂CH₂Si(OCH₂CH₃)₂OSi(OCH₂CH₃)₂(CH₂)₂-,

   -(CH₂)₂-Si(CH₃)₂-(CH₂)₂-,

   -CH₂-,

   -(CH₂)₂-,

   -(CH₂)₃-,

   -(CH₂)₄-,

   -(CH₂)₅-,

   -(CH₂)₆-,

   -CF₂-,

   -(CF₂)₂-,

   -CF₂-CH₂-,

   -CF₂-(CH₂)₂-,

   -CF₂-(CH₂)₃-,

   -CF₂-(CH₂)₄-,

   -CF₂-(CH₂)₅-,

   -CF₂-(CH₂)₆-,

   -CO-,

   -CONH-,

   -CONH-CH₂-,

   -CONH-(CH₂)₂-,

   -CONH-(CH₂)₃-,

   -CONH-(CH₂)₆-,

   -CF₂CONH-,

   -CF₂CONHCH₂-,

   -CF₂CONH(CH₂)₂-,

   -CF₂CONH(CH₂)₃-,

   -CF₂CONH(CH₂)₆-,

   -CON(CH₃)-(CH₂)₃-,

   -CON(Ph)-(CH₂)₃-

   (wherein, Ph means phenyl),

   -CON(CH₃)-(CH₂)₆-,

   -CON(Ph)-(CH₂)₆-

   (wherein, Ph means phenyl),

   -CF₂-CON(CH₃)-(CH₂)₃-,

   -CF₂-CON(Ph)-(CH₂)₃-

   (wherein, Ph means phenyl),

   -CF₂-CON(CH₃)-(CH₂)₆-,

   -CF₂-CON(Ph)-(CH₂)₆-

   (wherein, Ph means phenyl),

   -CONH-(CH₂)₂NH(CH₂)₃-,

   -CONH-(CH₂)₆NH(CH₂)₃-,

   -CH₂O-CONH-(CH₂)₃-,

   -CH₂O-CONH-(CH₂)₆-,

   -S-(CH₂)₃-,

   -(CH₂)₂S(CH₂)₃-,

   -CONH-(CH₂)₃Si(CH₃)₂OSi(CH₃)₂(CH₂)₂-,

   -CONH-(CH₂)₃Si(CH₃)₂OSi(CH₃)₂OSi(CH₃)₂(CH₂)₂-,

   -CONH-(CH₂)₃Si(CH₃)₂O(Si(CH₃)₂O)₂Si(CH₃)₂(CH₂)₂-,

   -CONH-(CH₂)₃Si(CH₃)₂O(Si(CH₃)₂O)₃Si(CH₃)₂(CH₂)₂-,

   -CONH-(CH₂)₃Si(CH₃)₂O(Si(CH₃)₂O)₁₀Si(CH₃)₂(CH₂)₂-,

   -CONH-(CH₂)₃Si(CH₃)₂O(Si(CH₃)₂O)₂₀Si(CH₃)₂(CH₂)₂-,

   -C(O)O-(CH₂)₃-,

   -C(O)O-(CH₂)₆-,

   -CH₂-O-(CH₂)₃-Si(CH₃)₂-(CH₂)₂-Si(CH₃)₂-(CH₂)₂-,

   -CH₂-O-(CH₂)₃-Si(CH₃)₂-(CH₂)₂-Si(CH₃)₂-CH(CH₃)-,

   -CH₂-O-(CH₂)₃-Si(CH₃)₂-(CH₂)₂-Si(CH₃)₂-(CH₂)₃-,

   -CH₂-O-(CH₂)₃-Si(CH₃)₂-(CH₂)₂-Si(CH₃)₂-CH(CH₃)-CH₂-,

   -OCH₂-,

   -O(CH₂)₃-,

   -OCFHCF₂-,

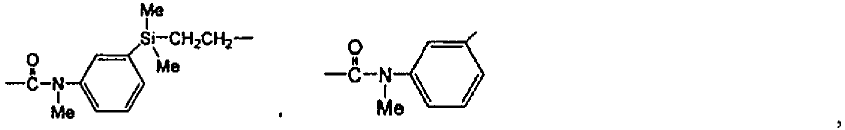

   etc.

Among the above-mentioned, more preferred specific X¹⁴ and X^{14'} are preferably

-CH₂OCH₂-,

-CH₂O(CH₂)₂-,

-CH₂O(CH₂)₃-,

-CH₂O(CH₂)₆-,

-CF₂-CH₂-O-CH₂-,

-CF₂-CH₂-O-(CH₂)₂-,

-CF₂-CH₂-O-(CH₂)₃-,

-CF₂-CH₂-O-(CH₂)₆-,

-CH₂OCF₂CHFOCF₂-,

-CH₂OCF₂CHFOCF₂CF₂-,

-CH₂OCF₂CHFOCF₂CF₂CF₂-,

-CH₂OCH₂CF₂CF₂OCF₂-,

-CH₂OCH₂CF₂CF₂OCF₂CF₂-,

-CH₂OCH₂CF₂CF₂OCF₂CF₂CF₂-,

-CH₂OCH₂CF₂CF₂OCF(CF₃)CF₂OCF₂-,

-CH₂OCH₂CF₂CF₂OCF(CF₃)CF₂OCF₂CF₂-,

-CH₂OCH₂CF₂CF₂OCF(CF₃)CF₂OCF₂CF₂CF₂-,

-CH₂OCH₂CHFCF₂OCF₂-,

-CH₂OCH₂CHFCF₂OCF₂CF₂-,

-CH₂OCH₂CHFCF₂OCF₂CF₂CF₂-,

-CH₂OCH₂CHFCF₂OCF(CF₃)CF₂OCF₂-,

-CH₂OCH₂CHFCF₂OCF(CF₃)CF₂OCF₂CF₂-,

-CH₂OCH₂CHFCF₂OCF(CF₃)CF₂OCF₂CF₂CF₂-,

-CH₂OCF₂CHFOCF₂CF₂CF₂-C(O)NH-CH₂-,

-CF₂-CH₂OCF₂CHFOCF₂CF₂CF₂-C(O)NH-CH₂-,

-CH₂-,

-(CH₂)₂-,

-(CH₂)₃-,

-(CH₂)₄-,

-(CH₂)₅-,

-(CH₂)₆-,

-CF₂-,

-(CF₂)₂-,

-CF₂-CH₂-,

-CF₂-(CH₂)₂-,

-CF₂-(CH₂)₃-,

-CF₂-(CH₂)₄-,

-CF₂-(CH₂)₅-,

-CF₂-(CH₂)₆-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-(CH₂)₃-,

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

-CONH-(CH₂)₆NH(CH₂)₃-,

-CH₂O-CONH-(CH₂)₃-,

-CH₂O-CONH-(CH₂)₆-,

-OCH₂-,

-O(CH₂)₃-,

or

-OCFHCF₂-.

Among the above, X¹⁴ and X^{14'} are more preferably

-CH₂OCF₂CHFOCF₂CF₂CF₂-C(O)NH-CH₂-,

-CF₂-CH₂OCF₂CHFOCF₂CF₂CF₂-C(O)NH-CH₂-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-(CH₂)₃-,

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

or

-CONH-(CH₂)₆NH(CH₂)₃-.

In a more preferred embodiment, X¹⁴ and X^{14'} represent X^{e'}. X^{e'} has the same meaning as defined above.

In one embodiment, X^{e'} is a single bond. In this embodiment, PFPE¹ and a group having a bonding ability to a substrate (that is, in the formula (A-4), a group enclosed with parentheses to which j2 and k2 are applied) are directly bonded. By having such a structure, a bonding force between PFPE¹ and the group enclosed with parentheses to which j2 and k2 are applied is considered to be more strengthened. Also, the carbon atoms directly bonded to PFPE¹ (that is, in the group enclosed with parentheses to which j2 and k2 are applied, the carbon atoms bonded to R^{d} R^{e} and R^{f}, respectively) have less charge bias and, as a result, the nucleophilic reaction, etc., are difficultly generated in the above-mentioned carbon atoms, and it is considered that the compound is stably bonded to a substrate. Such a structure is advantageous since friction durability of the layer formed by the (A) PFPE-containing silane compound can be more improved.

In the above-mentioned formula, R^{d}s each independently represent -Z⁴-CR⁸¹ₚ₂R⁸²_{q2}R⁸³ᵣ₂ at each appearance.

In the formula, Z⁴s each independently represent an oxygen atom or a divalent organic group at each appearance.

Z⁴ is preferably a C₁₋₆ alkylene group, -(CH₂)ₜ₁-O-(CH₂)ₜ₂- (wherein, t1 is an integer of 0 to 6, for example, an integer of 1 to 6, and t2 is an integer of 0 to 6, for example, an integer of 1 to 6) or -phenylene-(CH₂)ₜ₃- (wherein, t3 is an integer of 0 to 6), and more preferably a C₁₋₃ alkylene group. These groups may be substituted with one or more substituent(s), for example, selected from a fluorine atom, a C₁₋₆ alkyl group, a C₂₋₆ alkenyl group and a C₂₋₆ alkynyl group.

In the formula, R⁸¹s are each independently (-Z⁴-CR^{81'}_{p2'}R⁸²_{q2'}R⁸³_{r2'})ₜ₄-Z⁴-CR⁸²_{q2"}R⁸³_{r2"} at each appearance. In the formula, Z⁴ has the same meaning as defined above. p2', q2' and r2' are each independently an integer of 0 to 2, provided that a sum of p2', q2' and r2' is 2. q2" and r2" are each independently an integer of 0 to 3, provided that a sum of q2" and r2" is 3. t4 is an integer of 0 to 3. That is, R^{d} contains the recurring units of -Z⁴-C- with a number of t4+2, and the maximum number is five.

In R^{d}, a number of C atoms linearly linked through the Z⁴ group is five at the maximum. That is, in R^{d}, when R⁸¹ is present with at least one, two or more C atoms linearly linked through the Z⁴ group in R^{d} are present, and a number of C atoms linearly linked through such a Z⁴ group is five at the maximum. Incidentally, a "number of C atoms linearly linked through the Z⁴ group in R^{d}" is equal to the number of repetitions of -Z⁴-C- linearly linked in R^{d}.

R^{d} may have, in addition to the above-mentioned linear chain, a plurality of branched chains such that the number of C atoms linearly linked through Z⁴ group is within 5. That is, R^{81'} is each independently a group having at least one -Z⁴-C- unit at each appearance, and specifically is (-Z⁴-CR^{81"}_{p2‴}R⁸²_{q2‴}R⁸³_{r2‴})ₜ₅-Z⁴-CR⁸²_{q2ʺʺ}R⁸³_{r2ʺʺ}. In the formula, Z⁴ has the same meaning as defined above. p2"', q2‴ and r2‴ are each independently an integer of 0 to 2, provided that a sum of p2‴, q2‴ and r2‴ is 2. q2"" and r2ʺʺ are each independently an integer of 0 to 3, provided that a sum of q2"" and r2ʺʺ is 3. t5 is an integer of 0 to 2, and an integer such that the number of C atoms linked through the Z⁴ group in R^{d} is 5 or less. R^{81"} et seq are also defined similarly to R^{81'}.

In a preferred embodiment, as shown below, the "number of C atoms linearly linked through the Z⁴ group in R^{d}" is one (left formula) or two (right formula) in all chains.

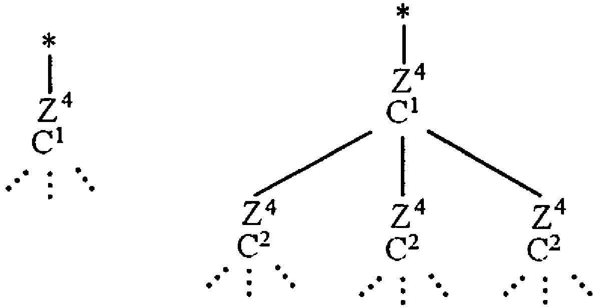

In the above-mentioned formula, * means a site that binds to C in the main chain, and ... means that a predetermined group other than Z⁴C is bonded, that is, when all three bonding arms of the C atom are ..., it means the end portion of the repetition of Z⁴C. Also, the number on the right shoulder of C means the number of the appearance of C linked linearly through the Z⁴ group counted from *. That is, in the chain in which the Z⁴C repetition is terminated at C², "the number of the C atoms linked linearly through the Z⁴ group in R^{d}" is 2.

In one embodiment, the number of C atoms linearly linked through the Z⁴ group in R^{d} is 1 or 2, and preferably 1.

In the formula, R⁸²s each independently represent -Y-SiR⁸⁵ₜ₆R⁸⁶₃₋ₜ₆ at each appearance.

Ys each independently represent a divalent organic group at each appearance.

In a preferred embodiment, Y is a C₁₋₆ alkylene group, -(CH₂)_{t1'}-O-(CH₂)_{t2'}-(wherein, t1' is an integer of 0 to 6, for example, an integer of 1 to 6, and t2' an integer of 0 to 6, for example, an integer of 1 to 6) or -phenylene-(CH₂)_{t3'}- (wherein, t3' is an integer of 0 to 6). These groups may be substituted with, for example, one or more substituent(s) selected from a fluorine atom, a C₁₋₆ alkyl group, a C₂₋₆ alkenyl group and a C₂₋₆ alkynyl group.

In one embodiment, Y can be a C₁₋₆ alkylene group or -phenylene-(CH₂)_{t3'}-. When Y is the above-mentioned group, light resistance, in particular, ultraviolet durability can be higher.

R⁸⁵s each independently represent a hydroxyl group or a hydrolyzable group at each appearance. The "hydrolyzable group" has the same meaning as defined above.

R⁸⁵ is preferably -OR^{85'} (wherein, R^{85'} represents a substituted or unsubstituted C₁₋₃ alkyl group, more preferably an ethyl group or a methyl group, and in particular a methyl group).

The above-mentioned R⁸⁶s each independently represent a hydrogen atom or a lower alkyl group at each appearance. The lower alkyl group is preferably an alkyl group having 1 to 20 carbon atoms, more preferably an alkyl group having 1 to 6 carbon atoms, and further preferably a methyl group.

t6 represents an integer of 0 to 3 independently for each (-Y-SiR⁸⁵ₜ₆R⁸⁶₃₋ₜ₆) unit, preferably an integer of 1 to 3, more preferably 2 or 3, and particularly preferably 3.

R⁸³s each independently represent a hydrogen atom, a hydroxyl group or a lower alkyl group at each appearance, and preferably a hydrogen atom or a lower alkyl group. The lower alkyl group is preferably an alkyl group having 1 to 20 carbon atoms, more preferably an alkyl group having 1 to 6 carbon atoms, and further preferably a methyl group.

In the formula, p2s are each independently an integer of 0 to 3 at each appearance; q2s are each independently an integer of 0 to 3 at each appearance; and r2s are each independently an integer of 0 to 3 at each appearance. Provided that a sum of p2, q2 and r2 is 3 per each (-Z⁴-CR⁸¹ₚ₂R⁸²_{q2}R⁸³ᵣ₂).

In a preferred embodiment, q2, q2" and q2ʺʺ in R^{d} are preferably 2 or more, for example, 2 or 3, and more preferably 3.

In a preferred embodiment, at least one of the terminal portion of R^{d} can be -C(-Y-SiR⁸⁵ₜ₆R⁸⁶₃₋ₜ₆)₂ (specifically -C(-Y-SiR⁸⁵ₜ₆R⁸⁶₃₋ₜ₆)₂R⁸³) or -C(-Y-SiR⁸⁵ₜ₆R⁸⁶₃₋ₜ₆)₃, and preferably can be -C(-Y-SiR⁸⁵ₜ₆R⁸⁶₃₋ₜ₆)₃. Here, t6 is an integer of 1 to 3. In the formula, the unit of (-Y-SiR⁸⁵ₜ₆R⁸⁶₃₋ₜ₆) is preferably (-Y-SiR⁸⁵₃). In a further preferred embodiment, all the terminal portions of R^{d} can be -C(-Y-SiR⁸⁵ₜ₆R⁸⁶₃₋ₜ₆)₃, and preferably can be -C(-Y-SiR⁸⁵₃)₃.

In a preferred embodiment, at least one of the terminal portion of the group enclosed with parentheses to which j2 and k2 are applied can be -C(-Y-SiR⁸⁵ₜ₆R⁸⁶₃₋ₜ₆)₂ (specifically -C(-Y-SiR⁸⁵ₜ₆R³⁶₃₋ₜ₆)₂R^{f}) or -C(-Y-SiR⁸⁵ₜ₆R⁸⁶₃₋ₜ₆)₃, and preferably can be -C(-Y-SiR⁸⁵ₜ₆R⁸⁶₃₋ₜ₆)₃. Here, t6 is an integer of 1 to 3. In the formula, the unit of (-Y-SiR⁸⁵ₜ₆R⁸⁶₃₋ₜ₆) is preferably (-Y-SiR⁸⁵₃). In a further preferred embodiment, all the terminal portions of the above-mentioned group can be -C(-Y-SiR⁸⁵ₜ₆R⁸⁶₃₋ₜ₆)₃, and preferably can be -C(-Y-SiR⁸⁵₃)₃.

In the above-mentioned formula, R^{e}s each independently represent -Y-SiR⁸⁵ₜ₆R³⁶₃₋ₜ₆ at each appearance. Here, Y, R⁸⁵, R⁸⁶ and t6 have the same meanings as defined in the above-mentioned R⁸².

In the above-mentioned formula, R^{f}s each independently represent a hydrogen atom, a hydroxyl group or a lower alkyl group at each appearance. It is preferable that R^{f}s each independently represent a hydrogen atom or a lower alkyl group at each appearance. The lower alkyl group is preferably an alkyl group having 1 to 20 carbon atoms, more preferably an alkyl group having 1 to 6 carbon atoms, and further preferably a methyl group.

In the formula, 13 and 14 are each an integer of 0 to 3; m3 and m4 are each an integer of 0 to 3; and n3 and n4 are each an integer of 0 to 3. Provided that per (CR^{d}₁₃R^{e}ₘ₃R^{f}ₙ₃) and per (CR^{d}ₗ₄R^{e}ₘ₄R^{f}ₙ₄), a sum of 13, m3 and n3 and a sum of 14, m4 and n4 is 3.

In one embodiment, at least one of 13 and 14 is 2 or 3, and preferably 3.

In one embodiment, 13 and 14 is 2 or 3, and preferably 3.

In one embodiment, m3 and m4 is 2 or 3, and preferably 3.

In the formula (A-4), Si atoms bonded to a hydroxyl group or a hydrolyzable group exist at least two. That is, in the enclosed groups by applying j2 and k2, the structures selected from the group consisting of SiR⁸⁵ in R⁸² of R^{d} and SiR⁸⁵ of R^{e} (specifically a group represented by -Y-SiR⁸⁵ₜ₆R⁸⁶₃₋ₜ₆, provided that t6 is an integer of 1 to 3) are present with at least two.

The above-mentioned group can correspond to the group 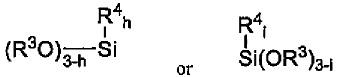 (h and i are integers of 0 to 2) in the formula (1).

In the formula (A-4), there exist the groups represented by -Y-SiR⁸⁵ with two or more. In the formula (A-4), the groups represented by -Y-SiR⁸⁵ are preferably present at the both terminals of the main chain of the molecule. In the formula (A-4), the carbon atoms bonded to two or more of the groups represented by -Y-SiR⁸⁵ₜ₆R⁸⁶₃₋ₜ₆ (wherein, t6 is an integer of 1 to 3) are preferably present at the both terminals of the main chain of the molecule with one or more, respectively. That is, in the formula (A-4), it is preferable that in the enclosed group by applying j2, the group selected from the group represented by -C-R^{d}ₗ₃(Y-SiR⁸⁵ₜ₆R⁸⁶₃₋ₜ₆)ₘ₃R^{f}ₙ₃ (provided that m3 is 2 or 3, and a sum of 13, m3 and n3 is 3) and the group represented by -C-R⁸¹ₚ₂(Y-SiR⁸⁵ₜ₆R⁸⁶₃₋ₜ₆)_{q2}R⁸³ᵣ₂ (provided that q2 is 2 or 3, and a sum of p2, q2 and r2 is 3) is present with one or more, and in the enclosed group by applying k2, the group selected from the group represented by -C-R^{d}ₗ₄(Y-SiR⁸⁵ₜ₆R⁸⁶₃₋ₜ₆)ₘ₄R^{f}ₙ₄ (provided that m4 is 2 or 3, and a sum of 14, m4 and n4 is 3) and the group represented by -C-R⁸¹ₚ₂(Y-SiR⁸⁵ₜ₆R⁸⁶₃₋ₜ₆)_{q2}R⁸³ᵣ₂ (provided that q2 is 2 or 3, and a sum of p2, q2 and r2 is 3) is present with one or more (wherein, t6 is an integer of 1 to 3).

In one embodiment, in the above-mentioned formula (A-4), it is preferable that the group represented by -C-(Y-SiR⁸⁵ₜ₆R⁸⁶₃₋ₜ₆)₂ is present at the both terminals of the main chain of the molecule with each one or more (wherein, t6 is an integer of 1 to 3).

In one embodiment, in the above-mentioned formula (A-4), it is preferable that the group represented by -C-(Y-SiR⁸⁵ₜ₆R⁸⁶₃₋ₜ₆)₃ is present at the both terminals of the main chain of the molecule with each one or more (wherein, t6 is an integer of 1 to 3.).

In the formula (A-4), t6 is an integer of 1 to 3, and at least one of q2s is 2 or 3, or at least one of m3 and m4 is 2 or 3.

In the formula (A-4), Y-SiR⁸⁵ₜ₆R⁸⁶₃₋ₜ₆ is preferably present with at least two. In the formula (A-4), the Y-SiR⁸⁵ₜ₆R⁸⁶₃₋ₜ₆ groups are preferably present at the both terminals of the main chain of the molecule each with at least one. That is, the groups containing -SiR⁸⁵ are preferably present at the both terminals of the main chain of the molecule of the (A) PFPE-containing silane compound.

The compound represented by the above-mentioned formula (A-4) can be produced by combining known methods.

The (A) PFPE-containing silane compound can be a compound represented by the formula (A-5). 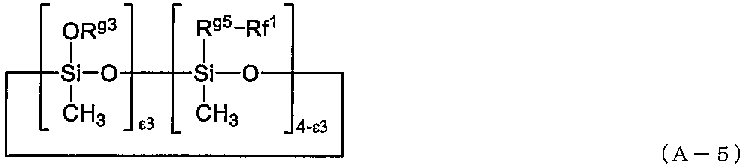 Here, the unit containing OR^{g3} and the unit containing R^{g5}-Rf¹ are not necessarily arranged as shown in the above-mentioned formula (A-5), and it can be understood that the order of arrangement is arbitrary, for example, both exist alternately, etc.

In the formula (A-5), OR^{g3} represents a hydrolyzable group. R^{g3}s are each independently and preferably CH₃-, C₂H₅-, C₃H₇-, CF₃CH₂-, CH₃CO-, CH₂=C(CH₃)-, CH₃CH₂C(CH₃)=N-, (CH₃)₂N-, (C₂H₅)₂N-, CH₂=C(OC₂H₅)-, (CH₃)₂C=C(OC₈H₁₇)-, or 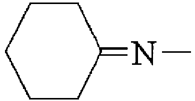 at each appearance, and more preferably CH₃- or C₂H₅-.

In the formula (A-5), ε3 is 2 or 3.

Rf¹ is a monovalent fluorinated (poly)ether group. As Rf¹, there may be exemplified the structure in which CF₃O-, CF₃CF₂O-, CF₃CF₂CF₂O-, (CF₃)₂CFO-, or CF₃CF₂CF₂CF₂O-, etc., is bonded to the CF₂ terminal of the above-mentioned PFPE¹.

R^{g5} is a divalent organic group. The divalent organic group has the same meaning as defined above. R^{g5} can be a substituted or unsubstituted divalent hydrocarbon group which may contain, for example, one kind or two or more kinds of an oxygen atom, a nitrogen atom, a silicon atom and a sulfur atom, and which may contain an amide bond or a sulfonamide bond. The divalent hydrocarbon group preferably has a number of the carbon atoms of 2 to 20. Here, as specific examples of the substituted or unsubstituted divalent hydrocarbon group without intervention of an oxygen atom, a nitrogen atom, a silicon atom or a sulfur atom, and without containing an amide bond or a sulfonamide bond, there may be mentioned an alkylene group such as an ethylene group, a propylene group, a methylethylene group, a butylene group, a hexamethylene group, etc.; a cycloalkylene group such as a cyclohexylene group, etc.; an arylene group such as a phenylene group, a tolylene group, a xylylene group, a naphthylene group, a biphenylene group, etc.; a combination of these alkylene groups and arylene groups; and a group in which some or all of the hydrogen atom of these alkylene groups and arylene groups are substituted with a halogen atom.

In the above-mentioned divalent hydrocarbon group, an oxygen atom can be contained as -O-, a nitrogen atom can be contained as -NR^{g51}- (R^{g51} is a hydrogen atom or an alkyl group having 1 to 10 carbon atom or an aryl group) or -N=, a silicon atom can be contained as -SiR^{g52}R^{g53}- (R^{g52}s and R^{g53}s are each independently an alkyl group having 1 to 10 carbon atoms or an aryl group at each appearance), and a sulfur atom can be contained as -S-. In addition, in the above-mentioned divalent hydrocarbon group, the amide bond can be contained as -C(=O)NR^{g51}- (R^{g51} is the same as mentioned above), and the sulfonamide bond can be contained as -SO₂NR^{g51}- (R^{g51} is the same as mentioned above). As specific examples of such a divalent hydrocarbon group, there may be mentioned the following. Incidentally, in the following formulae, Me represents a methyl group and Ph represents a phenyl group, and in the following respective formulae, the Rf¹ group is bonded to the left side.

J-CH₂CH₂OCH₂CH₂CH₂-,

J-CH₂OCH₂CH₂CH₂-,

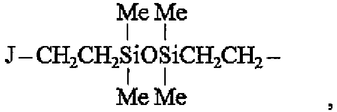

J-CH₂CH₂SCH₂CH₂CH₂- ,

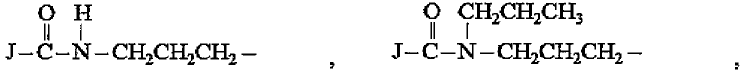

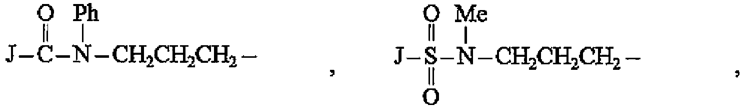

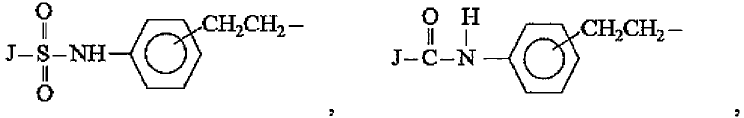

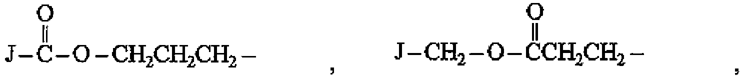

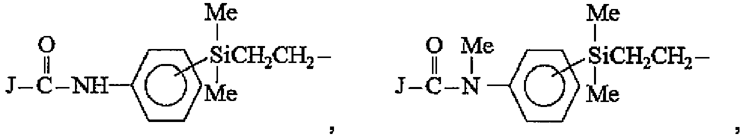

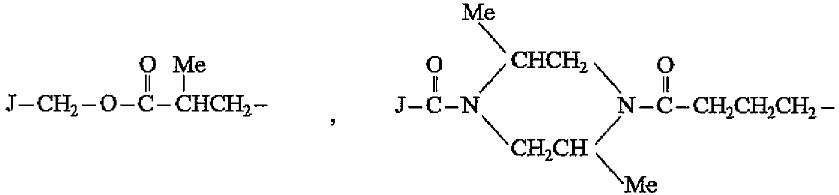

[J represents a bonded portion]

In a preferred embodiment, the (A) PFPE-containing silane compound is represented by the formula (A-2) or (A-3).

In one embodiment, the (A) PFPE-containing silane compound is represented by the formula (A-1), (A-3) or (A-4).

In one embodiment, the (A) PFPE-containing silane compound is particularly preferably a compound represented by the following formulae: 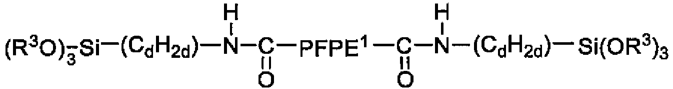 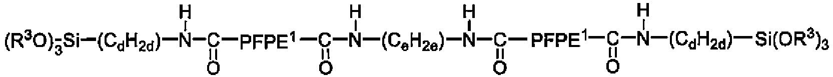 [wherein:
PFPE¹s are each independently a group represented by the formula:

   -(C_{f}F_{2f})-(OCF₂)ₐ₁-(OC₂F₄)ₐ₂-(OC₃F₆)ₐ₃-(OC₄F₈)ₐ₄-(OC₅F₁₀)ₐ₅-(OC₆F₁₂)ₐ₆-(OC₇F₁₄)ₐ₇- (OC₈F₁₆)ₐ₈-

   (wherein, f is an integer of 1 to 10, a1 and a2 are each independently an integer of 1 or more and 200 or less, a3, a4, a5, a6, a7 and a8 are each independently an integer of 0 or more and 30 or less, a sum of a1, a2, a3, a4, a5, a6, a7 and a8 is an integer of 5 or more and 200 or less, the unit represented by (C_{f}F_{2f}) is located at the left end of the group, and the order of existence of each repeating unit enclosed in parentheses with the subscript a1, a2, a3, a4, a5, a6, a7 or a8 is arbitrary in the formula.) at each appearance;
R³s are each independently an alkyl group having 1 to 4 carbon atoms at each appearance, and preferably a methyl group or an ethyl group,
ds are each independently an integer of 1 to 4 at each appearance, and preferably 3, and
e is an integer of 1 to 4.].
As the (A) PFPE-containing silane compound, the compounds represented by the above-mentioned two formulae may be used with each one kind or more in combination. The above-mentioned compound can be produced by the method described in Examples or the method similar thereto.

In a more preferred example as one embodiment, PFPE¹ in the above-mentioned formula is a perfluoro(poly)ether group represented by the formula, -(C_{f}F_{2f})-(OCF₂)ₐ₁-(OCF₂CF₂)ₐ₂₁-(OCF(CF₃))_{a2'}-(OCF₂CF₂CF₂)ₐ₃₁-(OCF₂CF(CF₃))_{a3'}-(OCF(CF₃)CF₂)_{a3"}-(OCF₂CF₂CF₂CF₂)ₐ₄-(here, f is an integer of 1 or more and 4 or less, more preferably an integer of 1 or more and 3 or less, a sum of a21 and a2' equals to a2, a sum of a31, a3' and a3" equals to a3, a1 is an integer of 0 or more and 50 or less, a2 is an integer of 0 or more and 50 or less, a3 is an integer of 0 or more and 30 or less, a4 is an integer of 0 or more and 30 or less, a sum of a1, a2, a3 and a4 is 5 or more and 200 or less, and the order of existence of each repeating unit is arbitrary in the formula.).

The terminalization rate of the (A) PFPE-containing silane compound can be determined by, for example, NMR measurement. In the case of the compound represented by the above-mentioned formula, by measuring the CF₂ group existing at the terminal of PFPE¹, that is, by measuring the CF₂ group adjacent to the amide group by ¹⁹F-NMR, how much the silyl group is introduced at the molecular terminal can be obtained. In the compound having a different structure from that of the compound represented by the above-mentioned formula, the terminalization rate can be calculated by the NMR measurement of the portion which is different depending on whether the terminal is silylated or not, and the method is well known to those skilled in the art.

In one embodiment, the (A) PFPE-containing silane compound has two or more Si atoms having a hydroxyl group or a hydrolyzable group at least one of the terminals, and preferably three or more.

The (A) PFPE-containing silane compound is not particularly limited, and in one embodiment, it can have a number average molecular weight of 5×10² to 1×10⁵. Among such a range, it is preferable to have a number average molecular weight of 2,000 to 50,000, more preferably 2,500 to 30,000, and further preferably 3,000 to 10,000. Incidentally, in the present invention, the number average molecular weight is made a value measured by ¹⁹F-NMR.

### <(B) Compound having at least two OR² groups bonded to Si atom or partially hydrolyzed condensate thereof>

(B) A compound having at least two OR² groups bonded to an Si atom (provided that (A) is excluded.) or a partially hydrolyzed condensate thereof (hereinafter, also referred to as "crosslinking agent".) is a compound which is subjected to crosslinking reaction (condensation reaction) with the (A) PFPE-containing silane compound (specifically, a hydroxyl group or a hydrolyzable group bonded to the Si atom of the (A) PFPE-containing silane compound). By containing the (A) PFPE-containing silane compound and the (B) crosslinking agent, physical properties (for example, tensile strength and elastic modulus) of a cured product obtained from the curable composition become good

The (B) crosslinking agent is a compound having at least two OR² groups bonded to an Si atom (provided that (A) is excluded.) or a partially hydrolyzed condensate thereof. In the formula, R²s are each independently a hydrogen atom or a monovalent organic group at each appearance. The monovalent organic group means a monovalent group containing a carbon. Such a monovalent organic group is not particularly limited, and there may be mentioned a monovalent hydrocarbon group. The hydrocarbon group has the same meaning as defined above.

The (B) crosslinking agent has a different structure from that of the (A) PFPE-containing silane compound. The (B) crosslinking agent preferably does not have a perfluoro(poly)ether portion. The (B) crosslinking agent may have any reactive functional groups other than the Si-OR² group, alkenyl group and alkynyl group, or may not have the same, and in the point of crosslinking property, it is preferable that it does not have other reactive functional group. In the present invention, the other reactive functional group refers to a primary amino group, an epoxy group, a (meth)acryloyl group, a (meth)acryloxy group, a mercapto group, an isocyanato group, etc.

When the (B) crosslinking agent is a compound containing two or more alkoxysilyl groups in one molecule, the group linking between the alkoxysilyl groups is preferably an -O- group; or a group having a siloxane bond in the point of crosslinking property. That is, the (B) crosslinking agent can be classified into the following three kinds by the presence or absence of a reactive functional group, and the difference in the group linking between the alkoxysilyl groups.
(B1) Crosslinking agent having no reactive functional group. Provided that when the crosslinking agent is a compound containing two or more alkoxysilyl groups in one molecule, the group linking between the alkoxysilyl groups is an -O- group; or a group having a siloxane bond.
(B2) Crosslinking agent having a reactive functional group. Provided that when the crosslinking agent is a compound containing two or more alkoxysilyl groups in one molecule, the group linking between the alkoxysilyl groups is an -O- group; or a group having a siloxane bond.
(B3) A compound containing two or more alkoxysilyl groups in one molecule, with the group linking between the alkoxysilyl groups being a group other than that selected from the group consisting of an -O- group and a group having a siloxane bond (hereinafter also referred to as an adhesive imparting agent containing two or more alkoxysilyl groups in one molecule.).

### <<(B1) Crosslinking agent having no reactive functional group>>

As the (B1) crosslinking agent having no reactive functional group, there may be mentioned, for example, an organosilicon compound represented by R¹ₙSi(OR²)₄₋ₙ (wherein, R¹s are each independently a substituted or unsubstituted monovalent hydrocarbon group at each appearance, R²s are each independently a hydrogen atom or a monovalent organic group at each appearance, and n is 0, 1 or 2.).

R¹s are preferably each independently a substituted or unsubstituted monovalent hydrocarbon group having 1 to 12 carbon atoms at each appearance. As R¹, there may be specifically mentioned an alkyl group such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group, etc.; a cycloalkyl group such as a cyclopentyl group, a cyclohexyl group, a cycloheptyl group, etc.; an aryl group such as a phenyl group, a tolyl group, a xylyl group, a naphthyl group, etc.; an aralkyl group such as a benzyl group, a phenylethyl group, a phenylpropyl group, etc.; an alkenyl group such as a vinyl group, an allyl group, a propenyl group, a butenyl group, etc.; an alkynyl group such as an ethynyl group, a propynyl group, etc.; and a group in which a part or whole of the hydrogen atoms of these groups is/are substituted with a halogen atom(s) such as fluorine, chlorine, bromine, etc., (for example, a chloromethyl group, a bromoethyl group, a chloropropyl group, a trifluoropropyl group, a 3,3,4,4,5,5,6,6,6-nonafluorohexyl group), etc.

R² are preferably each independently CH₃-, C₂H₅-, C₃H₇-, CF₃CH₂-, CH₃CO-, CH₂=C(CH₃)-, CH₃CH₂C(CH₃)=N-, (CH₃)₂N-, (C₂H₅)₂N-, CH₂=C(OC₂H₅)-, (CH₃)₂C=C(OC₈H₁₇)-, or 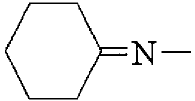 at each appearance. R² is more preferably a substituted or unsubstituted alkyl group having 1 to 3 carbon atoms, and particularly preferably CH₃- or C₂H₅-.

n is preferably 1 or 2.

As the (B1) crosslinking agent having no reactive functional group, there may be further mentioned organosilicon compounds represented by the following (B1-1) to (B1-3). In one embodiment, as the (B1) crosslinking agent having no reactive functional group, there may be mentioned a compound having at least two silanol groups in one molecule as shown by the following formula (B1-1) or (B1-2).

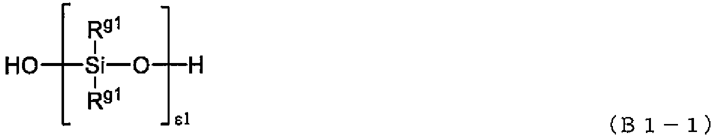

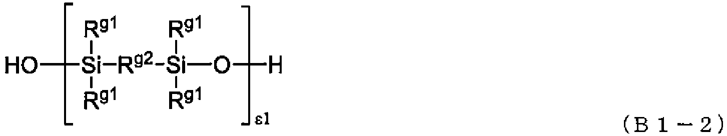

In the formulae (B1-1) and (B1-2), R^{g1}s are each independently a substituted or unsubstituted monovalent hydrocarbon group having 1 to 8 carbon atoms at each appearance. As R^{g1}, there may be specifically mentioned an alkyl group such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group, etc.; a cycloalkyl group such as a cyclopentyl group, a cyclohexyl group, a cycloheptyl group, etc.; an alkenyl group such as a vinyl group, an allyl group, a propenyl group, an isopropenyl group, a butenyl group, an isobutenyl group, a hexenyl group, a cyclohexenyl group, etc.; an aryl group such as a phenyl group, a tolyl group, a xylyl group, a naphthyl group, etc.; an aralkyl group such as a benzyl group, a phenylethyl group, a phenylpropyl group, etc.; and a group in which a part or whole of the hydrogen atoms of these groups is/are substituted with a halogen atom(s) (for example, a chloromethyl group, a bromoethyl group, a chloropropyl group, a trifluoropropyl group, a nonafluorohexyl group).

In the formula (B1-2), R^{g2}s are each independently a substituted or unsubstituted divalent hydrocarbon group having 1 to 20 carbon atoms at each appearance, and preferably having 2 to 10 carbon atoms. As R^{g2}, there may be specifically exemplified an alkylene group such as a methylene group, an ethylene group, a propylene group, a methylethylene group, a butylene group, a hexamethylene group, etc.; a cycloalkylene group such as a cyclohexylene group, etc.; an arylene group such as a phenylene group, a tolylene group, a xylylene group, a naphthylene group, a biphenylene group, etc.; a group in which a part or whole of the hydrogen atoms of these groups is/are substituted with a halogen atom(s), etc.; and a combination of these substituted or unsubstituted alkylene group(s) and arylene group(s). Among these, the R^{g2} is preferably a methylene group, an ethylene group, a propylene group, a butylene group, a hexamethylene group, a cyclohexylene group and a phenylene group, and particularly preferably an ethylene group, a propylene group, a butylene group and a phenylene group.

As the compound having a silanol group in the molecule, there may be mentioned a resinous compound constituted by bonding of one kind or a combination of two or more kinds of R^{g1}₃SiO_{1/2}, R^{g1}₂SiO_{2/2}, R^{g1}SiO_{3/2} and SiO_{4/2} units with a silanol group. The constitutional units in the above-mentioned resinous compound may be directly bonded to each other, or may be bonded to each other through a divalent or more of a hydrocarbon group.

In the formula (B1-1) or (B1-2), ε1s are each independently an integer of 1 or more at each appearance. ε1 is preferably 2 or more, more preferably 5 or more, preferably 50 or less, and more preferably 20 or less.

The compound represented by the formula (B1-1) or (B1-2) preferably has no PFPE¹ structure in the molecular structure.

The (B1) crosslinking agent having no reactive functional group can be an organosilicon compound represented by the formula (B1-3): 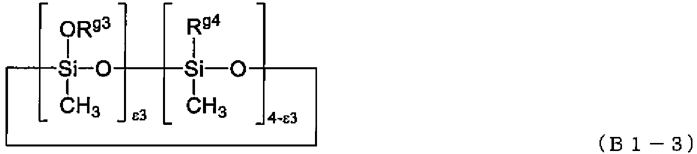 Here, the unit containing OR^{g3} and the unit containing R^{g4} do not have to be arranged as shown in the above-mentioned formula (B1-3) and, for example, it can be understood that the arrangement order thereof is arbitrary, where both exist alternately, etc.

In the formula (B1-3), R^{g3} has the same meaning as R². The above-mentioned R^{g3} is a portion capable of reacting a hydroxyl group or a hydrolyzable group bonded to the Si atom of the (A) PFPE-containing silane compound.

R^{g3} is preferably a monovalent organic group.

In the formula (B1-3), R^{g3} is more preferably each independently CH₃-, C₂H₅-, C₃H₇-, CF₃CH₂-, CH₃CO-, CH₂=C(CH₃)-, CH₃CH₂C(CH₃)=N-, (CH₃)₂N-, (C₂H₅)₂N-, CH₂=C(OC₂H₅)-, (CH₃)₂C=C(OC₈H₁₇)-, or 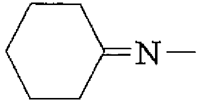 at each appearance.

In the formula (B1-3), R^{g4}s are each independently a monovalent organic group at each appearance. R^{g4} is preferably a substituted or unsubstituted monovalent hydrocarbon group, and more preferably a substituted or unsubstituted monovalent hydrocarbon group having 1 to 12 carbon atoms. As R^{g4}, there may be specifically mentioned an alkyl group such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group, etc.; a cycloalkyl group such as a cyclopentyl group, a cyclohexyl group, a cycloheptyl group, etc.; an aryl group such as a phenyl group, a tolyl group, a xylyl group, a naphthyl group, etc.; an aralkyl group such as a benzyl group, a phenylethyl group, a phenylpropyl group, etc.; an alkenyl group such as a vinyl group, an allyl group, a propenyl group, a butenyl group, etc.; an alkynyl group such as an ethynyl group, a propynyl group, etc.; and a group in which a part or whole of the hydrogen atoms of these groups is/are substituted with a halogen atom(s) such as fluorine, chlorine, bromine, etc., (for example, a chloromethyl group, a bromoethyl group, a chloropropyl group, a trifluoropropyl group, a 3,3,4,4,5,5,6,6,6-nonafluorohexyl group, etc.

In the formula (B1-3), ε3 is 2 or 3.

The (B1) crosslinking agent having no reactive functional group is preferably a compound represented by the formula: R¹ₙSi(OR²)₄₋ₙ.

In a preferred embodiment, as the (B1) crosslinking agent having no reactive functional group, there may be exemplified an alkoxy group-containing compound such as tetramethoxysilane, methyltrimethoxysilane, vinyltrimethoxysilane, phenyltrimethoxysilane, tetraethoxysilane, methyltriethoxysilane, vinyltriethoxysilane, phenyltriethoxysilane, tetrapropoxysilane, tetraisopropoxysilane, dimethyldimethoxysilane, vinylmethyldimethoxysilane, dimethyldiethoxysilane and 3-chloropropyltrimethoxysilane and a partially hydrolyzed condensate thereof; a substituted alkoxy group-containing compound such as tetrakis(2-ethoxyethoxy)silane, methyltris(2-methoxyethoxy)silane, vinyl(2-ethoxyethoxy)silane and phenyltris(2-methoxyethoxy)silane and a partially hydrolyzed condensate thereof; an enoxy group-containing compound such as methyltripropenoxysilane, methyltriisopropenoxysilane, vinyltriisopropenoxysilane, phenyltriisopropenoxysilane, dimethyldiisopropenoxysilane and methylvinyldiisopropenoxysilane and a partially hydrolyzed condensate thereof; an acyloxy group-containing compound such as methyltriacetoxysilane and a partially hydrolyzed condensate thereof, etc. Component (B1) may be used in one kind alone or may be used in two or more kinds simultaneously.

### <<(B2) Crosslinking agent having reactive functional group>>

The (B2) crosslinking agent having a reactive functional group is a compound not only contributing to the crosslinking reaction (condensation reaction) of the (A) PFPE-containing silane compound, but also functioning as an adhesive imparting agent. As Component (B2), a compound represented by 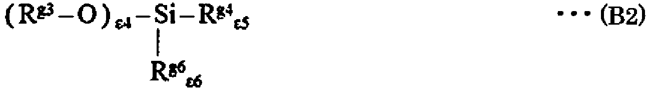 can be used.

In the formula (B2), R^{g3} and R^{g4} have the same meanings as defined above.

In the formula (B2), R^{g6}s each independently represent R^{g8}-R^{g7}- at each appearance.

R^{g7}s each independently represent a single bond, an oxygen atom or a divalent organic group at each appearance. The divalent organic group is as defined above.

R^{g7} is preferably an alkylene group having 1 to 10 carbon atoms, or a group having 1 to 10 carbon atoms and containing a nitrogen atom or an oxygen atom in the main chain.

R^{g7} is more preferably
an alkylene group having 1 to 3 carbon atoms,

CH₂CH₂-NH-CH₂CH₂CH₂,

or

CH₂-O-CH₂CH₂CH₂.

R^{g8} is a reactive functional group. The above-mentioned R^{g8} is preferably each independently a primary amino group, an epoxy group, a (meth)acryloyl group, a (meth)acryloxy group, a mercapto group or an isocyanato group at each appearance, and more preferably a primary amino group.

In the formula (B2), ε4 is 2 or 3, and more preferably 3. In the formula (B2), ε5 is 0 or 1. In the formula (B2), ε6 is 1 or 2, and preferably 1. Provided that a sum of ε4, ε5 and εδ is 4. Particularly preferably, ε4 is 3, ε5 is 0, and ε6 is 1.

As the (B2) crosslinking agent having a reactive functional group, there may be exemplified by, for example, a substituted or unsubstituted amino group-containing silane such as 3-aminopropyltrimethoxysilane, 3-aminopropyltriethoxysilane, 3-aminopropyltriisopropoxysilane, 3-aminopropyltriacetamidesilane, N-(2-aminoethyl)-3-aminopropyltrimethoxysilane, N-(2-aminoethyl)-3-aminopropyltriethoxysilane, N-methyl-3-aminopropyltrimethoxysilane, N-phenyl-3-aminopropyltrimethoxysilane, N,N-dimethyl-3-aminopropyltrimethoxysilane; an epoxy group-containing silane such as 3-glycidoxypropyltrimethoxysilane, 3-glycidoxypropyltriethoxysilane, 3-glycidoxypropylmethyldimethoxysilane and 3,4-epoxycyclohexylethyltrimethoxysilane; an isocyanato group-containing silane such as 3-isocyanatopropyltrimethoxysilane, 3-isocyanatopropyltriethoxysilane and 3-isocyanatopropylmethyldimethoxysilane; a (meth)acryloxy group-containing silane such as 3-acryloxypropyltrimethoxysilane, 3-methacryloxypropyltrimethoxysilane, 3-acryloxypropylmethyldimethoxysilane, 3-methacryloxypropylmethyldimethoxysilane and 3-methacryloxypropylmethyldiethoxy-silane; and a mercapto group-containing silane such as 3-mercaptopropyltrimethoxysilane. Component (B2) may be used in one kind alone or may be used in two or more kinds simultaneously.

### <<(B3) Adhesive imparting agent containing two or more alkoxysilyl groups in one molecule>>

The curable composition preferably contains (B3) an adhesive imparting agent containing two or more alkoxysilyl groups in one molecule as a component other than (B1) and (B2). Component (B3) is a compound not only contributing to a crosslinking reaction (condensation reaction) of the (A) PFPE-containing silane compound, but also functioning as an adhesive imparting agent. By formulating Component (B3), adhesiveness of a cured product of the composition to a substrate such as glass, metal, plastic, etc., can be markedly improved.

Component (B3) may have a reactive functional group, or may not have the same. In Component (B3), the group linking between the alkoxysilyl groups is a group other than that selected from the group consisting of an -O- group and a group having a siloxane bond. From the viewpoint of adhesiveness to a substrate, the group that links between the alkoxysilyl groups is preferably a group containing a nitrogen atom and/or a carbonyl group, and more preferably a group further containing, in addition to a nitrogen atom and/or a carbonyl group, an -O- group, an alkenylene group and/or an alkylene group.

As the group linking between the alkoxysilyl groups of Component (B3), it is further preferably a group containing

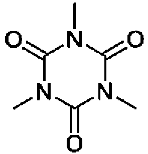

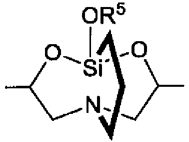

-O-C(=O)-C=C-C(=O)-O-,

or 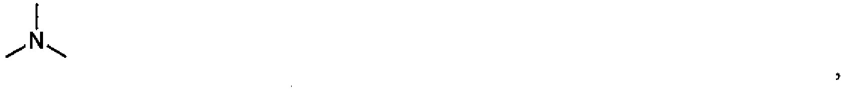 and particularly preferably

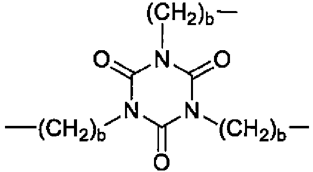

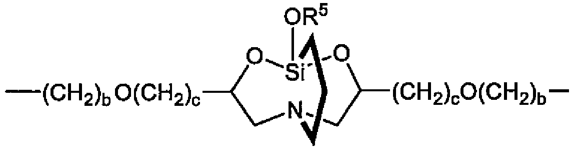

-(CH₂)_{b}-O-C(=O)-C=C-C(=O)-O-(CH₂)_{b}-,

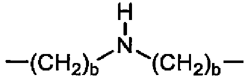

or 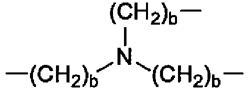 (wherein, R⁵s are each independently an alkyl group having 1 to 4 carbon atoms at each appearance, and preferably a methyl group or an ethyl group, and "b"s and "c"s are each independently an integer of 1 to 8 at each appearance, and preferably an integer of 1 to 4.).

From the viewpoint of adhesiveness to the substrate, Component (B3) is preferably a compound selected from the group consisting of an alkoxysilyl group-containing isocyanurate compound, an alkoxysilyl group-containing carbasilatrane compound, an alkoxysilyl group-containing fumaric acid ester compound and an alkoxysilyl group-containing amine compound, and particularly preferably an alkoxysilyl group-containing isocyanurate compound or an alkoxysilyl group-containing carbasilatrane compound.

As the alkoxysilyl group-containing isocyanurate compound, there may be mentioned, for example, tris(3-trialkoxysilylpropyl)isocyanurate such as tris(3-trimethoxysilylpropyl)isocyanurate, tris(3-triethoxysilylpropyl)isocyanurate, etc.

As the alkoxysilyl group-containing carbasilatrane compound, there may be mentioned, for example, the following compounds:

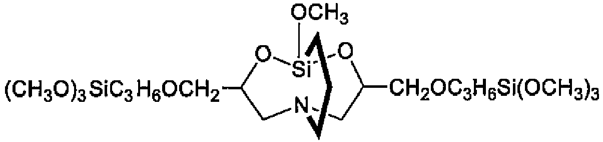

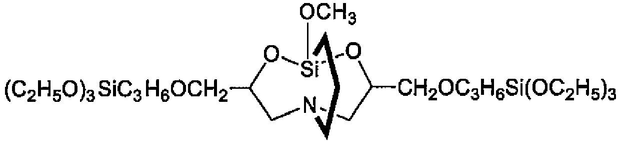

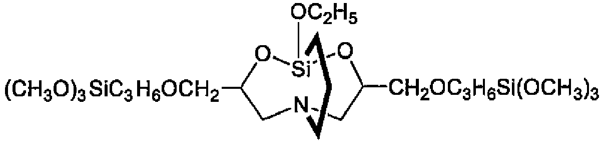

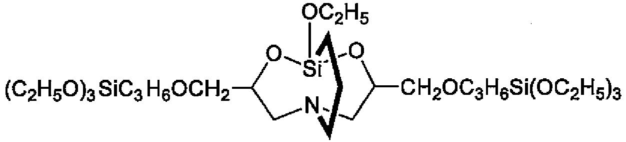

As the alkoxysilyl group-containing fumaric acid ester compound, there may be mentioned, for example, bis(3-trimethoxysilylpropyl)fumarate, bis(3-triethoxy-silylpropyl)fumarate, etc. As the alkoxysilyl group-containing amine compound, there may be mentioned bis(3-trimethoxysilylpropyl)amine, bis(3-triethoxysilylpropyl)amine, tris(3-trimethoxysilylpropyl)amine, tris(3-triethoxysilylpropyl)amine, etc.

Component (B3) may be a compound in which a part of the hydrogen atom(s) is substituted with a fluorine atom(s). Component (B3) may be used in one kind alone or may be used in two or more kinds simultaneously.

In one embodiment, the (B) crosslinking agent does not have a group represented by PFPE¹ in the molecular chain.

In one embodiment, a molecular weight of the (B) crosslinking agent is 1,000 or less, preferably 600 or less, and more preferably 250 or less. The lower limit of the molecular weight of the crosslinking agent may be 90 or more, and may be 120 or more.

The (B) crosslinking agent may be used in one kind alone or may be used in two or more kinds simultaneously. When two or more kinds are used in combination, it may be either of the case where (B1) is used in combination of two or more kinds, (B2) is used in combination of two or more kinds, (B3) is used in combination of two or more kinds, or at least two kinds of (B1), (B2) and (B3) are used in combination of each one or more kinds. From the viewpoint of crosslinking property, the (B) crosslinking agent preferably contains at least (B1) with one or more kinds. From the viewpoints of crosslinking property and adhesiveness to the substrate, it is preferable to use (B1) and (B3), (B2) and (B3) or (B1), (B2) and (B3) in combination, and more preferable to use (B1) and (B3) in combination. Also, the composition to which (B3) is formulated can make the fluidity value lower, and can make the composition suppressed in fluidity so that it is preferable.

The (B) crosslinking agent can be contained, for example, in an amount of 0.1 part by mass or more, and specifically in an amount of 0.3 part by mass or more, and can be contained in an amount of 60 parts by mass or less, specifically in an amount of 40 parts by mass or less, and more specifically in an amount of 20 parts by mass or less based on 100 parts by mass of the (A) PFPE-containing silane compound in the curable composition.

The (B) crosslinking agent can be contained, for example, in an amount of 0.1 to 60 parts by mass, specifically in an amount of 0.3 to 40 parts by mass, and more specifically in an amount of 0.3 to 20 parts by mass based on 100 parts by mass of the (A) PFPE-containing silane compound in the curable composition.

The (B) crosslinking agent can be contained, for example, in an amount of 1 mol or more of the -OR² group, and specifically in an amount of 2 mol or more based on 1 mol of a hydroxyl group or a hydrolyzable group bonded to the Si atom of the (A) PFPE-containing silane compound in the curable composition. The (B) cross-linking agent can be contained, for example, in an amount of 30 mol or less of the -OR² group, specifically in an amount of 20 mol or less, and more specifically in an amount of 10 mol or less based on 1 mol of a hydroxyl group or a hydrolyzable group bonded to the Si atom of the (A) PFPE-containing silane compound.

The (B) crosslinking agent can contain, for example, the -OR² group in the range of 1 to 30 mol, and specifically in the range of 2 to 20 mol based on 1 mol of a hydroxyl group or a hydrolyzable group bonded to the Si atom of the (A) PFPE-containing silane compound.

A total content of Components (B1) and (B2) based on Component (A) is preferably 0.1% by mass or more from the viewpoint of crosslinking property, more preferably 0.3% by mass or more, and also preferably 30% by mass or less, more preferably 20% by mass or less, and particularly preferably 10% by mass or less.

A total content of Components (B1) and (B2) based on Component (A) is preferably 0.1 to 30% by mass from the viewpoint of crosslinking property, more preferably 0.3 to 20% by mass, and particularly preferably 0.3 to 10% by mass.

A content of Component (B1) is preferably 10 to 100% by mass based on the sum of Components (B1) and (B2), more preferably 20 to 100% by mass, and particularly preferably 50 to 100% by mass. A preferred content of Components (B1) and (B2) to Component (A) can be calculated from the preferred content of the sum of Components (B1) and (B2) to Component (A) and the preferred content of Component (B1) to the sum of Components (B1) and (B2), respectively.

A content of Component (B3) based on Component (A) is preferably 0.01% by mass or more from the viewpoint of adhesiveness to the substrate, more preferably 0.02% by mass or more, and further preferably 0.05% by mass or more, and also preferably 30% by mass or less, more preferably 20% by mass or less, and further preferably 10% by mass or less.

A content of Component (B3) based on Component (A) is preferably 30% by mass or less from the viewpoint of adhesiveness to the substrate, more preferably 0.01 to 30% by mass, further preferably 0.02 to 20% by mass, and particularly preferably 0.05 to 10% by mass.

A content of Component (B3) based on the sum of Components (B1) and (B3) is preferably 0 to 90% by mass, more preferably 1 to 70% by mass, and particularly preferably 1 to 50% by mass.

### <(C) Condensation catalyst>

The (C) condensation catalyst (hereinafter, also referred to as "catalyst".) is a component to promote hydrolysis condensation reaction of the (A) PFPE-containing silane compound and the (B) crosslinking agent.

As the above-mentioned condensation catalyst, a metal-based catalyst, an organic acid-based catalyst, an inorganic acid-based catalyst, a base-based catalyst, etc., can be used. From the viewpoint of curing rate of the composition, as the condensation catalyst, it is preferable to be a metal-based catalyst.

As the metal atom contained in the above-mentioned metal-based catalyst, there may be mentioned, for example, titanium, zirconium, tin, etc.

As an embodiment of the above-mentioned metal-based catalyst, a compound having an alkoxide (-O-R^{h}) as a ligand can be used. As R^{h}, an alkyl group having 1 to 4 carbon atoms is preferable. When such a catalyst is used, the condensation reaction is more promoted.

As the above-mentioned R^{h}, an alkyl group having 1 to 3 carbon atoms is more preferable. When a catalyst having an alkyl group as mentioned above is used, the condensation reaction is particularly promoted. The above-mentioned catalyst is easily dissolved or dispersed in the curable composition so that it can contribute to promotion of a uniform reaction. The above-mentioned catalyst contains less foreign substances so that it can contribute to formation of a transparent cured product of the curable composition.

As preferable metal-based catalyst, there may be exemplified a carboxylic acid metal salt such as iron octoate, manganese octoate, zinc octoate, tin naphthenate, tin caprylate and tin oleate; an organic tin compound such as dibutyltin diacetate, dibutyltin dioctoate, dibutyltin dilaurate, dibutyltin dioleate, diphenyltin diacetate, dibutyltin oxide, dibutyltin dimethoxide, dibutylbis(triethoxysiloxy)tin, dioctyltin dilaurate and dimethyltin dineodecanoate; an organic titanium compound such as tetraethoxy titanium, tetrapropoxy titanium, tetraisopropoxy titanium, tetra-n-butoxy titanium, tetraisobutoxy titanium, diisopropoxy titanium bis(ethylacetoacetate) and 1,3-propanedioxy titanium bis(ethylacetoacetate); organic aluminum such as aluminum trisacetylacetonate, aluminum trisethyl acetoacetate, diisopropoxyaluminum ethyl acetoacetate and triethoxyaluminum, etc.; and an organic zirconium compound such as zirconium tetraacetylacetonate, tetraisopropoxy zirconium, tetrapropoxy zirconium, tetra-n-butoxy zirconium, tetraisobutoxy zirconium, tetra-n-propoxy zirconium, tetrabutoxy zirconium, tributoxy zirconium acetylacetonate, tributoxy zirconium stearate, etc.

As the above-mentioned organic acid-based catalyst, there may be mentioned, for example, a compound having carboxylic acid, sulfonic acid or phosphoric acid, and specifically mentioned acetic acid, trifluoroacetic acid, methanesulfonic acid, toluenesulfonic acid, an alkylphosphoric acid, etc.

As the above-mentioned inorganic acid-based catalyst, there may be mentioned, for example, hydrochloric acid, sulfuric acid, etc.

As the above-mentioned base-based catalyst, there may be mentioned, ammonia, triethylamine, diethylamine; a dialkylhydroxylamine such as dimethyl-hydroxyamine, diethylhydroxylamine, etc.; and a guanidyl compound such as tetramethylguanidine, guanidyl group-containing silane or siloxane, etc.; and the like.

Among these, from the viewpoint of the curing rate of the composition, the (C) catalyst is preferably an organic tin compound or an organic titanium compound, and particularly preferably dibutylbis(triethoxysiloxy) tin, dimethyltin dineodecanoate or diisopropoxy titanium bis(ethyl acetoacetate).

The (C) catalyst is preferably contained in an amount of 0.01 to 10.0 parts by mass, and more preferably in an amount of 0.03 to 5.0 parts by mass based on 100 parts by mass of the (A) PFPE-containing silane compound in the curable composition.

The (C) catalyst may be used in one kind alone or may be used in two or more kinds simultaneously.

### <(D) Inorganic filler having primary particle diameter of 0.01 to 0.1 µm>

The (D) inorganic filler having a primary particle diameter of 0.01 to 0.1 µm (hereinafter also referred to as an inorganic filler.) is a component to suppress fluidity of the composition. The primary particle diameter of the (D) inorganic filler is 0.01 to 0.1 µm. By making the primary particle diameter of the (D) inorganic filler in the above-mentioned range, the composition which does not flow out after being coated and whose fluidity is suppressed can be obtained. The primary particle diameter of the (D) inorganic filler is preferably 0.02 to 0.08 µm, and more preferably 0.03 to 0.07 µm. The measured value of the primary particle diameter is a value measured by the electron microscope method.

The fluidity value measured by the fluidity test mentioned below is an index of fluidity of the composition. The fluidity value of the composition is preferably 15 mm or less, more preferably 10 mm or less, and particularly preferably 5 mm or less. When the fluidity value is in the above-mentioned range, the composition does not flow out after being coated, and the composition suppressed in fluidity can be made. When the fluidity value of the composition exceeds 15 mm, the composition spreads too much at the time of being coated, and sealing property of a cured product of the composition is likely poor.
Fluidity test: 0.1 g of the curable composition is coated onto an aluminum plate inclined at 45°, and a distance (mm) flowed after 10 seconds is measured and the value is set to be the fluidity value.

The fluidity value of the composition can be adjusted by the kind and the formulation amount of the (A) PFPE-containing silane compound; the kind, the particle diameter and the formulation amount of the filler; presence or absence of addition of a solvent, and its formulation amount, etc. Among these, an influence which a primary particle diameter of the filler exerts on the fluidity value of the composition is large, and by formulating the (D) inorganic filler having a primary particle diameter of 0.01 to 0.1 µm to the composition, it becomes easy to make the fluidity value of the composition 15 mm or less.

As the (D) inorganic filler, carbon black or calcium carbonate is used. The (D) inorganic filler is more preferably carbon black.

An amount of Component (D) to be formulated is preferably adjusted appropriately so that the fluidity value of the curable composition by the fluidity test becomes 15 mm or less. Specifically, the (D) inorganic filler is preferably contained in the composition in an amount of 1 to 500 parts by mass based on 100 parts by mass of the (A) PFPE-containing silane compound, preferably 1 to 200 parts by mass, and more preferably 1 to 100 parts by mass.

The (D) inorganic filler may be used in one kind alone or may be used in two or more kinds simultaneously.

### <Additional components>

The curable composition may contain additional components as long as the effects of the present invention are not impaired. As such components, there may be mentioned (E) a filler other than Component (D), (F) a solvent, (G) a PFPE-containing silane compound (b), (H) various kinds of additives, etc.

### <(E) Filler other than Component (D)>

The curable composition may further contain a (E) filler other than Component (D) (hereinafter also referred to as (E) a filler.). As the (E) filler, there may be exemplified materials having a primary particle diameter of less than 0.01 µm or exceeding 0.1 µm, among the inorganic fillers exemplified in the (D) inorganic filler; synthetic resin powders such as polymethylsilsesquioxane, polystyrene, polyvinyl chloride, polypropylene, etc.; and fibrous fillers such as asbestos, glass fibers, organic fibers, etc., and the (E) filler are selected depending on coating workability, and physical properties required for a rubber-like elastic body obtained by curing. Further, as Component (E), silica can be formulated.

The (E) filler can be contained in the curable composition in an amount of, for example, 200 parts by mass or less based on 100 parts by mass of the (A) PFPE-containing silane compound, specifically in an amount of 1 to 100 parts by mass, and more specifically in an amount of 1 to 50 parts by mass.

### (F) Solvent

The curable composition may contain a solvent(s). In this case, depending on the use and purpose of the curable composition, it can be used by dissolving in a suitable solvent (for example, a fluorine atom-containing solvent) with a desired concentration. A concentration of the above-mentioned solvent may be, for example, 80 parts by mass or less based on 100 parts by mass of the curable composition, may be 50 parts by mass or less, may be 30 parts by mass or less, and may be 20 parts by mass or less. From the viewpoint of adjusting a viscosity of the curable composition, it is preferable to contain a solvent. By containing the solvent, handleability of the curable composition can be good. In addition, a shape of a cured product formed from the curable composition can be easily controlled, and for example, formation of a cured product with a large thickness can be facilitated.

As the above-mentioned solvent, there may be mentioned, for example,:
a fluorine atom-containing solvent selected from the group consisting of perfluorohexane, CF₃CF₂CHCl₂, CF₃CH₂CF₂CH₃, CF₃CHFCHFC₂F₅, 1,1,1,2,2,3,3,4,4,5,5,6,6-tridecafluorooctane, 1,1,2,2,3,3,4-heptafluorocyclopentane ((ZEORORA H (trade name), etc.), C₄F₉OCH₃, C₄F₉OC₂H₅, CF₃CH₂OCF₂CHF₂, C₆F₁₃CH=CH₂, xylene hexafluoride, perfluorobenzene, methyl pentadecafluoroheptyl ketone, trifluoroethanol, pentafluoropropanol, hexafluoroisopropanol, HCF₂CF₂CH₂OH, methyltrifluoromethanesulfonate, trifluoroacetic acid and CF₃O(CF₂CF₂O)_{w1}(CF₂O)_{w2}CF₂CF₃ [wherein, w1 and w2 are each independently an integer of 0 or more and 1,000 or less, and the order of existence of each recurring units enclosed with parentheses to which w1 or w2 are applied is arbitrary in the formula, provided that a sum of w1 and w2 is 1 or more.], 1,1-dichloro-2,3,3,3-tetrafluoro-1-propene, 1,2-dichloro-1,3,3,3-tetrafluoro-1-propene, 1,2-dichloro-3,3,3-trifluoro-1-propene, 1,1-dichloro-3,3,3-trifluoro-1-propene, 1,1,2-trichloro-3,3,3-trifluoro-1-propene, 1, 1, 1,4,4,4-hexafluoro-2-butene, ethyl perfluorobutyl ether and methyl perfluorobutyl ether, etc. These solvents can be used alone, or as a mixture of two or more kinds.

Incidentally, when the cured product obtained from the curable composition is adhered to various kinds of substrates, various kinds of primers can be used in combination.

In one embodiment, when the curable composition is used, the composition may be used by further diluting with a solvent depending on the use and the purpose thereof. As the solvent to be used for dilution, the fluorine atom-containing solvent exemplified above can be used. For example, it may be used by dissolving with 1,3-bis(trifluoromethyl)benzene, Fluorinert (available from 3M Company), perfluorobutyl methyl ether, perfluorobutyl ethyl ether, etc., as the solvent with a desired concentration. In particular, for the use of a thin film coating, it is preferable to use the above-mentioned solvent.

### (G) PFPE-containing silane compound (b)

The curable composition can further contain a compound represented by the following formula (G-1), (G-2), (G-3) or (G-4) (hereinafter, it may be also referred to as "PFPE-containing silane compound (b)").

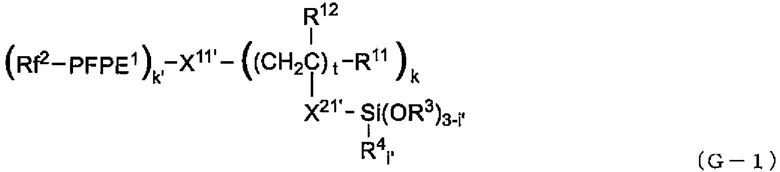

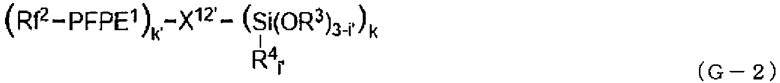

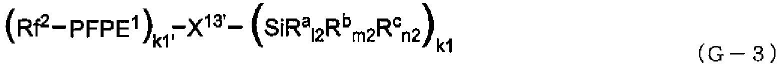

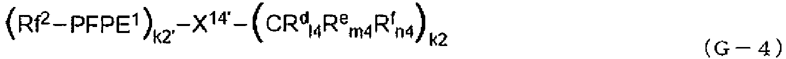

In the formulae (G-1), (G-2), (G-3) and (G-4), with regard to the portion that overlaps with the description regarding (A-1), (A-2), (A-3) and (A-4), the description may be sometimes omitted.

In the above-mentioned formulae, Rf²s each independently represent an alkyl group having 1 to 16 carbon atoms which may be substituted with one or more fluorine atoms at each appearance.

The "alkyl group having 1 to 16 carbon atoms" in the above-mentioned alkyl group having 1 to 16 carbon atoms which may be substituted with one or more fluorine atoms may be linear or may be branched, preferably a linear or branched alkyl group having 1 to 6 carbon atoms, particularly an alkyl group having 1 to 3 carbon atoms, and more preferably a linear alkyl group having 1 to 3 carbon atoms.

The above-mentioned Rf² is preferably an alkyl group having 1 to 16 carbon atoms substituted with 1 or more fluorine atoms, more preferably a CF₂H-C₁₋₁₅ fluoroalkylene group or a C₁₋₁₆ perfluoroalkyl group, and further preferably a C₁₋₁₆ perfluoroalkyl group.

The perfluoroalkyl group having 1 to 16 carbon atoms may be linear or may be branched, preferably a linear or branched perfluoroalkyl group having 1 to 6 carbon atoms, particularly a perfluoroalkyl group having 1 to 3 carbon atoms, more preferably a linear perfluoroalkyl group having 1 to 3 carbon atoms, and specifically -CF₃, - CF₂CF₃, or -CF₂CF₂CF₃.

In the formula (G-1), k is an integer of 1 to 9, and k' is an integer of 1 to 9. When k is an integer of 2 or more, the compound represented by the formula (G-1) corresponds to the (A) PFPE-containing silane compound. k and k' can vary depending on the number of the valence of X^{11'}. In the formula (G-1), a sum of k and k' is the same as the number of the valence of X^{11'}. For example, when X^{11'} is a 10 valent organic group, a sum of k and k' is 10 and, for example, it can take k is 9 and k' is 1, k is 5 and k' is 5, or k is 1 and k' is 9. Also, when X^{11'} is a divalent organic group, k and k' are 1. In the formula (G-1), when X^{11'} is a single bond, k and k' are 1.

The above-mentioned X^{11'} is preferably a 2 to 7 valent, more preferably a 2 to 4 valent, and further preferably a divalent organic group.

In one embodiment, X^{11'} is a 2 to 4 valent organic group, k is 1 to 3, and k' is 1.

In another embodiment, X^{11'} is a divalent organic group, k is 1, and k' is 1.

In the above-mentioned formula (G-1), i's are each independently an integer of 0 to 3 at each appearance, preferably 0 to 2, and more preferably 0. It is preferable that, in the formula, at least one of i' is an integer of 0 to 2, that is, not all i's are 3 at the same time. In other words, in the formula (G-1), at least one OR³ is present.

In the formula (G-2), k is an integer of 1 to 9, and k' is an integer of 1 to 9. When k is an integer of 2 or more, the compound represented by the formula (G-2) corresponds to the (A) PFPE-containing silane compound. k and k' can vary depending on the number of the valence of X^{12'}. In the formula (G-2), a sum of k and k' is the same as the number of the valence of X^{12'}. For example, when X^{12'} is a 10 valent organic group, a sum of k and k' is 10 and, for example, it can take k is 9 and k' is 1, k is 5 and k' is 5, or k is 1 and k' is 9. Also, when X^{12'} is a divalent organic group, k and k' are 1. In the formula (G-2), when X^{12'} is a single bond, k and k' are 1.

The above-mentioned X^{12'} is preferably a 2 to 7 valent, more preferably a 2 to 4 valent, and further preferably a divalent organic group.

In one embodiment, X^{12'} is a 2 to 4 valent organic group, k is 1 to 3, and k' is 1.

In another embodiment, X^{12'} is a divalent organic group, k is 1, and k' is 1.

In the formula (G-2), i' has the same meaning as defined in (G-1).

In the above-mentioned formula (G-3), k1 is an integer of 1 to 9, and k1' is an integer of 1 to 9. When k1 is an integer of 2 or more, the compound represented by the formula (G-3) corresponds to the (A) PFPE-containing silane compound. k1 and k1' can vary depending on the number of the valences of X^{13'}. In the formula (G-3), a sum of k1 and k1' is the same as the number of the valence of X^{13'}. For example, when X^{13'} is a 10 valent organic group, a sum of k1 and k1' is 10 and, for example, it can take k1 is 9 and k1' is 1, k1 is 5 and k1' is 5, or k1 is 1 and k1' is 9. Also, when X^{13'} is a divalent organic group, k1 and k1' are 1. In the formula (G-3), when X^{13'} is a single bond, k1 and k1' are 1.

The above-mentioned X^{13'} is preferably a 2 to 7 valent, more preferably a 2 to 4 valent, further preferably a divalent organic group.

In one embodiment, X^{13'} is a 2 to 4 valent organic group, k1 is 1 to 3, and k1' is 1.

In another embodiment, X^{13'} is a divalent organic group, k1 is 1, and k1' is 1.

In the above-mentioned formula (G-4), k2 is an integer of 1 to 9, and k2' is an integer of 1 to 9. When k2 is an integer of 2 or more, the compound represented by the formula (G-4) corresponds to the (A) PFPE-containing silane compound. k2 and k2' can vary depending on the number of the valences of X^{14'}. In the formula (G-4), a sum of k2 and k2' is the same as the number of the valence of X^{14'}. For example, when X^{14'} is a 10 valent organic group, a sum of k2 and k2' is 10 and, for example, it can take k2 is 9 and k2' is 1, k2 is 5 and k2' is 5, or k2 is 1 and k2' is 9. Also, when X^{14'} is a divalent organic group, k2 and k2' are 1. In the formula (G-4), when X^{14'} is a single bond, k2 and k2' are 1.

The above-mentioned X^{14'} is preferably a 2 to 7 valent, more preferably a 2 to 4 valent, further preferably a divalent organic group.

In one embodiment, X^{14'} is a 2 to 4 valent organic group, k2 is 1 to 3, and k2' is 1.

In another embodiment, X^{14'} is a divalent organic group, k2 is 1, and k2' is 1.

In one embodiment, the PFPE-containing silane compound (b) can be a compound represented by the formula (G-1), (G-3) or (G-4). By using such a silane compound, adhesiveness to a substrate can be improved.

In one embodiment, the PFPE-containing silane compound (b) has two or more Si atoms having a hydroxyl group or a hydrolyzable group at the terminal, and preferably has 3 or more. In this case, the PFPE-containing silane compound (b) can be classified into the (A) PFPE-containing silane compound.

In one embodiment, in the curable composition, an amount of the compound represented by the formulae (G-1), (G-2), (G-3) and (G-4) is 0.1 mol% or more and 35 mol% or less based on a sum of the compound represented by the formulae (A-1), (A-2), (A-3) and (A-4) (hereinafter, also referred to as "Component (1)") and the compound represented by the formulae (G-1), (G-2), (G-3) and (G-4) (hereinafter, also referred to as "Component (2)"). A lower limit of a content of the compound represented by the formulae (G-1), (G-2), (G-3) and (G-4) based on a sum of Component (1) and Component (2) can be preferably 0.1 mol%, more preferably 0.2 mol%, further preferably 0.5 mol%, further more preferably 1 mol%, particularly preferably 2 mol%, and specifically 5 mol%. An upper limit of a content of the compound represented by the formulae (G-1), (G-2), (G-3) and (G-4) based on a sum of Component (1) and Component (2) can be preferably 35 mol%, more preferably 30 mol%, further preferably 20 mol%, and further more preferably 15 mol% or 10 mol%. A content of the compound represented by the formulae (G-1), (G-2), (G-3) and (G-4) based on a sum of Component (1) and Component (2) is preferably 0.1 mol% or more and 30 mol% or less, more preferably 0.1 mol% or more and 20 mol% or less, further preferably 0.2 mol% or more and 10 mol% or less, further more preferably 0.5 mol% or more and 10 mol% or less, and particularly preferably 1 mol% or more and 10 mol% or less, and for example, 2 mol% or more and 10 mol% or less, or 5 mol% or more and 10 mol% or less. By making the contents of Component (1) and Component (2) within such ranges, the curable composition can contribute to formation of a cured product having good friction durability.

In the curable composition, a combination of Component (1) and Component (2) is preferably a combination of a compound represented by the formula (A-1) and a compound represented by the formula (G-1), a combination of a compound represented by the formula (A-2) and a compound represented by the formula (G-2), a combination of a compound represented by the formula (A-3) and a compound represented by the formula (G-3), or a combination of a compound represented by the formula (A-4) and a compound represented by the formula (G-4).

The compounds represented by the formula (A-1) and the formula (G-1) preferably have "t" of 2 or more, more preferably an integer of 2 to 10, and further preferably an integer of 2 to 6. By making "t" 2 or more, a plurality of Si atoms having OR³ are present, and higher durability (for example, friction durability) can be obtained in a cured product formed by the curable composition.

The compounds represented by the formula (A-3) and the formula (G-3) preferably have 12 of 2 or 3, and more preferably 3.

In a preferred embodiment, the compound represented by the formula (A-3) has a structure represented by -Si-(Z³-SiR⁷²₃)₂ or -Si-(Z³-SiR⁷²₃)₃ at the terminal, and further preferably has a structure represented by -Si-(Z³-SiR⁷²₃)₃; the compound represented by the formula (G-3) has a structure represented by -Si-(Z³-SiR⁷²₃)₂ or -Si-(Z³-SiR⁷²₃)₃ at the terminal, and further preferably has a structure represented by -Si-(Z³-SiR⁷²₃)₃. By making the terminal such a structure, higher durability (for example, friction durability) can be obtained in a cured product formed by the curable composition.

As the group represented by the above-mentioned -Si-(Z³-SiR⁷²₃)₂, there may be specifically mentioned
a group in which R^{a} is represented by -Z³-SiR⁷²₃, and a sum of m1 and n1 is 1 in -Si-R^{a}₂R^{b}ₘ₁R^{c}ₙ₁,
a group in which R^{a} is represented by -Z³-SiR⁷²₃, and a sum of m2 and n2 is 1 in -Si-R^{a}₂R^{b}ₘ₂R^{c}ₙ₂, or
a group in which the terminal of R⁷¹ is represented by -Z³-SiR⁷²₃, and a sum of q1 and r1 is 1 in -Si-R⁷¹₂R⁷²_{q1}R⁷³ᵣ₁.

The compounds represented by the formula (A-4) and the formula (G-4) preferably have m4 of 2 or 3, and more preferably 3.

In a preferred embodiment, the compound represented by the formula (A-4) has a -C-(Y-SiR⁸⁵₃)₂ (specifically, -C-(Y-SiR⁸⁵₃)₂R⁸³) or -C-(Y-SiR⁸⁵₃)₃ structure at the terminal, and further preferably has a -C-(Y-SiR⁸⁵₃)₃ structure; and the compound represented by the formula (G-4) has a -C-(Y-SiR⁸⁵₃)₂ (specifically, -C-(Y-SiR⁸⁵₃)₂R⁸³) or -C-(Y-SiR⁸⁵₃)₃ structure at the terminal, and further preferably has a -C-(Y-SiR⁸⁵₃)₃ structure. By making the terminal such a structure, the curable composition contributes to formation of a cured product having higher durability (for example, friction durability).

### (H) Various kinds of additives

The curable composition may further contain various kinds of additives. The various kinds of additives are not particularly limited, and may contain, for example, an (unreactive) fluoropolyether compound which can be understood as fluorine-containing oil, preferably a perfluoro(poly)ether compound (hereinafter, referred to as "fluorine-containing oil"), a stabilizer (dehydrating agents, molecular sieves, magnesium sulfate or methyl orthoformate), viscosity modifiers, fluorescent agents, colorants, heat resistance improvers, cold resistance improvers, rust preventives, liquid reinforcing agents, etc.

The above-mentioned fluorine-containing oil is not particularly limited and there may be mentioned, for example, a compound (perfluoro(poly)ether compound) represented by the following general formula (III).

Rf⁵-(OC₄F₈)_{a'}-(OC₃F₆)_{b'}-(OC₂F₄)_{c'}-(OCF₂)_{d'}-Rf⁶ ··· (III)

In the formula, Rf⁵ represents an alkyl group having 1 to 16 carbon atoms which may be substituted with one or more fluorine atoms (preferably a C₁₋₁₆ perfluoroalkyl group), Rf⁶ represents an alkyl group having 1 to 16 carbon atoms which may be substituted with one or more fluorine atoms (preferably a C₁₋₁₆ perfluoroalkyl group), a fluorine atom or a hydrogen atom, and Rf⁵ and Rf⁶ are more preferably each independently a C₁₋₃ perfluoroalkyl group.
a', b', c' and d' each represent a number of recurring units of four kinds of perfluoro(poly)ethers constituting the main skeleton of the polymer, each independently an integer of 0 or more and 300 or less, and a sum of a', b', c' and d' is at least 1, preferably 1 to 300, and more preferably 20 to 300. The order of existence of each repeating unit enclosed with parentheses by applying the subscripts a', b', c' or d' is arbitrary in the formula. Among these recurring units, -(OC₄F₈)- may be any of -(OCF₂CF₂CF₂CF₂)-, -(OCF(CF₃)CF₂CF₂)-, -(OCF₂CF(CF₃)CF₂)-, -(OCF₂CF₂CF(CF₃))-, -(OC(CF₃)₂CF₂)-, -(OCF₂C(CF₃)₂)-, -(OCF(CF₃)CF(CF₃))-, -(OCF(C₂F₅)CF₂)- and -(OCF₂CF(C₂F₅))-, and preferably -(OCF₂CF₂CF₂CF₂)-. - (OC₃F₆)- may be any of -(OCF₂CF₂CF₂)-, -(OCF(CF₃)CF₂)- and -(OCF₂CF(CF₃))-, and preferably -(OCF₂CF₂CF₂)-. -(OC₂F₄)- may be any of -(OCF₂CF₂)- and -(OCF(CF₃))-, and preferably -(OCF₂CF₂)-.

As Examples of the perfluoro(poly)ether compound represented by the general formula (III), there may be mentioned a compound (it may be one kind or a mixture of two or more kinds) represented by any of the following general formulae (IIIa) and (IIIb).

Rf⁵-(OCF₂CF₂CF₂)_{b"}-Rf⁶ ··· (IIIa)

Rf⁵-(OCF₂CF₂CF₂CF₂)_{a‴}-(OCF₂CF₂CF₂)_{b‴}-(OCF₂CF₂)_{c‴}-(OCF₂)_{d‴}-Rf⁶ ··· (IIIb)

In these formulae, Rf⁵ and Rf⁶ are as defined above; in the formula (IIIa), b" is an integer of 1 or more and 100 or less; in the formula (IIIb), a‴ and b‴ are each independently an integer of 1 or more and 30 or less, and c‴ and d‴ are each independently an integer of 1 or more and 300 or less. The order of existence of each repeating unit enclosed with parentheses by applying the subscripts a‴, b‴, c‴, d‴ is arbitrary in the formula.

The above-mentioned fluorine-containing oil may have a number average molecular weight of 1,000 to 30,000. In particular, a number average molecular weight of the compound represented by the formula (IIIa) is preferably 2,000 to 8,000. In one embodiment, a number average molecular weight of the compound represented by the formula (IIIb) is 3,000 to 8,000. In another embodiment, a number average molecular weight of the compound represented by the formula (IIIb) is 8,000 to 30,000.

In the curable composition, the fluorine-containing oil can be contained in an amount of, for example, 0 to 500 parts by mass, preferably 0 to 100 parts by mass, more preferably 1 to 50 parts by mass, and further preferably 1 to 5 parts by mass based on 100 parts by mass of the (A) PFPE-containing silane compound.

Also, from another point of view, the fluorine-containing oil may be a compound represented by the general formula Rf'-F(wherein, Rf' is a C₅₋₁₆ perfluoroalkyl group.). Further, it may be a chlorotrifluoroethylene oligomer. The compound represented by Rf'-F and the chlorotrifluoroethylene oligomer are preferable in the point of obtaining high affinity with the (A) PFPE-containing silane compound wherein Rf is a C₁₋₁₆ perfluoroalkyl group.

By containing the fluorine-containing oil, the curable composition can form a more flexible cured composition.

In one embodiment, an average molecular weight of the fluorine-containing oil may be larger than an average molecular weight of the (A) PFPE-containing silane compound (for example, the compound represented by the formula (1), specifically the compound represented by the formula (A-1), (A-2), (A-3) or (A-4)). By making such an average molecular weight, in the cured product formed by using the curable composition, more excellent friction durability and surface slipperiness can be obtained.

In one embodiment, an average molecular weight of the fluorine-containing oil may be smaller than an average molecular weight of the (A) PFPE-containing silane compound (for example, the compound represented by the formula (1), specifically the compound represented by the formula (A-1), (A-2), (A-3) or (A-4)). By making such an average molecular weight, it can contribute to formation of a cured product having high friction durability and high surface slipperiness while suppressing lowering in transparency of the cured product formed by using the curable composition.

As the colorant, there may be mentioned pigments, dyes, etc.

As the heat resistance improver, there may be mentioned red iron oxide, cerium oxide, etc.

As the liquid reinforcing agent, there may be mentioned a network polysiloxane comprising triorganosiloxy units and SiO₂ units, etc.

### (Method for producing curable composition)

The curable composition can be produced by uniformly kneading Components (A) to (D) which are essential components and Components (E) to (H) which are optional components by a mixing means such as a universal kneader (a planetary mixer), a kneader, etc. The order of addition of each component is arbitrary, and it is preferable that (D), and (E) which is an optional component are added to a mixture of (A), and (F) and (G) which are optional components and dispersed therein, and then, (B) and (C), and (H) which is an optional component are added thereto and mixed.

Regarding the constitution of the curable composition, depending on the uses, it may be constituted as a so-called one-component type, or it may be a two-component type and both may be mixed at the time of use.

### (Use)

The curable composition does not flow out after being coated and fluidity thereof is suppressed so that it can be used, for example, as a potting material, a sealing material, etc. The cured product of the curable composition can be used, for example, by filling the voids of the electronic member (for example, a laminating portion between the housing and the printed circuit board, or a gap between the resin-molded metal terminal portion and the molded resin, etc.) with the curable composition, and drying and curing it.

For forming a cured product having higher wear resistance (for example, a potting material, a sealing material), it is preferable that, prior to the treatment by the curable composition, the object to be treated is washed with acetone, hydrofluoroether, etc., and then dried in order to remove oil content of various kinds of substrates. Further, in addition to the above-mentioned washing, when it is pretreated with UV ozone, oxygen plasma, etc., wear resistance of the cured product can be further improved.

Prior to the treatment by the curable composition, if necessary, by subjecting the various kinds of substrates, etc. to primer treatment, adhesiveness of the cured product formed from the curable composition is improved, and wear resistance thereof can be further improved. The primer treatment may be carried out according to the conventional method under the conditions similar to those of the primer treatment when a silane coupling agent is used. As the substrate, metals such as aluminum, copper, nickel, iron, brass, stainless, etc.; engineering plastics such as epoxy resin, polyester resins including polyethylene terephthalate, polybutylene terephthalate resin, etc., polycarbonate resin, acrylic resin, polyimide resin, phenol resin, polyamide resin, polyphenylene sulfide resin, etc.; glass, etc. can be used.

A temperature at the time of curing treatment is not particularly limited, and usually the treatment may be carried out at room temperature. A treatment time is also not particularly limited and can be set to, for example, 10 minutes to 1 week.

In one embodiment, when the curable composition is used, the composition may be further diluted using a solvent and used depending on the use and purpose. As a solvent to be used for dilution, the fluorine atom-containing solvent exemplified above can be used. For example, it may be dissolved in 1,3-bis(trifluoromethyl)benzene, Fluorinert (available from 3M Company), perfluorobutyl methyl ether, perfluorobutyl ethyl ether, etc., as the solvent, at a desired concentration and used. In particular, in the use of the thin film coating, it is preferable to use the above-mentioned solvent.

The curable composition does not flow out after being coated and fluidity thereof is suppressed so that, in particular, it can be useful as an adhesive for the use around electrical and electronic parts and around automobile parts. The cured product of the curable composition can have good elastic modulus, chemical resistance, acid resistance and base resistance. Further, it can have a low glass transition temperature, can suppress the increase in elastic modulus at a low temperature, and has a high decomposition temperature. Such a cured product of the curable composition of the present invention can be used for automobile parts (for example, a sealing material, specifically, gaskets), etc., chemical plants, electrical and electronic parts such as semiconductor manufacturing equipment, etc., and automobile parts that can be used at cold regions (for example, -50°C or lower) or under high temperature conditions, etc.

### Examples

The present invention will be explained more specifically by referring to the following Examples, but is not limited to these Examples. Incidentally, in the present Examples, the order of existence of recurring units constituting the perfluoro(poly)ether is arbitrary.

### (Used components)

The components used in Examples and Comparative Examples are as follows.

### (A) PFPE-containing silane compound

### (Production Example 1)

### Preparation of (A-1) PFPE-containing silane compound

In 1,000 mL of a four-necked flask equipped with a reflux condenser, a thermometer and a stirrer was charged 1,000 g of a PFPE-modified ester material represented by an average composition of CH₃OCO-CF₂-(OCF₂)₂₉-(OCF₂CF₂)₁₇-OCF₂-COOCH₃, and after adding 102 mL of 3-aminopropyltrimethoxysilane under nitrogen stream, the mixture was stirred at 25°C for one hour. Thereafter, by distilling the volatile component under reduced pressure, a (A-1) PFPE-containing silane compound represented by the following formula was obtained. Regarding the obtained (A-1) PFPE-containing silane compound, integrated values of the peaks of -CF₂-CONH-CH₂CH₂CH₂-Si(OCH₃)₃ and -CF₂-COOCH₃ which is the raw material were compared by ¹⁹F-NMR analysis, and the silane terminalization rate was calculated to be 97 mol%. A viscosity of the (A-1) PFPE-containing silane compound at 23°C was 500 mPa·s.

(A-1) PFPE-containing silane compound

(CH₃O)₃Si-CH₂CH₂CH₂-NHCO-CF₂-(OCF₂)₂₉-(OCF₂CF₂)₁₇-OCF₂-CONH- CH₂CH₂CH₂-Si(OCH₃)₃

### (Production Example 2)

### Preparation of (A-2) PFPE-containing silane compound

In 1,000 mL of a four-necked flask equipped with a reflux condenser, a thermometer and a stirrer was charged 1,000 g of a PFPE-modified ester material represented by an average composition of CH₃CH₂OCO-CF₂-(OCF₂)₁₂-(OCF₂CF₂)₁₂-OCF₂-COOCH₂CH₃, and after adding 141 mL of 3-aminopropyltrimethoxysilane under nitrogen stream, the mixture was stirred at 25°C for one hour. Thereafter, by distilling the volatile component under reduced pressure, a (A-2) PFPE-containing silane compound represented by the following formula was obtained. Regarding the obtained (A-2) PFPE-containing silane compound, integrated values of the peaks of -CF₂-CONH-CH₂CH₂CH₂-Si(OR')₃ and -CF₂-COOCH₂CH₃ which is the raw material were compared by ¹⁹F-NMR analysis, and the silane terminalization rate was calculated to be 99 mol%. Incidentally, as R', CH₃ was 91mol% and CH₂CH₃ was 9mol% by ¹H-NMR analysis. A viscosity of the (A-2) PFPE-containing silane compound at 23°C was 300 mPa·s.

(A-2) PFPE-containing silane compound

(R'O)₃Si-CH₂CH₂CH₂-NHCO-CF₂-(OCF₂)₁₂-(OCF₂CF₂)₁₂-OCF₂-CONH-CH₂CH₂CH₂ Si(OR')₃

### (Production Example 3)

### Preparation of (A-3) PFPE-containing silane compound

In 2,000 mL of a four-necked flask equipped with a reflux condenser, a thermometer and a stirrer were charged 1,000 g of a PFPE-modified ester material represented by an average composition of CH₃CH₂OCO-CF₂-(OCF₂)₁₂-(OCF₂CF₂)₁₂-OCF₂-COOCH₂CH₃ and 500 g of 1,3-bis(trifluoromethyl)benzene, and after adding 13 mL of ethylenediamine using a dropping funnel under nitrogen stream, the mixture was stirred at 25°C for one hour. Subsequently, after adding 69 mL of 3-aminopropyltrimethoxysilane thereto, the resulting mixture was stirred at 25°C for one hour. Thereafter, by distilling the volatile component under reduced pressure, a (A-3) PFPE-containing silane compound represented by the following formula was obtained. Regarding the obtained (A-3) PFPE-containing silane compound, integrated values of the peaks of -CF₂-CONH-CH₂CH₂CH₂-Si(OR')₃ and -CF₂-COOCH₂CH₃ which is the raw material were compared by ¹⁹F-NMR analysis, and the silane terminalization rate was calculated to be 98 mol%. Incidentally, as R', CH₃ was 89 mol% and CH₂CH₃ was 11mol% by ¹H-NMR analysis. A viscosity of the (A-3) PFPE-containing silane compound at 23°C was 1,800 mPa-s.

(A-3) PFPE-containing silane compound

(R'O)₃Si-CH₂CH₂CH₂-NHCO-CF₂-(OCF₂)₁₂-(OCF₂CF₂)₁₂-OCF₂-CONHCH₂CH₂ NHCO-CF₂-(OCF₂)₁₂-(OCF₂CF₂)₁₂-OCF₂-CONH-CH₂CH₂CH₂-Si(OR')₃

### (Production Example 4)

### Preparation of (A-4) and (G-4) PFPE-containing silane compound

A PFPE mixture 1 which contains the following components (α1) and (α2) was prepared.
(α1)

   CH₃OCO-CF(CF₃)-{OCF₂CF(CF₃)}ₘ-OCF₂CF₂O-{CF(CF₃)CF₂O}ₙ-CF(CF₃)-COOCH₃ (m+n=12)
(α2)

   CF₃CF₂CF₂O-{CF(CF₃)CF₂O}₁₂-CF(CF₃)-COOCH₃
(α1):(α2)=85:15 (molar ratio)

In 1,000 mL of a four-necked flask equipped with a reflux condenser, a thermometer and a stirrer were charged 1,000 g of the PFPE mixture 1 and 500 g of 1,3-bis(trifluoromethyl)benzene, and after adding 123 mL of 3-aminopropyltrimethoxysilane under nitrogen stream, the mixture was stirred at 70°C for 12 hours. Thereafter, by distilling the volatile component under reduced pressure, (A-4) and (G-4) PFPE-containing silane compounds represented by the following formulae were obtained. Regarding the obtained (A-4) and (G-4) PFPE-containing silane compounds, integrated values of the peaks of -CF(CF₃)-CONH-CH₂CH₂CH₂-Si(OCH₃)₃ and -CF(CF₃)-COOCH₃ which is the raw material were compared by ¹⁹F-NMR analysis, and the silane terminalization rate was calculated to be 98 mol%.

(A-4) PFPE-containing silane compound

(CH₃O)₃Si-CH₂CH₂CH₂-NHCO-CF(CF₃)-{OCF₂CF(CF₃)}ₘ-OCF₂CF₂₀- {CF(CF₃)CF₂0}ₙ-CF(CF₃)-CONH-CH₂CH₂CH₂-Si(OCH₃)₃

(G-4) PFPE-containing silane compound

CF₃CF₂OCF₂O-{CF(CF₃)CF₂O}₁₂-CF(CF₃)-CONH-CH₂CH₂CH₂-Si(OCH₃)₃

### (B) Crosslinking agent

(B1) Crosslinking agent having no reactive functional group
B1-1: Methyltrimethoxysilane
(B2) Crosslinking agent having a reactive functional group
B2-1: 3-Aminopropyltriethoxysilane
(B3) Adhesive imparting agent containing two or more alkoxysilyl groups in one molecule
B3-1: Tris(3-trimethoxysilylpropyl)isocyanurate (trade name: SILQUEST (registered trademark) A-LINK597, available from Momentive Performance Materials, Inc.)
B3-2: Alkoxysilyl group-containing carbasilatrane compound represented by the formula (3)

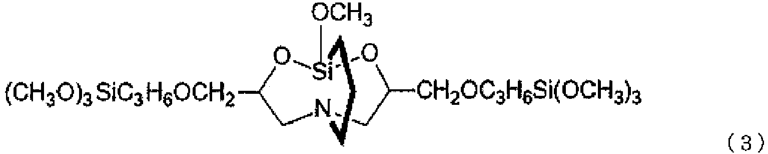

In accordance with the method described in JP Patent No. 3,831,481, the alkoxysilyl group-containing carbasilatrane compound represented by the formula (3) was prepared.

### (C) Condensation catalyst

C-1: Diisopropoxy titanium bis(ethyl acetoacetate)
C-2: Dibutylbis(triethoxysiloxy)tin

### (D) Inorganic filler having primary particle diameter of 0.01 to 0.1 µm

D-1: Carbon black having a primary particle diameter of 0.05 µm (available from Denka Co., Ltd., Denka Black (registered trademark) HS-100)
D-2: Calcium carbonate having a primary particle diameter of 0.05 µm (available from Maruo Calcium Co., Ltd., CARREX 300)

### (E) Other fillers

E-1: Aluminum oxide having a primary particle diameter of 0.4 µm (available from Sumitomo Chemical Industry Co., Ltd., Sumicorundum (registered trademark) AA-04)
E-2: Quartz powder having a primary particle diameter of 3.5 µm (available from Tatsumori Ltd., CRYSTALITE (registered trademark) VX-S)

### Example 1

A plastic vessel for mixing were charged with 100 parts by mass of A-1 and 5.0 parts by mass of D-1, and stirring was carried out using a rotating and revolving mixer (a planetary centrifugal mixer) at room temperature for 5 minutes to obtain a uniform mixture. To the thus obtained mixture were added 2.0 parts by mass of B1-1 and 2.0 parts by mass of C-1, and the mixture was stirred at room temperature for 5 minutes to prepare a curable composition. A formulation of the composition is shown in Table 1.

### Example 2

In the same manner as in Example 1 except for changing 5.0 parts by mass of D-1 to 25.0 parts by mass of D-2, a curable composition of Example 2 was obtained. A formulation of the composition is shown in Table 1.

### Example 3

A plastic vessel for mixing were charged with 100 parts by mass of A-1 and 5.0 parts by mass of D-1, and stirring was carried out using a rotating and revolving mixer (a planetary centrifugal mixer) at room temperature for 5 minutes to obtain a uniform mixture. To the thus obtained mixture were added 2.0 parts by mass of B1-1, 0.8 part by mass of B3-1 and 2.0 parts by mass of C-1, and the mixture was stirred at room temperature for 5 minutes to prepare a curable composition. A formulation of the composition is shown in Table 1.

### Example 4

A plastic vessel for mixing were charged with 100 parts by mass of A-1 and 5.0 parts by mass of D-1, and stirring was carried out using a rotating and revolving mixer (a planetary centrifugal mixer) at room temperature for 5 minutes to obtain a uniform mixture. To the thus obtained mixture were added 2.0 parts by mass of B1-1, 0.8 part by mass of B3-2 and 0.1 part by mass of C-2, and the mixture was stirred at room temperature for 5 minutes to prepare a curable composition. A formulation of the composition is shown in Table 1.

### Example 5

In the same manner as in Example 4 except for changing B3-2 to B2-1, a curable composition of Example 5 was obtained. A formulation of the composition is shown in Table 1.

### Example 6

A plastic vessel for mixing were charged with 100 parts by mass of A-2 and 5.0 parts by mass of D-1, and stirring was carried out using a rotating and revolving mixer (a planetary centrifugal mixer) at room temperature for 5 minutes to obtain a uniform mixture. To the thus obtained mixture were added 2.0 parts by mass of B1-1, 0.3 part by mass of B3-1 and 2.0 parts by mass of C-1, and the mixture was stirred at room temperature for 5 minutes to prepare a curable composition. A formulation of the composition is shown in Table 1.

### Example 7

A plastic vessel for mixing were charged with 50 parts by mass of A-2, 50 parts by mass of A-3 and 5.0 parts by mass of D-1, and stirring was carried out using a rotating and revolving mixer (a planetary centrifugal mixer) at room temperature for 5 minutes to obtain a uniform mixture. To the thus obtained mixture were added 2.0 parts by mass of B1-1, 0.3 part by mass of B3-1 and 2.0 parts by mass of C-1, and the mixture was stirred at room temperature for 5 minutes to prepare a curable composition. A formulation of the composition is shown in Table 1.

### Comparative Example 1

A plastic vessel for mixing were charged with 100 parts by mass of A-1, 2.0 parts by mass of B1-1 and 2.0 parts by mass of C-1, and stirring was carried out using a rotating and revolving mixer (a planetary centrifugal mixer) at room temperature for 5 minutes to prepare a curable composition of Comparative Example 1. A formulation of the composition is shown in Table 1.

### Comparative Example 2

In the same manner as in Example 1 except for changing D-1 to E-1, a curable composition of Comparative Example 2 was obtained. A formulation of the composition is shown in Table 1.

### Comparative Example 3

In the same manner as in Example 1 except for changing 5.0 parts by mass of D-1 to 25.0 parts by mass of E-2, a curable composition of Comparative Example 3 was obtained. A formulation of the composition is shown in Table 1.

### Comparative Example 4

In the same manner as in Comparative Example 1 except for changing A-1 to A-2, a curable composition of Comparative Example 4 was obtained. A formulation of the composition is shown in Table 1.

### [Table 1]

**Table 1**

| Raw materials | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| A-1 | PFPE-containing silane compound (viscosity: 500 mPa·s) | 100 | 100 | 100 | 100 | 100 | | | 100 | 100 | 100 | |
| A-2 | PFPE-containing silane compound (viscosity: 300 mPa·s) | | | | | | 100 | 50 | | | | 100 |
| A-3 | PFPE-containing silane compound (viscosity: 1,800 mPa·s) | | | | | | | 50 | | | | |
| B1-1 | Methyltrimethoxysilane | 2.0 | 2.0 | 2.0 | 2.0 | 2.0 | 2.0 | 2.0 | 2.0 | 2.0 | 2.0 | 2.0 |
| B2-1 | 3-Aminopropyltriethoxysllane | | | | | 0.8 | | | | | | |
| B3-1 | Tris(3-trimethoxysilylpropyl)isocyanurate | | | 0.8 | | | 0.3 | 0.3 | | | | |
| B3-2 | Alkoxysilyl group-containing carbasilatrane compound represented by the formula (3) | | | | 0.8 | | | | | | | |
| C-1 | Diisopropoxy titanium bis(ethyl acetoacetate) | 2.0 | 2.0 | 2.0 | | | 2.0 | 2.0 | 2.0 | 2.0 | 2.0 | 2.0 |
| C-2 | Dibutylbis(triethoxysiloxy)tin | | | | 0.1 | 0.1 | | | | | | |
| D-1 | Carbon black having primary particle diameter of 0.05 µm | 5.0 | | 5.0 | 5.0 | 5.0 | 5.0 | 5.0 | | | | |
| D-2 | Calcium carbonate having primary particle diameter of 0.05 µm | | 25.0 | | | | | | | | | |
| E-1 | Aluminum oxide having primary particle diameter of 0.4 µm | | | | | | | | | 5.0 | | |
| E-2 | Quartz powder having primary particle diameter of 3.5 µm | | | | | | | | | | 25.0 | |
| Total | | 109.0 | 129.0 | 109.8 | 107.9 | 107.9 | 109.3 | 109.3 | 104.0 | 109.0 | 129.0 | 104.0 |

### (Evaluation method)

### 1. Fluidity test

Each 0.1 g of the curable compositions prepared in Examples 1 to 7 and Comparative Examples 1 to 4 was coated onto an aluminum plate (in conformity to JIS H 4000 A1050P) inclined at 45° using a syringe in a circular state, and a distance (mm) flowed after 10 seconds was measured, which was made the fluidity value. When the fluidity value is in the range of 15 mm or less, fluidity of the composition is suppressed, and formability of a stable cured product is excellent. The fluidity value is more preferably in the range of 10 mm or less, and particularly preferably in the range of 5 mm or less. The results are shown in Table 2.

**[Table 2]**

| | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|
| Fluidity value (mm) | 4 | 9 | 3 | 4 | 5 | 5 | 4 | *40* | 25 | 30 | 45 |

### 2. Adhesiveness test

The curable compositions prepared in Examples 3 to 7 and Comparative Example 4 were each coated on an epoxy glass plate (KEL-GEF manufactured by Shin-kobe Electric Machinery Co., Ltd.) as a substrate by squeezing so as to have 20 mm × 20 mm and a thickness of 500 µm, and cured under environment of 23°C/50% RH for 7 days. A cut with a length of 20 mm was made by a cutter to the cured product thus obtained, and the cured product was slowly peeled off from the cut with fingers. The cohesive failure rate of the cured product after peeling was judged with naked eyes, and evaluated the adhesiveness to the substrate by the following standard. The results are shown in Table 3.

### Evaluation standard of the adhesiveness is as follows.

4: Cohesive failure rate is 80 to 100%
3: Cohesive failure rate is 50 to less than 80%
2: Cohesive failure rate is 20 to less than 50%
1: Cohesive failure rate is 0 to less than 20%

**[Table 3]**

| | Example 3 | Example 4 | Example 5 | Example 6 | Example 7 | Comparative Example 4 |
|---|---|---|---|---|---|---|
| Adhesiveness | 4 | 3 | 1 | 4 | 4 | 1 |

As shown in Table 2, the curable compositions of Examples 1 to 7 into which inorganic fillers having a primary particle diameter of 0.01 to 0.1 µm were formulated had the fluidity value in the range of 15 mm or less, and fluidity of the composition was suppressed and formability of a stable cured product was excellent. In particular, Examples 1 and 3 to 7 in which the inorganic filler was carbon black had the fluidity value of 3 to 5 mm, fluidity of the composition was more suppressed and formability of a stable cured product was further excellent.

On the other hand, Comparative Examples 1 and 4 in which no filler was formulated, and Comparative Examples 2 and 3 in which inorganic fillers having a primary particle diameter of exceeding 0.1 µm were formulated had the fluidity value markedly exceeding 15 mm, and the compositions flowed out after being coated and were inferior in formability of a stable cured product.

By the comparison of Examples 3 to 5, Examples 3 and 4 that contained 0.01 to 30% by mass of (B3) an adhesive imparting agent containing two or more alkoxysilyl groups in one molecule based on Component (A) in the curable composition were more suppressed in fluidity of the compositions as compared to Example 5 that contained no Component (B3), excellent in formability of a stable cured product, and also excellent in adhesiveness to the substrate. In particular, Example 3 in which an alkoxysilyl group-containing isocyanurate compound was formulated as (B3) was even more excellent in these properties.

### Industrial Applicability

The curable composition of the present invention can be used, for example, for a potting material, a sealing material, etc. A cured product of the curable composition can be used, for example, by filling the voids of an electronic member (for example, a laminating portion between the housing and the printed circuit board, or a gap between the resin-molded metal terminal portion and the molded resin, etc.) with the curable composition, and drying and curing it.

## Claims

1. A curable composition comprising:
(A) a perfluoro(poly)ether group-containing silane compound having two or more Si atoms bonded to at least one group selected from the group consisting of a hydroxyl group and a hydrolyzable group,
(B) a compound having at least two OR² groups bonded to an Si atom, wherein, R²s are each independently a hydrogen atom or a monovalent organic group at each appearance, provided that (A) is excluded, or a partially hydrolyzed condensate thereof,
(C) a condensation catalyst, and
(D) an inorganic filler having a primary particle diameter of 0.01 to 0.1 µm,
wherein Component (D) is carbon black or calcium carbonate,
wherein the primary particle diameter is a value measured by the electron microscope method.

2. The curable composition according to Claim 1, wherein
Component (A) is a compound represented by the formula (1) 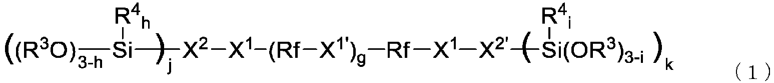 wherein,
Rfs are at each appearance each independently a perfluoro(poly)ether group represented by the formula:
-(C_{f}F_{2f})-(OCF₂)ₐ₁-(OC₂F₄)ₐ₂-(OC₃X¹⁰₆)ₐ₃-(OC₄F₈)ₐ₄-(OC₅F₁₀)ₐ₅-(OC₆F₁₂)ₐ₆-(OC₇F₁₄)ₐ₇- (OC₈F₁₆)ₐ₈-
wherein, f is an integer of 1 to 10, a1, a2, a3, a4, a5, a6, a7 and a8 are each independently an integer of 0 or more and 200 or less, a sum of a1, a2, a3, a4, a5, a6, a7 and a8 is an integer of 5 or more and 200 or less, the unit represented by (C_{f}F_{2f}) is located at the left end of the group, the order of existence of each repeating unit enclosed in parentheses with the subscript a1, a2, a3, a4, a5, a6, a7 or a8 is arbitrary in the formula, and X¹⁰s are each independently a hydrogen atom, a fluorine atom or a chlorine atom at each appearance, provided that when all X¹⁰s are hydrogen atoms or chlorine atoms, at least one of a1, a2, a4, a5, a6, a7 and a8 is an integer of 1 or more,
g is an integer of 0 or more,
j and k are each an integer of 1 to 9,
h and i are each independently an integer of 0 to 3 at each appearance, provided that at least two among h and i existing with a number of j+k are made to be 0 or 1,
X¹s each independently represent a single bond or a divalent organic group at each appearance,
X^{1'}s each independently represent a divalent organic group at each appearance,
X² represents a j+1 valent organic group,
X^{2'} represents a k+1 valent organic group,
R³s each independently represent a hydrogen atom or a monovalent organic group at each appearance, and
R⁴s each independently represent a hydrogen atom or a monovalent organic group at each appearance, provided that R⁴ is not to be OR³.

3. The curable composition according to Claim 2, wherein
in the formula (1), Rfs are at each appearance each independently a perfluoro(poly)ether group represented by the formula:
-(C_{f}F_{2f})-(OCF₂)ₐ₁-(OCF₂CF₂)ₐ₂₁-(OCF(CF₃))_{a2'}-(OCF₂CF₂CF₂)ₐ₃₁-(OCF₂CF(CF₃))_{a3'}- (OCF(CF₃)CF₂)_{a3"}-(OCF₂CF₂CF₂CF₂)ₐ₄-
wherein, f is an integer of 1 or more and 4 or less, a sum of a21 and a2' equals to a2, a sum of a31, a3' and a3" equals to a3, a1 is an integer of 0 or more and 50 or less, a2 is an integer of 0 or more and 50 or less, a3 is an integer of 0 or more and 30 or less, a4 is an integer of 0 or more and 30 or less, a sum of a1, a2, a3 and a4 is 5 or more and 200 or less, and the order of existence of each repeating unit is arbitrary in the formula,
g is an integer of 0 or more and 5 or less,
j and k are each 1,
h and i are each independently 0 or 1 at each appearance,
X¹s are each independently a urethane bond or an amide bond at each appearance,
X^{1'}s are each independently a divalent alkylene group having amide bonds at both ends at each appearance,
X²s and X^{2'}s are each independently a divalent alkylene group at each appearance,
R³s are each independently an alkyl group having 1 to 4 carbon atoms or an alkoxyalkyl group at each appearance, and
R⁴s are each independently a hydrogen atom or an alkyl group having 1 to 22 carbon atoms at each appearance.

4. The curable composition according to Claim 1 or 2, wherein
Component (A) is a compound represented by any of the following formulae: 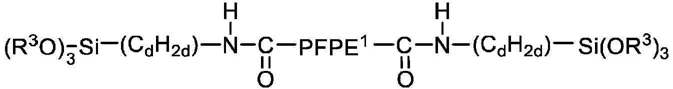 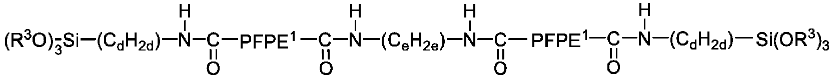 wherein:
PFPE¹s are at each appearance each independently a group represented by the formula:
-(C_{f}F_{2f})-(OCF₂)ₐ₁-(OC₂F₄)ₐ₂-(OC₃F₆)ₐ₃-(OC₄F)ₐ₄-(OC₅F₁₀)ₐ₅-(OC₆F₁₂)ₐ₆-(OC₇F₁₄)ₐ₇- (OC₈F₁₆)ₐ₈-
wherein, f is an integer of 1 to 10, a1 and a2 are each independently an integer of 1 or more and 200 or less, a3, a4, a5, a6, a7 and a8 are each independently an integer of 0 or more and 30 or less, a sum of a1, a2, a3, a4, a5, a6, a7 and a8 is an integer of 5 or more and 200 or less, the unit represented by (C_{f}F_{2f}) is located at the left end of the group, and the order of existence of each repeating unit enclosed in parentheses with the subscript a1, a2, a3, a4, a5, a6, a7 or a8 is arbitrary in the formula,
R³s are each independently an alkyl group having 1 to 4 carbon atoms at each appearance,
ds are each independently an integer of 1 to 4 at each appearance, and
e is an integer of 1 to 4.

5. The curable composition according to any one of Claims 1 to 4, wherein
Component (B) contains a compound represented by the following formula:
R¹ₙSi(OR²)₄₋ₙ
wherein,
R¹s are each independently a substituted or unsubstituted monovalent hydrocarbon group at each appearance,
R²s are each independently a hydrogen atom or a monovalent organic group at each appearance, and
n is 0, 1 or 2,
or a partially hydrolyzed condensate thereof.

6. The curable composition according to Claim 5, wherein
Component (B) further contains a compound represented by the following formula (B2): 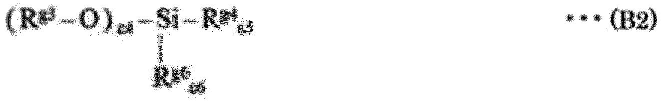 wherein,
R^{g3}s are each independently a hydrogen atom or a monovalent organic group at each appearance,
R^{g4} is a substituted or unsubstituted monovalent hydrocarbon group,
R^{g6}s are each independently R^{g8}-R⁸⁷- at each appearance,
R^{g7}s are each independently an alkylene group having 1 to 10 carbon atoms, or a group having 1 to 10 carbon atoms and containing a nitrogen atom or an oxygen atom in a main chain at each appearance,
R^{g8}s are each independently a primary amino group, an epoxy group, a (meth)acryloyl group, a (meth)acryloxy group, a mercapto group or an isocyanato group at each appearance,
ε4 is 2 or 3,
ε5 is 0 or 1, and
ε6 is 1 or 2, provided that a sum of ε4, ε5 and ε6 is 4,
or a partially hydrolyzed condensate thereof.

7. The curable composition according to any one of Claims 1 to 6, wherein
Component (B) contains (B3) a compound containing two or more alkoxysilyl groups in one molecule, with the linking group between the alkoxysilyl groups being a group other than that selected from the group consisting of an -O- group and a group having a siloxane bond, or a partially hydrolyzed condensate thereof, and a content of Component (B3) based on that of Component (A) is 0.01 to 30% by mass.

8. The curable composition according to Claim 7, wherein the linking group between the alkoxysilyl groups of Component (B3) is a group containing a nitrogen atom and/or a carbonyl group.

9. The curable composition according to Claim 8, wherein the linking group between the alkoxysilyl groups of Component (B3) is a group further containing an -O- group, an alkenylene group and/or an alkylene group.

10. The curable composition according to any one of Claims 7 to 9, wherein Component (B3) is selected from the group consisting of an alkoxysilyl group-containing isocyanurate compound, an alkoxysilyl group-containing carbasilatrane compound, an alkoxysilyl group-containing fumaric acid ester compound and an alkoxysilyl group-containing amine compound.

11. The curable composition according to any one of Claims 1 to 10, wherein a fluidity value measured by the following fluidity test is 15 mm or less:
Fluidity test: 0.1 g of the curable composition is coated onto an aluminum plate inclined at 45°, and a distance (mm) flowed after 10 seconds is measured and the value is set to be the fluidity value.

## Patentansprüche

1. Härtbare Zusammensetzung, umfassend:
(A) eine Perfluor(poly)ether-Gruppe enthaltende Silanverbindung mit zwei oder mehr Si-Atomen, die an mindestens eine Gruppe gebunden sind, ausgewählt aus der Gruppe, bestehend aus einer Hydroxylgruppe und einer hydrolysierbaren Gruppe,
(B) eine Verbindung mit mindestens zwei an ein Si-Atom gebundenen OR²-Gruppen, wobei R² jeweils unabhängig voneinander ein Wasserstoffatom oder eine einwertige organische Gruppe bei jedem Auftreten ist, mit der Maßgabe, dass (A) oder ein teilweise hydrolysiertes Kondensat davon ausgeschlossen ist,
(C) einen Kondensationskatalysator und
(D) einen anorganischen Füllstoff mit einem Primärteilchendurchmesser von 0,01 bis 0,1 µm,
wobei Komponente (D) Ruß oder Calciumcarbonat ist,
wobei der Primärteilchendurchmesser ein Wert ist, der mittels Elektronenmikroskopie gemessen wird.

2. Härtbare Zusammensetzung nach Anspruch 1, wobei
Komponente (A) eine Verbindung ist, die durch die Formel (1) dargestellt wird 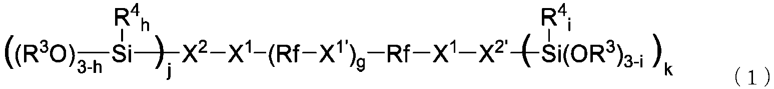 worin,
Rfs bei jedem Auftreten jeweils unabhängig voneinander eine Perfluor(poly)ethergruppe sind, die durch die Formel dargestellt wird:
-(C_{f}F_{2f})-(OCF₂)ₐ₁-(OC₂F₄)ₐ₂-(OC₃X¹⁰6)ₐ₃-(OC₄F₈)ₐ₄-(OC₅F₁₀)ₐ₅-(OC₆F₁₂)ₐ₆-(OC₇F₁₄)ₐ₇- (OC₈F₁₆)ₐ₈-
wobei f eine ganze Zahl von 1 bis 10 ist, a1, a2, a3, a4, a5, a6, a7 und a8 jeweils unabhängig voneinander ganze Zahlen zwischen 0 und 200 sind, die Summe von a1, a2, a3, a4, a5, a6, a7 und a8 eine ganze Zahl zwischen 5 und 200 ist, die durch (C_{f}F_{2f}) dargestellte Einheit an dem linken Ende der Gruppe steht, die Reihenfolge des Vorhandenseins der in Klammern mit dem Index a1, a2, a3, a4, a5, a6, a7 oder a8 angegebenen, sich wiederholenden Einheiten in der Formel willkürlich ist und X¹⁰ jeweils unabhängig voneinander ein Wasserstoffatom, ein Fluoratom oder ein Chloratom ist, mit der Maßgabe, dass, wenn alle X¹⁰ Wasserstoffatome oder Chloratome sind, mindestens eines von a1, a2, a4, a5, a6, a7 und a8 eine ganze Zahl von 1 oder mehr ist,
g eine ganze Zahl von 0 oder größer ist,
j und k jeweils ganze Zahlen von 1 bis 9 sind,
h und i bei jedem Auftreten jeweils unabhängig voneinander eine ganze Zahl von 0 bis 3 sind, mit der Maßgabe, dass mindestens zwei von h und i mit einer Zahl von j+k entweder 0 oder 1 sind,
X¹s bei jedem Auftreten jeweils unabhängig voneinander eine Einfachbindung oder eine zweiwertige organische Gruppe darstellen,
X^{1'} s bei jedem Auftreten jeweils unabhängig voneinander eine zweiwertige organische Gruppe darstellen,
X² eine j+l-valente organische Gruppe darstellt,
X^{2'} eine k+l-valente organische Gruppe darstellt,
R³s bei jedem Auftreten jeweils unabhängig ein Wasserstoffatom oder eine einwertige organische Gruppe darstellen, und
R⁴s bei jedem Auftreten jeweils unabhängig ein Wasserstoffatom oder eine einwertige organische Gruppe darstellen, mit der Maßgabe, dass R⁴ nicht OR³ ist.

3. Härtbare Zusammensetzung nach Anspruch 2, wobei
in der Formel (1) die Rfs bei jedem Auftreten jeweils unabhängig voneinander eine Perfluor(poly)ethergruppe sind, dargestellt durch die Formel:
-(C_{f}F_{2f})-(OCF₂)ₐ₁-(OCF₂CF₂)ₐ₂₁-(OCF(CF₃))_{a2'}-(OCF₂CF₂CF₂)ₐ₃₁-(OCF₂CF(CF₃))_{a3'}- (OCF(CF₃)CF₂)_{a3"}-(OCF₂CF₂CF₂CF₂)ₐ₄-
wobei f eine ganze Zahl zwischen 1 und 4 ist, die Summe von a21 und a2' gleich a2 ist, die Summe von a31, a3' und a3" gleich a3 ist, a1 eine ganze Zahl zwischen 0 und 50 ist, a2 eine ganze Zahl zwischen 0 und 50 ist, a3 eine ganze Zahl zwischen 0 und 30 ist, a4 eine ganze Zahl zwischen 0 und 30 ist, die Summe von a1, a2, a3 und a4 5 oder größer und 200 oder kleiner ist und die Reihenfolge des Auftretens jeder sich wiederholenden Einheit in der Formel willkürlich ist,
g eine ganze Zahl zwischen 0 und 5 ist,
j und k jeweils 1 ist,
h und i bei jedem Auftreten jeweils unabhängig voneinander 0 oder 1 sind,
X¹ bei jedem Auftreten jeweils unabhängig voneinander eine Urethanbindung oder eine Amidbindung sind,
X^{1'} bei jedem Auftreten jeweils unabhängig voneinander eine zweiwertige Alkylengruppe mit Amidbindungen an beiden Enden sind,
X²s und X^{2'}s bei jedem Auftreten jeweils unabhängig voneinander eine zweiwertige Alkylengruppe sind,
R³s bei jedem Auftreten jeweils unabhängig voneinander eine Alkylgruppe mit 1 bis 4 Kohlenstoffatomen oder eine Alkoxyalkylgruppe sind, und
R⁴s bei jedem Auftreten jeweils unabhängig voneinander ein Wasserstoffatom oder eine Alkylgruppe mit 1 bis 22 Kohlenstoffatomen sind.

4. Härtbare Zusammensetzung nach Anspruch 1 oder 2, wobei
Komponente (A) eine Verbindung ist, die durch eine der folgenden Formeln dargestellt wird: 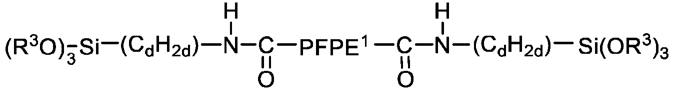 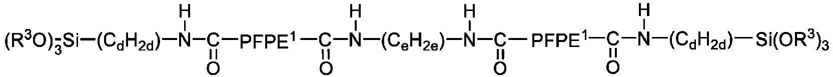 worin:
PFPE¹s bei jedem Auftreten jeweils unabhängig voneinander eine Gruppe sind, die durch die Formel dargestellt wird:
-(C_{f}F_{2f})-(OCF₂)ₐ₁-(OC₂F₄)ₐ₂-(OC₃F₆)ₐ₃-(OC₄F₈)ₐ₄-(OC₅F₁₀)ₐ₅-(OC₆F₁₂)ₐ₆-(OC₇F₁₄)ₐ₇- (OC₈F₁₆)ₐ₈-
wobei f eine ganze Zahl von 1 bis 10 ist, a1 und a2 jeweils unabhängig voneinander ganze Zahlen von 1 oder größer und 200 oder kleiner sind, a3, a4, a5, a6, a7 und a8 jeweils unabhängig voneinander ganze Zahlen von 0 oder größer und 30 oder kleiner sind, die Summe von a1, a2, a3, a4, a5, a6, a7 und a8 eine ganze Zahl von 5 oder größer und 200 oder kleiner ist, die durch (C_{f}F_{2f}) dargestellte Einheit sich am linken Ende der Gruppe befindet und die Reihenfolge des Vorhandenseins der in Klammern mit dem Index a1, a2, a3, a4, a5, a6, a7 oder a8 angegebenen, sich wiederholenden Einheiten in der Formel willkürlich ist,
R³ s bei jedem Auftreten jeweils unabhängig voneinander Alkylgruppen mit 1 bis 4 Kohlenstoffatomen sind,
ds bei jedem Auftreten jeweils unabhängig voneinander eine ganze Zahl von 1 bis 4 sind, und
e eine ganze Zahl von 1 bis 4 ist.

5. Härtbare Zusammensetzung nach einem der Ansprüche 1 bis 4, wobei Komponente
(B) eine Verbindung, dargestellt durch die folgende Formel, enthält:
R¹ₙSi(OR²)₄₋ₙ
worin,
R¹s bei jedem Auftreten jeweils unabhängig voneinander eine substituierte oder unsubstituierte einwertige Kohlenwasserstoffgruppe sind,
R²s bei jedem Auftreten jeweils unabhängig voneinander ein Wasserstoffatom oder eine einwertige organische Gruppe sind, und
n 0, 1 oder 2 ist,
oder ein teilweise hydrolysiertes Kondensat davon.

6. Härtbare Zusammensetzung nach Anspruch 5, wobei
Komponente (B) weiter eine Verbindung, dargestellt durch die folgende Formel (B2), enthält: 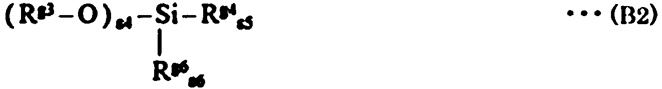 worin,
R^{g3}s bei jedem Auftreten jeweils unabhängig voneinander ein Wasserstoffatom oder eine einwertige organische Gruppe sind,
R^{g4} eine substituierte oder unsubstituierte einwertige Kohlenwasserstoffgruppe ist,
R^{g6} bei jedem Auftreten jeweils unabhängig R^{g8}-R^{g7}- sind,
R^{g7} s bei jedem Auftreten jeweils unabhängig voneinander eine Alkylengruppe mit 1 bis 10 Kohlenstoffatomen oder eine Gruppe mit 1 bis 10 Kohlenstoffatomen und ein Stickstoffatom oder ein Sauerstoffatom in der Hauptkette enthaltend sind,
R^{g8}s bei jedem Auftreten jeweils unabhängig voneinander eine primäre Aminogruppe, eine Epoxygruppe, eine (Meth)acryloylgruppe, eine (Meth)acryloxygruppe, eine Mercaptogruppe oder eine Isocyanatogruppe sind,
ε4 2 oder 3 ist,
ε5 0 oder 1 ist, und
ε6 1 oder 2 ist, mit der Maßgabe, dass die Summe von ε4, ε5 und ε6 4 ist, oder ein teilweise hydrolysiertes Kondensat davon.

7. Härtbare Zusammensetzung nach einem der Ansprüche 1 bis 6 , wobei
Komponente (B) (B3) eine Verbindung enthält, die zwei oder mehr Alkoxysilylgruppen in einem Molekül enthält, wobei die verbindende Gruppe zwischen den Alkoxysilylgruppen eine andere Gruppe als diejenige ist, ausgewählt aus der Gruppe, bestehend aus einer -O-Gruppe und einer Gruppe mit einer Siloxanbindung, oder ein teilweise hydrolysiertes Kondensat davon, und der Gehalt an Komponente (B3), bezogen auf den von Komponente (A), 0,01 bis 30 Masseprozent beträgt.

8. Härtbare Zusammensetzung nach Anspruch 7, wobei die verbindende Gruppe zwischen den Alkoxysilylgruppen der Komponente (B3) eine Gruppe ist, die ein Stickstoffatom und/oder eine Carbonylgruppe enthält.

9. Härtbare Zusammensetzung nach Anspruch 8, wobei die verbindende Gruppe zwischen den Alkoxysilylgruppen der Komponente (B3) eine Gruppe ist, die weiter eine -O-Gruppe, eine Alkenylengruppe und/oder eine Alkylengruppe enthält.

10. Härtbare Zusammensetzung nach einem der Ansprüche 7 bis 9, wobei Komponente (B3) ausgewählt ist aus der Gruppe, bestehend aus einer Alkoxysilylgruppen-haltigen Isocyanuratverbindung, einer Alkoxysilylgruppen-haltigen Carbasilatranverbindung, einer Alkoxysilylgruppen-haltigen Fumarsäureesterverbindung und einer Alkoxysilylgruppen-haltigen Aminverbindung.

11. Härtbare Zusammensetzung nach einem der Ansprüche 1 bis 10 , wobei der Fließfähigkeitswert, gemessen mit dem folgenden Fließfähigkeitstest, 15 mm oder weniger beträgt:
Fließfähigkeitsprüfung: 0,1 g der härtbaren Zusammensetzung werden auf eine um 45° geneigte Aluminiumplatte aufgetragen. Die nach 10 Sekunden zurückgelegte Strecke (in mm) wird gemessen und als Fließfähigkeitswert festgelegt.

## Revendications

1. Composition durcissable comprenant :
(A) un composé de silane contenant un groupe perfluoro(poly)éther ayant deux atomes de Si ou plus liés à au moins un groupe sélectionné parmi le groupe constitué d'un groupe hydroxyle et d'un groupe hydrolysable,
(B) un composé ayant au moins deux groupes OR² liés à un atome de Si, dans laquelle les R² sont chacun indépendamment un atome d'hydrogène ou un groupe organique monovalent à chaque apparition, à condition que (A) soit exclu, ou un condensat partiellement hydrolysé de celui-ci,
(C) un catalyseur de condensation, et
(D) une charge inorganique ayant un diamètre de particule primaire de 0,01 à 0,1 µm,
dans laquelle le Composant (D) est du noir de carbone ou du carbonate de calcium,
dans laquelle le diamètre de particule primaire est une valeur mesurée par le procédé au microscope électronique.

2. Composition durcissable selon la revendication 1, dans laquelle
le Composant (A) est un composé représenté par la formule (1) 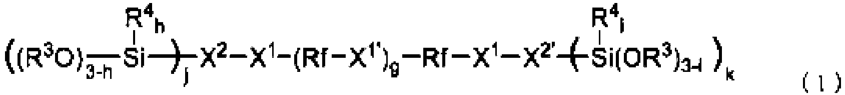 dans laquelle
les Rf sont à chaque apparition chacun indépendamment un groupe perfluoro(poly)éther représenté par la formule :
-(C_{f}F_{2f})-(OCF₂)ₐ₁-(OC₂F₄)ₐ₂-(OC₃X¹⁰₆)ₐ₃-(OC₄F₈)ₐ₄-(OC₅F₁₀)ₐ₅-(OC₆F₁₂)ₐ₆- (OC₇F₁₄)ₐ₇-(OC₈F₁₆)ₐ₈-
dans laquelle f est un entier de 1 à 10, a1, a2, a3, a4, a5, a6, a7 et a8 sont chacun indépendamment un entier de 0 ou plus et 200 ou moins, une somme de a1, a2, a3, a4, a5, a6, a7 et a8 est un entier de 5 ou plus et 200 ou moins, l'unité représentée par (C_{f}F_{2f}) est située à l'extrémité gauche du groupe, l'ordre d'existence de chaque unité de répétition entre parenthèses avec l'indice a1, a2, a3, a4, a5, a6, a7 ou a8 est arbitraire dans la formule, et les X¹⁰ sont chacun indépendamment un atome d'hydrogène, un atome de fluor ou un atome de chlore à chaque apparition, à condition que lorsque tous les X¹⁰ sont des atomes d'hydrogène ou des atomes de chlore, au moins un de a1, a2, a3, a4, a5, a6, a7 et a8 soit un entier de 1 ou plus,
g est un entier de 0 ou plus,
j et k sont chacun un entier de 1 à 9,
h et i sont chacun indépendamment un entier de 0 à 3 à chaque apparition, à condition qu'au moins deux parmi h et i existants avec un nombre de j+k soient conçus pour être 0 ou 1,
les X¹ représentent chacun indépendamment une liaison simple ou un groupe organique divalent à chaque apparition,
les X^{1'} représentent chacun indépendamment un groupe organique divalent à chaque apparition,
X² représente un groupe organique j+1 valent,
X^{2'} représente un groupe organique k+1 valent,
les R³ représentent chacun indépendamment un atome d'hydrogène ou un groupe organique monovalent à chaque apparition, et
les R⁴ représentent chacun indépendamment un atome d'hydrogène ou un groupe organique monovalent à chaque apparition, à condition que R⁴ ne soit pas OR³.

3. Composition durcissable selon la revendication 2, dans laquelle
dans la formule (1), les Rf sont à chaque apparition chacun indépendamment un groupe perfluoro(poly)éther représenté par la formule :
-(C_{f}F_{2f})-(OCF₂)ₐ₁-(OCF₂CF₂)ₐ₂₁-(OCF(CF₃))_{a2'}-(OCF₂CF₂CF₂)ₐ₃₁ (OCF₂CF(CF₃))_{a3'}-(OCF(CF₃)CF₂)_{a3''}-(OCF₂CF₂CF₂CF₂)ₐ₄-
dans laquelle f est un entier de 1 ou plus et 4 ou moins, une somme de a21 et a2' est égale à a2, une somme de a31, a3' et a3" est égale à a3, a1 est un entier de 0 ou plus et 50 ou moins, a2 est un entier de 0 ou plus et 50 ou moins, a3 est un entier de 0 ou plus et 30 ou moins, a4 est un entier de 0 ou plus et 30 ou moins, une somme de a1, a2, a3 et a4 est de 5 ou plus et 200 ou moins, et l'ordre d'existence de chaque unité de répétition est arbitraire dans la formule,
g est un entier de 0 ou plus et 5 ou moins,
j et k sont chacun 1,
h et i sont chacun indépendamment 0 ou 1 à chaque apparition,
les X¹ sont chacun indépendamment une liaison uréthane ou une liaison amide à chaque apparition,
les X^{1'} sont chacun indépendamment un groupe alkylène divalent ayant des liaisons amide aux deux extrémités à chaque apparition,
les X² et X^{2'} sont chacun indépendamment un groupe alkylène divalent à chaque apparition,
les R³ sont chacun indépendamment un groupe alkyle ayant 1 à 4 atomes de carbone ou un groupe alcoxyalkyle à chaque apparition, et
les R⁴ sont chacun indépendamment un atome d'hydrogène ou un groupe alkyle ayant 1 à 22 atomes de carbone à chaque apparition.

4. Composition durcissable selon la revendication 1 ou 2, dans laquelle
le Composant (A) est un composé représenté par l'une quelconque des formules suivantes : 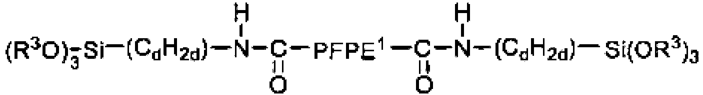 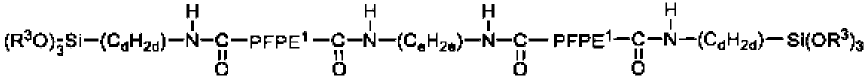 dans lesquelles :
les PFPE sont à chaque apparition chacun indépendamment un groupe représenté par la formule :
-(C_{f}F_{2f})-(OCF₂)ₐ₁-(OC₂F₄)ₐ₂-(OC₃F₆)ₐ₃-(OC₄F₈)ₐ₄-(OC₅F₁₀)ₐ₅-(OC₆F₁₂)ₐ₆- (OC₇F₁₄)ₐ₇-(OC₈F₁₆)ₐ₈-
dans laquelle f est un entier de 1 à 10, a1 et a2 sont chacun indépendamment un entier de 1 ou plus et 200 ou moins, a3, a4, a5, a6, a7 et a8 sont chacun indépendamment un entier de 0 ou plus et 30 ou moins, une somme de a1, a2, a3, a4, a5, a6, a7 et a8 est un entier de 5 ou plus et 200 ou moins, l'unité représentée par (C_{f}F_{2f}) est située à l'extrémité gauche du groupe, et l'ordre d'existence de chaque unité de répétition entre parenthèses avec l'indice a1, a2, a3, a4, a5, a6, a7 ou a8 est arbitraire dans la formule,
les R³ sont chacun indépendamment un groupe alkyle ayant 1 à 4 atomes de carbone à chaque apparition,
les d sont chacun indépendamment un entier de 1 à 4 à chaque apparition, et
e est un entier de 1 à 4.

5. Composition durcissable selon l'une quelconque des revendications 1 à 4, dans laquelle
le Composant (B) contient un composé représenté par la formule suivante :
R¹ₙSi(OR²)₄₋ₙ
dans laquelle
les R¹ sont chacun indépendamment un groupe hydrocarbure monovalent substitué ou non substitué à chaque apparition,
les R² sont chacun indépendamment un atome d'hydrogène ou un groupe organique monovalent à chaque apparition, et
n est 0, 1 ou 2,
ou un condensat partiellement hydrolysé de celui-ci.

6. Composition durcissable selon la revendication 5, dans laquelle
le Composant (B) contient en outre un composé représenté par la formule suivante (B2) : 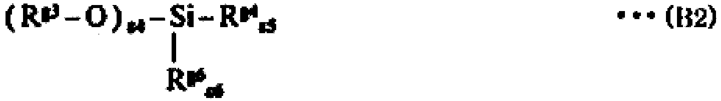 dans laquelle
les R^{g3} sont chacun indépendamment un atome d'hydrogène ou un groupe organique monovalent à chaque apparition,
R^{g4} est un groupe hydrocarbure monovalent substitué ou non substitué,
les R^{g6} sont chacun indépendamment R^{g8}-R^{g7}- à chaque apparition,
les R^{g7} sont chacun indépendamment un groupe alkylène ayant 1 à 10 atomes de carbone ou un groupe ayant 1 à 10 atomes de carbone et contenant un atome d'azote ou un atome d'oxygène dans une chaîne principale à chaque apparition, les R^{g8} sont chacun indépendamment un groupe amino primaire, un groupe époxy, un groupe (méth)acryloyle, un groupe (méth)acryloxy, un groupe mercapto ou un groupe isocyanato à chaque apparition,
ε4 est 2 ou 3,
ε5 est 0 ou 1, et
ε6 est 1 ou 2, à condition qu'une somme de ε4, ε5 et ε6 soit de 4,
ou un condensat partiellement hydrolysé de celui-ci.

7. Composition durcissable selon l'une quelconque des revendications 1 à 6, dans laquelle
le Composant (B) contient (B3) un composé contenant deux groupes alcoxysilyle ou plus dans une molécule, avec le groupe de liaison entre les groupes alcoxysilyle qui est un groupe autre que celui sélectionné parmi le groupe constitué d'un groupe -O- et d'un groupe ayant une liaison siloxane, ou un condensat partiellement hydrolysé de celui-ci, et une teneur en le Composant (B3) basée sur celle du Composant (A) est de 0,01 à 30 % en masse.

8. Composition durcissable selon la revendication 7, dans laquelle le groupe de liaison entre les groupes alcoxysilyle du Composant (B3) est un groupe contenant un atome d'azote et/ou un groupe carbonyle.

9. Composition durcissable selon la revendication 8, dans laquelle le groupe de liaison entre les groupes alcoxysilyle du Composant (B3) est un groupe contenant en outre un groupe -O-, un groupe alkénylène et/ou un groupe alkylène.

10. Composition durcissable selon l'une quelconque des revendications 7 à 9, dans laquelle le Composant (B3) est sélectionné parmi le groupe constitué d'un composé d'isocyanurate contenant un groupe alcoxysilyle, d'un composé de carbasilatrane contenant un groupe alcoxysilyle, d'un composé d'ester d'acide fumarique contenant un groupe alcoxysilyle et d'un composé d'amine contenant un groupe alcoxysilyle.

11. Composition durcissable selon l'une quelconque des revendications 1 à 10, dans laquelle une valeur de fluidité mesurée par le test de fluidité suivant est de 15 mm ou moins :
Test de fluidité : 0,1 g de la composition durcissable est enduit sur une plaque d'aluminium inclinée à 45°, et une distance (mm) subissant un écoulement après 10 secondes est mesurée et la valeur est définie comme étant la valeur de fluidité.
